# EUROPÄISCHE PATENTSCHRIFT

(11) **EP 3 759 803 B1**
(45) Veröffentlichungstag und Bekanntmachung des Hinweises auf die Patenterteilung: **02.08.2023**
(21) Anmeldenummer: 19716766.1
(22) Anmeldetag: 27.02.2019
(51) Int. Cl.: H02K 15/04, H02K 3/12, H02K 3/28

(54) **VERFAHREN UND VORRICHTUNG ZUM HERSTELLEN EINER WICKELMATTE UND EINER SPULENMATTE AUS WELLENWICKLUNGSDRÄHTEN DURCH STECKEN**
METHOD AND DEVICE FOR PRODUCING A WINDING MAT AND A COIL MAT FROM WAVE WINDING WIRES BY INSERTION
PROCÉDÉ ET DISPOSITIF POUR LA FABRICATION D'UNE NATTE D'ENROULEMENT ET D'UNE NATTE DE BOBINE EN FILS D'ENROULEMENT ONDULÉ PAR ENFICHAGE

(30) Priorität: 28.02.2018 DE 102018001553; 05.12.2018 DE 102018009460
(43) Veröffentlichungstag der Anmeldung: 06.01.2021
(73) Patentinhaber: Grob-Werke GmbH & Co. KG, 87719 Mindelheim (DE)
(72) Erfinder: SCHMID, Frederik, 89281 Altenstadt (DE); RAUSCHER, Ralf, 87748 Fellheim (DE)
(74) Vertreter: KASTEL Patentanwälte PartG mbB
(86) Internationale Anmeldenummer: PCT/DE2019/100179
(87) Internationale Veröffentlichungsnummer: WO 2019/166061

(56) Entgegenhaltungen:
- US-A1- 2009 322 178
- US-A1- 2011 095 639
- US-A1- 2011 173 800
- US-A1- 2012 112 595
- US-A1- 2017 324 294

## Beschreibung

### Technisches Gebiet:

Die Erfindung betrifft ein Verfahren und eine Vorrichtung zum Herstellen einer aus Wellenwicklungsdrähten zusammengefügten Wellenwickelmatte. Eine solche Wellenwickelmatte wird im Folgenden einfach als Wickelmatte bezeichnet. Weiter betrifft die Erfindung ein Verfahren und eine Vorrichtung zum Herstellen einer aus einer ersten als Wickelmatte ausgebildeten Einzelmatte und einer zweiten als Wickelmatte ausgebildeten Einzelmatte zusammengefügte Spulenmatte.

### Technologischer Hintergrund:

Die Erfindung betrifft Verfahren und Vorrichtungen zum Herstellen von aus Wellenwicklungsdrähten zusammengefügte Wickelmatten zum Herstellen einer Spulenwicklung einer elektrischen Maschine. Unter einer Wickelmatte wird ein aus mehreren Wellenwicklungsdrähten (Leitern) gebildetes mattenförmiges Leiterbündel verstanden. Wellenwicklungsdrähte sind wellenartig gebogene Drähte, wobei die Herstellung der Biegung in einer Ebene, durch Umbiegung aufeinanderfolgender Drahtabschnitte in entgegengesetzte Biegungsrichtungen erfolgen kann. Eine derartige Herstellart ist insbesondere bei Profildrähten, die eine von einer runden Form abweichende Querschnittsprofilform, beispielsweise Rechteckprofil aufweisen, vorteilhaft. Die Wicklungen aus Wellenwicklungsdrähten und Wickelmatten unterscheiden sich von sogenannten Schwertwicklungen, bei denen eine Spulenwicklung durch Aufwickeln auf eine längliche Rechteckform (Schwert) erfolgt, und den daraus gebildeten (Schwert-)Wicklungsmatten dadurch, dass die Drähte nicht spiralartig bzw. wendelförmig gebogen werden, sondern flach gebogen werden. Eine Wickelmatte umfasst insbesondere mehrere sich in einer Längsrichtung erstreckende wellenförmig gebogene Wellenwicklungsdrähte, die in Längsrichtung beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind.

Die geradlinigen Drahtabschnitte der Wickelmatte dienen insbesondere dazu, in Nuten eines Gehäuses eines Bauteils einer elektrischen Maschine, wie insbesondere einem Stator eines Elektromotors, eingefügt zu werden. Die Wicklungsköpfe bilden jeweils einen Umschlag und stehen außen an den axial gerichteten Gehäuseenden vor und verbinden den Drahtabschnitt einer Nut mit einem Drahtabschnitt in einer anderen Nut. Insgesamt lässt sich so durch eine oder vorzugsweise mehrere Wickelmatten die Spulenwicklung des Bauteils der elektrischen Maschine bilden. Beispielsweise soll eine dreiphasige Spulenwicklung hergestellt werden.

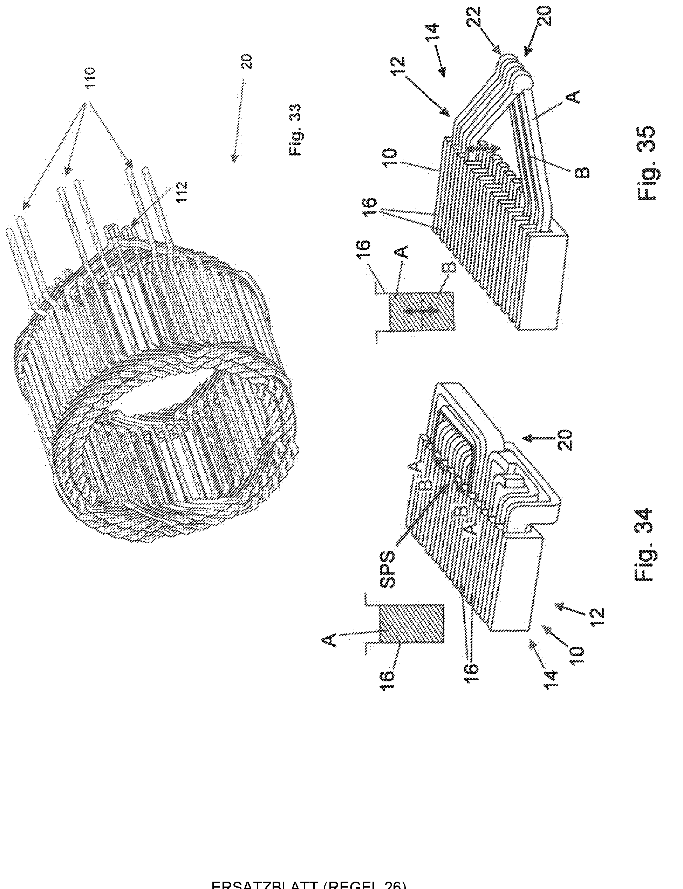

Im Folgenden werden zunächst einige Begriffe, die bei der Beschreibung der Erfindung und deren vorteilhaften Ausgestaltungen aber auch bei der Erläuterung des technologischen Hintergrunds verwendet werden, anhand der Darstellungen in Fig. 34 und 35 näher erläutert. Die Fig. 34 und 35 zeigen eine vereinfachte Darstellung eines Teilsegments eines Gehäuses 10 eines als Beispiel für ein Bauteil 12 dienenden Stators 14 mit Nuten 16 und einer aus Leitern A, B gebildeten Spulenwicklung 20, wobei in Fig. 34 eine Einschichtwicklung dargestellt ist, bei der die Leiter A und B in einer Ebene bleiben und in Fig. 35 eine Zweischichtwicklung gezeigt ist, bei der die Leiter A und B die Ebene wechseln.

Spulenschritt/Spulenweite: Der "Spulenschritt" SPS gibt an, um wie viel Nuten 16 ein einzelner Leiter A, B pro Umschlag weiterspringt. Den durchschnittlichen Spulenschritt SPS der Spulenwicklung 20 nennt man "Spulenweite". Der Spulenschritt und die Spulenweite können sich unterscheiden, beispielsweise wenn zwei Einzelleiter der gleichen Phase parallel laufen. In Fig. 34 erkennt man, dass der Leiter B einen Spulenschritt SPS von fünf hat. Der äußere Leiter A springt um sieben Nuten weiter. Dadurch erhält man eine Spulenweite von sechs.

Shiftmaß: Das "Shiftmaß" ist die Maßangabe der Spulenweite. Dieses ist durchmesserabhängig, da sich der Umfangsabstand zwischen den Nuten 16 des Stators 14 vergrößert, wenn der Durchmesser größer wird. Hat eine Wickelmatte mehrere Umläufe im Stator 14, so hat sie mehrere Shiftmaße aber eine konstante Spulenweite.

Zonenbreite: Die "Zonenbreite" gibt an, ab welcher Nutenzahl sich ein Wickelschema wiederholt. Ist der Spulenschritt konstant, dann entspricht die "Zonenbreite" der Spulenweite. Wechselt der Spulenschritt SPS bei einer Spulenweite von sechs jedes Mal, wiederholt sich das Schema nach dem zweiten Umschlag, damit erhält man eine Zonenbreite von zwölf.

Leitertausch: Hat ein Wickelschema diese Unterschiede im Spulenschritt, spricht man von einer Wicklung mit "Leitertausch". Betrachtet man die Reihenfolge der Leiter A, B in Fig. 34 in Umfangsrichtung, dann erkennt man, dass immer zwei Leiter vertauscht werden (AB-7BA).

Lagentausch: Wechseln, wie in Fig. 35, zwei Leiter A, B die Ebenen in der Nut 16 oder in einer Wickelmatte, dann spricht man von einem "Lagentausch". An der Stelle, an der die Leiter A, B die Ebene wechseln, haben diese einen Sprung 22. Eine Wickelmatte ohne Lagentausch wird auch als "einschichtige Wickelmatte" bezeichnet, eine Wickelmatte mit Lagentausch als "zweischichtige Wickelmatte". Durch den Lagentausch erreicht man zudem einen Ausgleich der Potentialunterschiede in den Leitern, der durch einen unterschiedlichen Abstand der beiden Lagen zu einem anderen Bauteil der elektrischen Maschine, wie z.B. dem Rotor, entstehen würde.

Die WO2016/072480 A1 und die dieser entsprechende DE 11 2015 005047 A1 beschreiben eine flachgewickelte verflochtene Wickelmatte mit Lagentausch an mehreren Stellen, hergestellt durch Verweben / ineinander Drehen, wobei nie nach sechs Nuten direkt ein Lagentausch kommen kann, aber nach zwölf, achtzehn, vierundzwanzig, usw. Ein Lagentausch ist auf beiden Seiten des Blechpakets - Gehäuse des Stators - möglich. Es gibt zwei Wicklungskopfformen der Wicklungsköpfe mit gespiegelten Höhenversätzen und mit Abschnitten im Wicklungskopf nach oben und unten versetzt. Dadurch passen die Wicklungsköpfe beim Aufrollen ineinander.

Aus der JP 2002 176 752 A und der dieser entsprechenden DE 601 25 436 A1 ist eine als Schwertwicklungsmatte durch Schwertwicklung von Einzeldrähten ausgebildete Wicklungsmatte zum Bilden einer Spulenwicklung eines Stators eines Elektromotors bekannt, die durch Schwertwicklung hergestellt ist und somit keine Wellenwicklungsdrähte aufweist. Es wird eine Wicklungskopfform der Wicklungsköpfe mit zwei ebenen Wicklungskopfabschnitten und einem Sprung beschrieben.

Die DE 10 2004 056 811 A1 beschreibt eine parallel verschaltete Wickelmatte mit kontinuierlichem Lagentausch.

Die DE 10 2014 111 803 A1 beschreibt eine gestufte Wickelmatte mit einem Leitertausch an der Treppenstufe.

Die WO 2016/139 430 A1 beschreibt eine Nutbelegung für eine Wickelmatte. Die Wickelmatte wird in mehreren Schritten eingebracht.

Die US 6 882 077 A beschreibt eine allgemeine Wicklungsmatte, die jeweils Wicklungsköpfe mit zwei geneigten Elementen und einem Sprung aufweist.

Die WO 2006/107 993 A1 und die dieser entsprechende DE 11 2006 000 742 A1 beschreibt eine Wickelmatte mit einem 5-7ner Spulenschritt in einer Ebene und einer Wicklung mit sechs Leitern. Mindestens 50 % der 5-7ner Sprünge der Spulenschritte befinden sich in einer Lage und zwei Leiter sind parallel.

Die WO 2007/080353 A1 (entspricht der US 8 393 072 A und der EP 1 974 443 A1) offenbart eine Wickelmatte mit Lagentausch aber ohne Leitertausch, also ohne 5-7ner Spulenschritt. Zum Herstellen der Wickelmatte müssen Einzeldrähte oder Einzelwickelmatten verwebt werden. Auch die US 2009/0322178 A1 beschreibt die Herstellung einer Spulenwicklung aus miteinander verflochtenen sechs Einzeldrähten. Auch die US 2017/0324294 A1 beschreibt eine durch Schwertwickeln erhältliche verflochtene Mattenwicklung.

Die WO 2006/067298 A1 beschreibt verschiedene Wickelschemata flachgewickelter Matten mit 6-er Spulenweite.

Die DE1 03 59 863 A1 beschreibt die Variierung einer Wicklungskopfhöhe mit Sprüngen im Wicklungskopf.

Die WO2016/072480 A1 und die dieser entsprechende DE 11 2015 005 047 A1 beschreibt eine Wicklungskopfform auch mit drei Biegestellen und unterschiedlichen Sprunghöhen.

Die DE 11 2006 000 742 A1 beschreibt eine Wicklungskopfform mit zwei Biegestellen und gleichen Sprunghöhen.

Die US 2011/0095639 A1 und US 2011/0173800 A1 betreffen Verfahren und Vorrichtungen zum Herstellen einer Spulenwicklung eines Bauteils einer elektrischen Maschine, umfassend: Bereitstellen mehrerer sich in einer Längsrichtung erstreckender wellenförmig gebogener Wellenwicklungsdrähte, die in Längsrichtung beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind, um einen Halbwellenabschnitt zu bilden, so dass erste Halbwellenabschnitte mit in einer ersten Richtung gebogenen ersten Wicklungsköpfen und zweite Halbwellenabschnitte mit in einer entgegengesetzten zweiten Richtung gebogenen zweiten Wicklungsköpfen alternierend vorgesehen sind und jeweils ein erster Halbwellenabschnitt und ein benachbarter zweiter Halbwellenabschnitt einen Wellenabschnitt bilden, Aufwickeln der Wicklungsdrähte in eine Spiralform,
Anordnen der aufgewickelten Wicklungsdrähte in axialer Richtung und axiales Zusammenfügen, wobei alle Teilabschnitte der zu einer Spiralform aufgewickelten Wicklungsdrähte ihre Radialposition beibehalten und aufeinander gestapelt werden.

### Darstellung der Erfindung:

Die Erfindung hat sich zur Aufgabe gestellt, Verfahren und Vorrichtungen zum Herstellen einer Wickelmatte und einer daraus gebildete Spulenmatte zur Verfügung zu stellen, die einfacher als bisher zur Herstellung in Großserie automatisierbar sind und mit denen sich eine Spulenwicklung einer elektrischen Maschine einfacher und mit erhöhter Zuverlässigkeit herstellen lässt.

Zum Lösen dieser Aufgabe schafft die Erfindung ein Wickelmattenherstellverfahren nach Anspruch 1 und ein Spulenmattenherstellverfahren nach dem Nebenanspruch. Eine Vorrichtung zum Durchführen eines solchen Wickelmattenherstellverfahrens sowie eines solchen Spulenmattenherstellverfahrens sowie ein Computerprogrammprodukt mit Steueranweisungen zum Durchführen der Verfahren sind Gegenstand der weiteren Nebenansprüche.

Vorteilhafte Ausgestaltungen sind Gegenstand der Unteransprüche.

Mit bevorzugten Ausführungsformen des Wickelmattenherstellverfahren lässt sich eine Wickelmatte zum Bilden einer Spulenwicklung eines Bauteils einer elektrischen Maschine herstellen, umfassend mehrere sich in einer Längsrichtung (länglich) erstreckende wellenförmig gebogene Wellenwicklungsdrähte, die in Längsrichtung beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind, um einen Halbwellenabschnitt zu bilden, so dass erste Halbwellenabschnitte mit in einer ersten Richtung gebogenen ersten Wicklungsköpfen und zweite Halbwellenabschnitte mit in einer entgegengesetzten zweiten Richtung gebogenen zweiten Wicklungsköpfen alternierend vorgesehen sind und jeweils ein erster Halbwellenabschnitt und ein benachbarter zweiter Halbwellenabschnitt einen Wellenabschnitt bilden,
wobei die Wellenwicklungsdrähte nicht miteinander verflochten oder umeinander geschlungen sind, sondern durch Zusammenstecken der Wellenwicklungsdrähte in Querrichtung zueinander derart zusammengefügt sind, dass an zumindest einem Steckbereich der Wickelmatte ein erster und ein benachbarter zweiter Teilabschnitt des einen Wellenwicklungsdrahts und ein erster und ein benachbarter zweiter Teilabschnitt des anderen Wellenwicklungsdrahts so ineinander gesteckt sind, dass der erste Teilabschnitt des einen Wellenwicklungsdrahts unter den ersten Teilabschnitt des anderen Wellenwicklungsdrahts eingesteckt ist und der zweite Teilabschnitt des einen Wellenwicklungsdrahts über den zweiten Teilabschnitt des anderen Wellenwicklungsdrahts eingesteckt ist.
Es ist bevorzugt, dass die Wicklungsköpfe jeweils eine mittlere Dachbiegung und je eine Übergangsbiegung im Übergangsbereich zu den zugeordneten geradlinigen Drahtabschnitten und jeweils eine Gegenbiegung zwischen den Übergangsbiegungen und der Dachbiegung aufweisen.

Es ist gemäß einer ersten Variante bevorzugt, dass die Wickelmatte eben mit einer über die gesamte Länge einheitlichen Erstreckung in Höhenrichtung ausgebildet ist.

Es ist gemäß einer zweiten Variante bevorzugt, dass die Wickelmatte treppenartig gestuft mit wenigstens einem eine Stufe in Höhenrichtung bildenden Übergangsbereich ausgebildet ist, wobei vorzugsweise der Übergangsbereich einen Steckbereich bildet.

Es ist bevorzugt, dass ein Anfangsbereich und/oder ein Endbereich der Wickelmatte den wenigstens einen Steckbereich bilden, in dem die oder wenigstens zwei der Wellenwicklungsdrähte ineinander gesteckt sind.

Es ist bevorzugt, dass die oder wenigstens zwei der Wellenwicklungsdrähte an einem Anfangsbereich der Wickelmatte und/oder an einem Endbereich der Wickelmatte ineinander gesteckt sind und in wenigstens einem dazwischen befindlichen Bereich gestapelt sind.

Es ist bevorzugt, dass jeweils ein Paar oder eine Gruppe von Wellenwicklungsdrähten in ein weiteres Paar oder eine weitere Gruppe von Wellenwicklungsdrähten gesteckt sind.

Es ist bevorzugt, dass nur eine Untergruppe von Wellenwicklungsdrähten in der Wickelmatte ineinander gesteckt sind und verbleibende Wellenwicklungsdrähte gestapelt sind.

Es ist bevorzugt, dass jeder Wellenwicklungsdraht in den geradlinigen Drahtabschnitten eine Drahtdicke aufweist, die sich in einer quer zur Längsrichtung und quer zur Querrichtung verlaufenden Höhenrichtung gemessen über ein Drahtdickenmaß erstreckt.

Es ist bevorzugt, dass jeder Wicklungskopf einen ersten Höhenversatz um ein halbes Höhenerstreckungsmaß an einem ersten Wicklungskopfabschnitt, der sich an einen ersten geradlinigen Drahtabschnitt anschließt, einen zweiten Höhenversatz um ein ganzes Höhenerstreckungsmaß an einem zweiten Wicklungskopfabschnitt, der sich an den ersten Wicklungskopfabschnitt anschließt, und einen dritten Höhenversatz um ein halbes Höhenerstreckungsmaß an einem dritten Wicklungskopfabschnitt hat, der sich zwischen dem zweiten Wicklungskopfbereich und einem zweiten geradlinigen Drahtabschnitt erstreckt.

Es ist bevorzugt, dass das Höhenerstreckungsmaß gleich dem Drahtdickenmaß oder gleich dem Drahtdickenmaß zuzüglich einem vorbestimmten Toleranzmaß entspricht.

Vorzugsweise ist das Höhenerstreckungsmaß abhängig von der Drahtdicke. Insbesondere ist das Höhenerstreckungsmaß abhängig von dem Drahtdickenmaß. Vorzugsweise ergibt sich das Höhenerstreckungsmaß aus der Drahtdicke sowie einem Toleranzmaß, das Luft/Spiel zum darunterliegenden/benachbarten Draht sowie sonstige aus konstruktiven Gründen gewählte Abstände berücksichtigt. Das Höhenerstreckungsmaß gibt an, wie hoch der Sprung in den Wicklungsköpfen ist. Das Toleranzmaß, um den das Höhenerstreckungsmaß größer als das Drahtdickenmaß ist, ist vorzugsweise wesentlich kleiner als das Drahtdickenmaß und liegt beispielsweise in einem Bereich von 0,001 % bis 5% der Drahtdicke. Vorzugsweise werden in dem Toleranzmaß übliche Toleranzwerte derart berücksichtigt, dass benachbarte Drähte ohne Spannung aufeinander aufliegen und vorzugsweise ein geringes Spiel zwischen aufeinanderliegenden benachbarten Drähten besteht.

Es ist weiter bevorzugt, dass wenigstens ein Standardbereich vorgesehen ist, in dem an jedem Wicklungskopf der erste Höhenversatz in eine erste Höhenrichtung gerichtet ist, der zweite Höhenversatz in der entgegengesetzten zweiten Höhenrichtung gerichtet ist und der dritte Höhenversatz in der ersten Höhenrichtung gerichtet ist.

Es ist weiter bevorzugt, dass in einem Übergangsbereich einer Wickelmatte gemäß der zweiten Variante an den Wellenwicklungsdrähten jeweils wenigstens ein Wicklungskopf, bei dem der erste Höhenversatz in die erste Höhenrichtung gerichtet ist, der zweite Höhenversatz in die erste Richtung gerichtet ist und der dritte Höhenversatz in die zweite Richtung gerichtet ist, und wenigstens ein Wicklungskopf, bei dem der erste Höhenversatz in die zweite Höhenrichtung gerichtet ist, der zweite Höhenversatz in die zweite Höhenrichtung gerichtet ist und der dritte Höhenversatz in die erste Höhenrichtung gerichtet ist, vorgesehen sind.

Es ist bevorzugt, dass in einem Anfangsbereich und/oder einem Endbereich der Wickelmatte an den Wellenwicklungsdrähten jeweils wenigstens ein Wicklungskopf vorgesehen ist, bei dem
- der erste Höhenversatz in die erste Höhenrichtung gerichtet ist, der zweite Höhenversatz in die zweite Höhenrichtung gerichtet ist und der dritte Höhenversatz in die erste Höhenrichtung gerichtet ist oder
- der erste Höhenversatz in die zweite Höhenrichtung gerichtet ist, der zweite Höhenversatz in die erste Höhenrichtung gerichtet ist und der dritte Höhenversatz in die erste Höhenrichtung gerichtet ist.

Mit bevorzugten Ausgestaltungen des Spulenmattenherstellverfahrens lässt sich eine Spulenmatte zum Bilden einer Spulenwicklung eines Bauteils einer elektrischen Maschine herstellen, umfassend eine erste Einzelmatte, die 3n₁ einzelne Wellenwicklungsdrähte aufweist, wobei n₁ eine natürliche Zahl größer 0 ist, und eine zweite Einzelmatte, die 3n₂ einzelne Wellenwicklungsdrähte aufweist, wobei nz eine natürliche Zahl größer 0 ist, wobei die Wellenwicklungsdrähte in Längsrichtung der Spulenmatte beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind und so Halbwellenabschnitte bilden, so dass erste Halbwellenabschnitte mit in einer ersten Richtung gebogenen ersten Wicklungsköpfen und zweite Halbwellenabschnitte mit in einer entgegengesetzten Richtung gebogenen zweiten Wicklungsköpfen alternierend vorgesehen sind und jeweils ein erster Halbwellenabschnitt und ein benachbarter zweiter Halbwellenabschnitt einen Wellenabschnitt bilden,
wobei
a) wenigstens eine der Einzelmatten eine Wickelmatte nach einer der voranstehenden Ausgestaltungen ist und/oder
b) wobei die Einzelmatten nicht miteinander verflochten oder umeinander geschlungen sind, sondern durch Zusammenstecken der Einzelmatten in Querrichtung zueinander derart zusammengefügt sind, dass an zumindest einem Steckbereich der Spulenmatte ein erster und ein benachbarter zweiter Teilabschnitt der einen Einzelmatte und ein erster und ein benachbarter zweiter Teilabschnitt der anderen Einzelmatte so ineinander gesteckt sind, dass der erste Teilabschnitt der einen Einzelmatte unter den ersten Teilabschnitt der anderen Einzelmatte eingesteckt ist und der zweite Teilabschnitt der einen Einzelmatte über den zweiten Teilabschnitt der anderen Einzelmatte eingesteckt ist.

Es ist bevorzugt, dass jeder Wellenwicklungsdraht in den geradlinigen Abschnitten eine Drahtdicke aufweist, die sich in einer quer zur Längsrichtung und quer zur Querrichtung verlaufenden Höhenrichtung gemessen über ein Drahtdickenmaß erstreckt, und
dass jeder Wicklungskopf einen ersten Höhenversatz um ein halbes Höhenerstreckungsmaß an einem ersten Wicklungskopfabschnitt, der sich an einen ersten geradlinigen Drahtabschnitt anschließt, einen zweiten Höhenversatz um ein ganzes Höhenerstreckungsmaß an einem zweiten Wicklungskopfabschnitt, der sich an den ersten Wicklungskopfabschnitt anschließt, und einen dritten Höhenversatz um ein halbes Höhenerstreckungsmaß an einem dritten Wicklungskopfabschnitt hat, der sich zwischen dem zweiten Wicklungskopfbereich und dem zweiten geradlinigen Drahtabschnitt erstreckt, wobei das Höhenerstreckungsmaß gleich dem Drahtdickenmaß oder gleich dem Drahtdickenmaß zuzüglich einem vorbestimmten Toleranzmaß ist.

Es ist bevorzugt, dass die Einzelmatten treppenartig gestuft mit wenigstens einem eine Stufe in Höhenrichtung bildenden Übergangsbereich ausgebildet sind,
dass die Spulenmatte einen Anfangsbereich, mehrere Standardbereiche mit jeweils einem Übergangsbereich dazwischen und einen Endbereich aufweist,
dass im bestimmungsgemäßen Gebrauch der Spulenmatte die erste Höhenrichtung in den Höhenversätzen der Wicklungsköpfe einer Richtung radial nach außen und die zweite Höhenrichtung einer Richtung radial nach innen entspricht,
dass die Wicklungsköpfe eine Wicklungskopfform haben, die ausgewählt ist aus einer Gruppe von Wicklungskopfformen, die
   - eine erste Wicklungskopfform, bei der der erste Höhenversatz in die zweite Höhenrichtung gerichtet ist, der zweite Höhenversatz in die erste Höhenrichtung gerichtet ist und der dritte Höhenversatz in die zweite Höhenrichtung gerichtet ist,
   - eine zweite Wicklungskopfform, bei der der erste Höhenversatz in die erste Höhenrichtung gerichtet ist, der zweite Höhenversatz in die zweite Höhenrichtung gerichtet ist und der dritte Höhenversatz in die erste Höhenrichtung gerichtet ist,
   - eine dritte Wicklungskopfform, bei der der erste Höhenversatz in die erste Höhenrichtung gerichtet ist, der zweite Höhenversatz in die erste Höhenrichtung gerichtet ist und der dritte Höhenversatz in die zweite Höhenrichtung gerichtet ist,
   - eine vierte Wicklungskopfform, bei der der erste Höhenversatz in die erste Höhenrichtung gerichtet ist, der zweite Höhenversatz in die zweite Höhenrichtung gerichtet ist und der dritte Höhenversatz in die zweite Höhenrichtung gerichtet ist,
   - eine fünfte Wicklungskopfform, bei der der erste Höhenversatz in die zweite Höhenrichtung gerichtet ist, der zweite Höhenversatz in die erste Höhenrichtung gerichtet ist und der dritte Höhenversatz in die erste Höhenrichtung gerichtet ist, und
   - eine sechste Wicklungskopfform, bei der der erste Höhenversatz in die zweite Höhenrichtung gerichtet ist, der zweite Höhenversatz in die zweite Höhenrichtung gerichtet ist und der dritte Höhenversatz in die erste Höhenrichtung gerichtet ist,
   umfasst,
und dass in den Standardbereichen Wicklungsköpfe mit der ersten oder der zweiten
Wicklungskopfform vorgesehen sind und dass wenigstens einige der Wellenwicklungsdrähte in dem Übergangsbereich Wicklungsköpfe mit der dritten und/oder der vierten und/oder der fünften und/oder der sechsten Wicklungskopfform aufweisen.

Es ist bevorzugt, dass die erste und die zweite Einzelmatte aufeinander gestapelt sind und dass
- bei der ersten Einzelmatte
   in dem Anfangsbereich und in den Standardbereichen die Wicklungsköpfe die zweite Wicklungskopfform aufweisen, in dem Übergangsbereich die Wicklungsköpfe wenigstens eines Wellenwicklungsdrahts oder einer Gruppe von Wellenwicklungsdrähten die vierte Wicklungskopfform und die Wicklungsköpfe wenigstens eines anderen Wellenwicklungsdrahtes oder einer anderen Gruppe von Wellenwicklungsdrähten die sechste Wellenwicklungsform aufweisen und an dem Endbereich die Wicklungsköpfe des wenigstens einen oder der wenigstens einen Gruppe von Wellenwicklungsdrähten die vierte Wicklungskopfform aufweisen; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die vierte Wicklungskopfform aufweisen, in den Standardbereichen sowie in dem Endbereich die Wicklungsköpfe die erste Wicklungskopfform aufweisen und in dem Übergangsbereich die Wicklungsköpfe des wenigstens einen Wellenwicklungsdrahts oder der einen Gruppe von Wellenwicklungsdrähten die vierte Wicklungskopfform und die Wicklungsköpfe wenigstens eines anderen Wellenwicklungsdrahtes oder einer anderen Gruppe von Wellenwicklungsdrähten die sechste Wellenwicklungsform aufweisen.

Es ist bevorzugt, dass die erste und die zweite Einzelmatte aufeinander gestapelt sind und dass
- bei der ersten Einzelmatte
   in dem Anfangsbereich und in den Standardbereichen die Wicklungsköpfe die erste Wicklungskopfform aufweisen, in dem Übergangsbereich die Wicklungsköpfe wenigstens eines Wellenwicklungsdrahts oder einer Gruppe von Wellenwicklungsdrähten die fünfte Wicklungskopfform und die Wicklungsköpfe wenigstens eines anderen Wellenwicklungsdrahtes oder einer anderen Gruppe von Wellenwicklungsdrähten die dritte Wellenwicklungsform aufweisen und an dem Endbereich die Wicklungsköpfe des wenigstens einen oder der wenigstens einen Gruppe von Wellenwicklungsdrähten die fünfte Wicklungskopfform aufweisen; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die fünfte Wicklungskopfform aufweisen, in den Standardbereichen sowie in dem Endbereich die Wicklungsköpfe die zweite Wicklungskopfform aufweisen und in dem Übergangsbereich die Wicklungsköpfe des wenigstens einen Wellenwicklungsdrahts oder der einen Gruppe von Wellenwicklungsdrähten die fünfte Wicklungskopfform und die Wicklungsköpfe wenigstens eines anderen Wellenwicklungsdrahtes oder einer anderen Gruppe von Wellenwicklungsdrähten die dritte Wellenwicklungsform aufweisen.

Es ist bevorzugt, dass die erste und die zweite Einzelmatte aufeinander gestapelt sind und dass
- bei der ersten Einzelmatte
   in dem Anfangsbereich und in den Standardbereichen die Wicklungsköpfe die erste Wicklungskopfform aufweisen, in dem Übergangsbereich die Wicklungsköpfe wenigstens eines Wellenwicklungsdrahts oder einer Gruppe von Wellenwicklungsdrähten die sechste Wicklungskopfform und die Wicklungsköpfe wenigstens eines anderen Wellenwicklungsdrahtes oder einer anderen Gruppe von Wellenwicklungsdrähten die vierte Wellenwicklungsform aufweisen und an dem Endbereich die Wicklungsköpfe des wenigstens einen oder der wenigstens einen Gruppe von Wellenwicklungsdrähten die sechste Wicklungskopfform aufweisen; und
- bei der zweiten Einzelmattein dem Anfangsbereich die Wicklungsköpfe wenigstens eines Wellenwicklungsdrahtes oder wenigstens einer Gruppe von Wellenwicklungsdrähten die sechste Wicklungskopfform aufweisen, in den Standardbereichen sowie in dem Endbereich die Wicklungsköpfe die zweite Wicklungskopfform aufweisen und in dem Übergangsbereich die Wicklungsköpfe des wenigstens einen Wellenwicklungsdrahts oder der einen Gruppe von Wellenwicklungsdrähten die sechste Wicklungskopfform und die Wicklungsköpfe wenigstens eines anderen Wellenwicklungsdrahtes oder einer anderen Gruppe von Wellenwicklungsdrähten die vierte Wellenwicklungsform aufweisen.

Es ist bevorzugt, dass die erste und die zweite Einzelmatte aufeinander gestapelt sind und dass
- bei der ersten Einzelmatte in dem Anfangsbereich und in den Standardbereichen die Wicklungsköpfe die zweite Wicklungskopfform aufweisen, in dem Übergangsbereich die Wicklungsköpfe wenigstens eines Wellenwicklungsdrahts oder einer Gruppe von Wellenwicklungsdrähten die dritte Wicklungskopfform und die Wicklungsköpfe wenigstens eines anderen Wellenwicklungsdrahtes oder einer anderen Gruppe von Wellenwicklungsdrähten die fünfte Wellenwicklungsform aufweisen und an dem Endbereich die Wicklungsköpfe des wenigstens einen oder der wenigstens einen Gruppe von Wellenwicklungsdrähten die dritte Wicklungskopfform aufweisen; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die dritte Wicklungskopfform aufweisen, in den zweiten Standardbereichen sowie in dem Endbereich die Wicklungsköpfe die erste Wicklungskopfform aufweisen und in dem Übergangsbereich die Wicklungsköpfe des wenigstens einen Wellenwicklungsdrahts oder der einen Gruppe von Wellenwicklungsdrähten die dritte Wicklungskopfform und die Wicklungsköpfe wenigstens eines anderen Wellenwicklungsdrahtes oder einer anderen Gruppe von Wellenwicklungsdrähten die fünfte Wellenwicklungsform aufweisen.

Es ist bevorzugt, dass sowohl die erste Einzelmatte als auch die zweite Einzelmatte Wickelmatten nach einer der oben beschriebenen Ausgestaltungen für die erfindungsgemäße Wickelmatte sind und dass die erste und die zweite Einzelmatte ineinander gesteckt sind und dass
- bei der ersten Einzelmatte
   in dem Anfangsbereich die Wicklungsköpfe wenigstens eines Wellenwicklungsdrahtes oder jedes Wellenwicklungsdrahts einer Gruppe von Wellenwicklungsdrähten die sechste Wicklungskopfform aufweisen, in den Standardbereichen die Wicklungsköpfe die zweite Wicklungskopfform aufweisen, in dem Übergangsbereich die Wicklungsköpfe des wenigstens einen Wellenwicklungsdrahts oder der einen Gruppe von Wellenwicklungsdrähten eine Folge aus wenigstens einer dritten und wenigstens zwei sechsten Wicklungskopfformen aufweisen und die Wicklungsköpfe wenigstens eines anderen Wellenwicklungsdrahtes oder einer anderen Gruppe von Wellenwicklungsdrähten eine Folge aus wenigstens einer ersten und wenigstens einer vierten Wellenwicklungsform aufweisen und an dem Endbereich die Wicklungsköpfe des wenigstens einen oder der wenigstens einen Gruppe von Wellenwicklungsdrähten ein Folge aus wenigstens einer dritten und wenigstens einer sechsten Wicklungskopfform aufweisen; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die sechste Wicklungskopfform aufweisen und die Wicklungsköpfe eines anderen Wellenwicklungsdrahts oder einer anderen Gruppe von Wellenwicklungsdrähten die dritte Wicklungskopfform aufweisen, in den Standardbereichen die Wicklungsköpfe die erste Wicklungskopfform aufweisen und in dem Übergangsbereich die Wicklungsköpfe des wenigstens einen Wellenwicklungsdrahts oder der einen Gruppe von Wellenwicklungsdrähten eine Folge aus wenigstens einer zweiten und wenigstens einer sechsten Wicklungskopfform aufweisen und die Wicklungsköpfe wenigstens eines anderen Wellenwicklungsdrahtes oder einer anderen Gruppe von Wellenwicklungsdrähten eine Folge aus wenigstens einer sechsten, wenigstens einer vierten und wenigstens einer dritten Wicklungskopfform aufweisen und in dem Endbereich die Wicklungsköpfe des einen Wellenwicklungsdrahtes oder der einen Gruppe von Wellenwicklungsdrähten die zweite Wicklungskopfform aufweisen und die Wicklungsköpfe des anderen Wellenwicklungsdrahtes oder der anderen Gruppe von Wellenwicklungsdrähten die sechste Wicklungskopfform aufweisen.

Es ist bevorzugt, dass sowohl die erste Einzelmatte als auch die zweite Einzelmatte Wickelmatten nach einer der oben beschriebenen Ausgestaltungen für die erfindungsgemäße Wickelmatte sind und dass die erste und die zweite Einzelmatte ineinander gesteckt sind und dass
- bei der ersten Einzelmatte
   in dem Anfangsbereich die Wicklungsköpfe wenigstens eines Wellenwicklungsdrahtes oder jedes Wellenwicklungsdrahts einer Gruppe von Wellenwicklungsdrähten die dritte Wicklungskopfform aufweisen, in den Standardbereichen die Wicklungsköpfe die erste Wicklungskopfform aufweisen, in dem Übergangsbereich die Wicklungsköpfe des wenigstens einen Wellenwicklungsdrahts oder der einen Gruppe von Wellenwicklungsdrähten eine Folge aus wenigstens einer sechsten und wenigstens zwei dritten Wicklungskopfformen aufweisen und die Wicklungsköpfe wenigstens eines anderen Wellenwicklungsdrahtes oder einer anderen Gruppe von Wellenwicklungsdrähten eine Folge aus wenigstens einer zweiten und wenigstens einer fünften Wellenwicklungsform aufweisen und an dem Endbereich die Wicklungsköpfe des wenigstens einen oder der wenigstens einen Gruppe von Wellenwicklungsdrähten ein Folge aus wenigstens einer sechsten und wenigstens einer dritten Wicklungskopfform aufweisen; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die dritte Wicklungskopfform aufweisen und die Wicklungsköpfe eines anderen Wellenwicklungsdrahts oder einer anderen Gruppe von Wellenwicklungsdrähten die sechste Wicklungskopfform aufweisen, in den Standardbereichen die Wicklungsköpfe die zweite Wicklungskopfform aufweisen und in dem Übergangsbereich die Wicklungsköpfe des wenigstens einen Wellenwicklungsdrahts oder der einen Gruppe von Wellenwicklungsdrähten eine Folge aus wenigstens einer ersten und wenigstens einer dritten Wicklungskopfform aufweisen und die Wicklungsköpfe wenigstens eines anderen Wellenwicklungsdrahtes oder einer anderen Gruppe von Wellenwicklungsdrähten eine Folge aus wenigstens einer dritten, wenigstens einer fünften und wenigstens einer sechsten Wicklungskopfform aufweisen und in dem Endbereich die Wicklungsköpfe des einen Wellenwicklungsdrahtes oder der einen Gruppe von Wellenwicklungsdrähten die erste Wicklungskopfform aufweisen und die Wicklungsköpfe des anderen Wellenwicklungsdrahtes oder der anderen Gruppe von Wellenwicklungsdrähten die dritte Wicklungskopfform aufweisen.

Es ist bevorzugt, dass die ineinander gesteckten Teilabschnitte der Einzelmatten höhenversetzt zueinander sind.

Es wird auch ein Bauteil einer elektrischen Maschine beschrieben, umfassend einen Bauteilkörper und eine daran gehaltene Spulenwicklung, die durch eine mehrlagig aufgewickelte Wickelmatte, die durch das Wickelmattenherstellverfahren nach einer bevorzugten Ausgestaltung der Erfindung erhältlich ist, oder eine Spulenmatte, die mit dem Spulenmattenherstellverfahren nach einer bevorzugten Ausgestaltung der Erfindung erhältlich ist, gebildet ist.

Vorzugsweise ist das Bauteil ausgebildet als Stator, wobei der Bauteilkörper ein ringförmiges Gehäuse mit radialen Schlitzen ist, in dem die geradlinigen Drahtabschnitte aufgenommen sind.

Gemäß einem Aspekt betrifft die Erfindung ein Wickelmattenherstellverfahren zum Herstellen einer Wickelmatte, um hieraus eine Spulenwicklung eines Bauteils einer elektrischen Maschine zu bilden, umfassend:
a) Bereitstellen mehrerer sich in einer Längsrichtung erstreckender wellenförmig gebogener Wellenwicklungsdrähte, die in Längsrichtung beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind, um einen Halbwellenabschnitt zu bilden, so dass erste Halbwellenabschnitte mit in einer ersten Richtung gebogenen ersten Wicklungsköpfen und zweite Halbwellenabschnitte mit in einer entgegengesetzten zweiten Richtung gebogenen zweiten Wicklungsköpfen alternierend vorgesehen sind und jeweils ein erster Halbwellenabschnitt und ein benachbarter zweiter Halbwellenabschnitt einen Wellenabschnitt bilden,
b) Zusammenfügen der Wellenwicklungsdrähte nicht durch Verflechten oder umeinander Schlingen, sondern durch Zusammenstecken der Wellenwicklungsdrähte, umfassend:
   b1) nebeneinander Anordnen eines ersten und eines zweiten Wellenwicklungsdrahts, so dass deren geradlinige Drahtabschnitte mit einer gemeinsamen Richtungskomponente zueinander ausgerichtet sind;
   b2) Anordnen eines ersten Teilabschnitts und eines benachbarten zweiten Teilabschnittes des ersten Wellenwicklungsdrahts so, dass der erste Teilabschnitt höher als der zweite Teilabschnitt liegt, und Anordnen eines dem ersten Teilabschnitt des ersten Wellenwicklungsdrahts gegenüberliegenden ersten Teilabschnitts des zweiten Wellenwicklungsdrahts so, dass er unter den ersten Teilabschnitt des ersten Wellenwicklungsdrahts schiebbar ist, und eines dem zweiten Teilabschnitt des ersten Wellenwicklungsdrahts gegenüberliegenden zweiten Teilabschnitts des zweiten Wellenwicklungsdrahts so, dass er über den zweiten Teilabschnitt des ersten Wellenwicklungsdrahts schiebbar ist, und
   b3) Ineinanderschieben des ersten Wellenwicklungsdrahts und des zweiten Wellenwicklungsdrahts in Richtung der zueinander ausgerichteten Richtungskomponente der geradlinigen Drahtabschnitte, wobei der erste Teilabschnitt des zweiten Wellenwicklungsdrahts unter den ersten Teilabschnitt des ersten Wellenwicklungsdrahts geschoben wird und der zweite Teilabschnitt des zweiten Wellenwicklungsdrahts über den zweiten Teilabschnitt des ersten Wellenwicklungsdrahts geschoben wird.

Es ist bevorzugt, dass Schritt a) enthält:
a1) Formen der Wicklungsköpfe durch Ausbilden jeweils einer mittleren Dachbiegung und je einer Übergangsbiegung im Übergangsbereich zu den zugeordneten geradlinigen Drahtabschnitten und jeweils einer Gegenbiegung zwischen den Übergangsbiegungen und der Dachbiegung.

Es ist bevorzugt, dass Schritt a) enthält:
a2) Bereitstellen der Wellenwicklungsdrähte mit einer Drahtdicke, die an den geradlinigen Drahtabschnitten sich in einer quer zur Längsrichtung und quer zur Querrichtung verlaufenden Höhenrichtung gemessen über ein Drahtdickenmaß erstreckt.

Es ist bevorzugt, dass Schritt a) enthält:
a3) Bereitstellen von Wellenwicklungsdrähten mit einem rechteckigen Querschnitt.

Es ist bevorzugt, dass Schritt a) enthält:
a4) Bereitstellen des ersten und des zweiten Wellenwicklungsdrahts mit zum Bilden von Kreuzungspunkten ausgebildeten Wicklungsköpfen, wobei wenigstens ein Teilbereich wenigstens eines zum Bilden eines Kreuzungspunktes ausgebildeten Wicklungskopfs des ersten Teilabschnitts des ersten Wellenwicklungsdrahtes gegenüber den durch diesen Wicklungskopf verbundenen geradlinigen Drahtabschnitten um eine wenigstens einer halben Drahtdicke entsprechende Höhenerstreckung höher liegt und ein Teilbereich des zum Bilden eines Kreuzungspunktes ausgebildeten Wicklungskopfs des ersten Teilabschnitts des zweiten Wellenwicklungsdrahts gegenüber den durch diesen Wicklungskopf verbundenen geradlinigen Drahtabschnitten um eine wenigstens einer halben Drahtdicke entsprechende Höhenerstreckung tiefer liegt und/oder wobei wenigstens ein Teilbereich wenigstens eines zum Bilden eines Kreuzungspunktes ausgebildeten Wicklungskopfs des zweiten Teilabschnitts des ersten Wellenwicklungsdrahtes gegenüber den durch diesen Wicklungskopf verbundenen geradlinigen Drahtabschnitten um eine wenigstens einer halben Drahtdicke entsprechende Höhenerstreckung tiefer liegt und ein Teilbereich des zum Bilden eines Kreuzungspunktes ausgebildeten Wicklungskopfs des zweiten Teilabschnitts des zweiten Wellenwicklungsdrahts gegenüber den durch diesen Wicklungskopf verbundenen geradlinigen Drahtabschnitten um eine wenigstens einer halben Drahtdicke entsprechende Höhenerstreckung höher liegt.

Es ist bevorzugt, dass Schritt a) enthält:
a5) Durchführen von Schritt a2) und Einbringen von Höhenversätzen in die Wicklungsköpfe, durch
Biegen eines ersten Höhenversatzes um ein halbes Höhenerstreckungsmaß an einem ersten Wicklungskopfabschnitt, der sich an einen ersten geradlinigen Drahtabschnitt anschließt,
Biegen eines zweiten Höhenversatzes um ein ganzes Höhenerstreckungsmaß an einem zweiten Wicklungskopfabschnitt, der sich an den ersten Wicklungskopfabschnitt anschließt, und
Biegen eines dritten Höhenversatzes um ein halbes Höhenerstreckungsmaß an einem dritten Wicklungskopfabschnitt, der sich zwischen dem zweiten Wicklungskopfbereich und einem zweiten geradlinigen Drahtabschnitt erstreckt.

Weiter vorzugsweise wird das Höhenerstreckungsmaß gleich dem Drahtdickenmaß oder mehr bevorzugt gleich dem Drahtdickenmaß zuzüglich einem vorbestimmten Toleranzmaß gewählt.

Vorzugsweise wird das Höhenerstreckungsmaß abhängig von der Drahtdicke ausgewählt. Insbesondere ist das Höhenerstreckungsmaß abhängig von dem Drahtdickenmaß. Vorzugsweise ergibt sich das Höhenerstreckungsmaß aus der Drahtdicke sowie einem Toleranzmaß, das Luft/Spiel zum darunterliegenden/benachbarten Draht sowie sonstige aus konstruktiven Gründen gewählte Abstände berücksichtigt. Das Höhenerstreckungsmaß gibt an, wie hoch der Sprung in den Wicklungsköpfen ist. Das Toleranzmaß, um den das Höhenerstreckungsmaß größer als das Drahtdickenmaß ist, ist vorzugsweise wesentlich kleiner als das Drahtdickenmaß und liegt beispielsweise in einem Bereich von 0,001 % bis 5% der Drahtdicke. Vorzugsweise werden in dem Toleranzmaß übliche Toleranzwerte derart berücksichtigt, dass benachbarte Drähte ohne Spannung aufeinander aufliegen und vorzugsweise ein geringes Spiel zwischen aufeinanderliegenden benachbarten Drähten besteht.

Es ist bevorzugt, dass Schritt a) enthält:
a6) Bereitstellen von 3n Wellenwicklungsdrähten, wobei n eine natürliche Zahl größer 0 ist.

Es ist bevorzugt, dass Schritt a5) Biegen des jeweiligen Höhenversatzes in eine erste Höhenrichtung, die im bestimmungsgemäßen Gebrauch der Wickel matte einer Richtung radial nach außen, bezogen auf eine Zentralachse des Bauteils, entspricht, oder in eine entgegengesetzte zweite Höhenrichtung, die im bestimmungsgemäßen Gebrauch der Wickelmatte einer Richtung radial nach innen, bezogen auf eine Zentralachse des Bauteils, entspricht.

Dabei ist bevorzugt, dass Schritt a5) weiter umfasst:
a5a) Einbringen des ersten Höhenversatzes im Bereich einer Übergangsbiegung und des dritten Höhenversatzes im Bereich der anderen Übergangsbiegung und des zweiten Höhenversatzes im Bereich der Dachbiegung.

Dabei ist bevorzugt, dass Schritt a5) weiter umfasst:
a5b) Ausbilden der Höhenversätze zum Ausbilden einer Wicklungskopfform, die ausgewählt ist aus einer Gruppe von Wicklungskopfformen, die
   - eine erste Wicklungskopfform, bei der der erste Höhenversatz in die zweite Höhenrichtung gerichtet ist, der zweite Höhenversatz in die erste Höhenrichtung gerichtet ist und der dritte Höhenversatz in die zweite Höhenrichtung gerichtet ist,
   - eine zweite Wicklungskopfform, bei der der erste Höhenversatz in die erste Höhenrichtung gerichtet ist, der zweite Höhenversatz in die zweite Höhenrichtung gerichtet ist und der dritte Höhenversatz in die erste Höhenrichtung gerichtet ist,
   - eine dritte Wicklungskopfform, bei der der erste Höhenversatz in die erste Höhenrichtung gerichtet ist, der zweite Höhenversatz in die erste Höhenrichtung gerichtet ist und der dritte Höhenversatz in die zweite Höhenrichtung gerichtet ist,
   - eine vierte Wicklungskopfform, bei der der erste Höhenversatz in die erste Höhenrichtung gerichtet ist, der zweite Höhenversatz in die zweite Höhenrichtung gerichtet ist und der dritte Höhenversatz in die zweite Höhenrichtung gerichtet ist,
   - eine fünfte Wicklungskopfform, bei der der erste Höhenversatz in die zweite Höhenrichtung gerichtet ist, der zweite Höhenversatz in die erste Höhenrichtung gerichtet ist und der dritte Höhenversatz in die erste Höhenrichtung gerichtet ist, und
   - eine sechste Wicklungskopfform, bei der der erste Höhenversatz in die zweite Höhenrichtung gerichtet ist, der zweite Höhenversatz in die zweite Höhenrichtung gerichtet ist und der dritte Höhenversatz in die erste Höhenrichtung gerichtet ist.

Dabei ist bevorzugt, dass Schritt a5) weiter umfasst:
a5c) Auswahl wenigstens eines zwischen einem Anfangsbereich und einem Endbereich der Wickelmatte liegenden Standardbereichs, und Formen jedes Wicklungskopfes in dem Standardbereich so, dass der erste Höhenversatz und der dritte Höhenversatz in die gleiche Höhenrichtung gerichtet sind und der zweite Höhenversatz in die entgegengesetzte Höhenrichtung gerichtet ist.

Dabei ist bevorzugt, dass Schritt a5) weiter umfasst:
a5d) Auswahl eines Übergangsbereichs, in dem die Wickelmatte eine Stufe in Höhenrichtung zum Ausbilden einer treppenartigen Stufung der Wickelmatte erhalten soll und

Formen von Wicklungsköpfen in Wellenwicklungsdrähten an dem Übergangsbereich so, dass bei wenigstens einem Wicklungskopf an dem ersten Wellenwicklungsdraht der erste Höhenversatz in die erste Höhenrichtung gerichtet ist, der zweite Höhenversatz in die erste Richtung gerichtet ist und der dritte Höhenversatz in die zweite Richtung gerichtet ist, und bei wenigstens einem Wicklungskopf an dem zweiten Wellenwicklungsdraht der erste Höhenversatz in die zweite Höhenrichtung gerichtet ist, der zweite Höhenversatz in die zweite Höhenrichtung gerichtet ist und der dritte Höhenversatz in die erste Höhenrichtung gerichtet ist.

Dabei ist bevorzugt, dass Schritt a5) weiter umfasst:
a5e) Formen wenigstens eines Wicklungskopfes an wenigstens einem des ersten oder zweiten Wellenwicklungsdrahtes an einem Anfangsbereich oder einem Endbereich der Wickelmatte so, dass der erste Höhenversatz in die erste Höhenrichtung gerichtet ist, der zweite Höhenversatz in die zweite Höhenrichtung gerichtet ist und der dritte Höhenversatz in die erste Höhenrichtung gerichtet ist oder der erste Höhenversatz in die zweite Höhenrichtung gerichtet ist, der zweite Höhenversatz in die erste Höhenrichtung gerichtet ist und der dritte Höhenversatz in die erste Höhenrichtung gerichtet ist.

Es ist bevorzugt, dass wenigstens einige, mehrere oder alle der Teilabschnitte in Schritt b) Halbwellenabschnitte oder Wellenabschnitte sind oder jeweils durch eine Mehrzahl von Halbwellenabschnitten oder Wellenabschnitten gebildet sind.

Es ist bevorzugt, dass die Wickelmatte treppenartig gestuft mit wenigstens einem eine Stufe in Höhenrichtung bildenden Übergangsbereich hergestellt wird, wobei in Schritt b) die Teilabschnitte des ersten und zweiten Wellenwicklungsdraht in dem Übergangsbereich ineinandergesteckt werden.

Es ist bevorzugt, dass in Schritt b) die Teilabschnitte des ersten und des zweiten Wellenwicklungsdrahts in einem Anfangsbereich und/oder einem Endbereich der Wickelmatte ineinandergesteckt werden.

Es ist bevorzugt, dass der erste und der zweite Wellenwicklungsdraht mit ihren ersten und zweiten Teilabschnitten an einem Anfangsbereich der Wickelmatte und/oder an einem Endbereich der Wickelmatte ineinander gesteckt werden und in wenigstens einem dazwischen befindlichen Bereich ohne Ineinanderstecken von Teilabschnitten aufeinanderliegend gestapelt werden.

Es ist bevorzugt, dass in Schritt b) jeweils ein Paar oder eine Gruppe von ersten Wellenwicklungsdrähten in ein Paar oder eine Gruppe von zweiten Wellenwicklungsdrähten gesteckt werden.

Es ist bevorzugt, dass in Schritt a) wenigstens ein erster, wenigstens ein zweiter und wenigstens ein dritter Wellenwicklungsdraht bereit gestellt werden und dass in Schritt b) nur der wenigstens eine erste und der wenigstens eine zweite Wellenwicklungsdraht gesteckt wird, und dass der wenigstens eine dritte Wellenwicklungsdraht mit dem wenigstens einen ersten und wenigstens einen zweiten Wellenwicklungsdraht durch Stapeln und nicht durch Stecken zusammengefügt wird.

Es ist bevorzugt, dass Schritt a) einen oder beide der Schritte a4) oder a5) umfasst und Schritt b) weiter umfasst:
b7) Ineinanderstecken des ersten Wellenwicklungsdrahtes und des zweiten Wellenwicklungsdrahtes in eine Ausrichtlage, in der die Längsmittelachsen des ersten und des zweiten Wellenwicklungsdrahtes aufeinander liegen, wobei sich die geradlinigen Drahtabschnitte des ersten und des zweiten Wellenwicklungsdrahtes sich zumindest in einem Standardbereich der Wickelmatte auf einer gemeinsamen Ebene anordnen.

Es ist bevorzugt, dass Schritt b) mit der bereits aus mehreren gesteckten Wellenwicklungsdrähten gebildeten Einheit und einem weiteren Wellenwicklungsdraht oder einem Paar oder einer Gruppe von weiteren Wellenwicklungsdrähten in analoger Weise wie mit dem ersten Wellenwicklungsdraht und dem zweiten Wellenwicklungsdraht wiederholt wird, bis alle Wellenwicklungsdrähte zu der Wickelmatte zusammengefügt sind.

Es ist bevorzugt, dass das Wickelmattenherstellverfahren zum Herstellen einer einlagigen Wickelmatte durchgeführt wird, bei der in Längsrichtung der Wickelmatte eine Folge von einzelnen nicht übereinanderliegenden geradlinigen Drahtabschnitten vorgesehen ist.

Es ist bevorzugt, dass in Schritt b) der erste und/oder der zweite Teilabschnitt sowohl des ersten als auch des zweiten Wellenwicklungsdrahtes jeweils wenigstens drei Wicklungsköpfe umfasst, so dass jeweils wenigstens ein zentraler Wicklungskopf zwischen wenigstens zwei äußeren Wicklungsköpfen liegt, und dass Schritt b) weiter die nach Schritt b3) durchzuführenden Schritte umfasst:
b4) Ineinanderschieben des ersten und zweiten Wellenwicklungsdrahtes über die Ausrichtlage, in der der erste und der zweite Wellenwicklungsdraht mit ihren Längsmittelachsen zueinander ausgerichtet sind, hinaus, bis die Wicklungsköpfe, die sich in Schritt b1) auf von der dem jeweils anderen Wellenwicklungsdraht abgewandten Seite befunden haben, im Anschlag gegeneinander sind;
b5) Vertauschen der Höhenlage des wenigstens einen zentralen Wicklungskopfes des ersten Wellenwicklungsdrahtes und des zweiten Wellenwicklungsdrahtes und
b6) Ineinanderschieben des ersten und des zweiten Wellenwicklungsdrahtes in die Ausrichtlage.

Gemäß einem weiteren Aspekt schafft die Erfindung ein Spulenmattenherstellverfahren zum Herstellen einer Spulenmatte, um daraus die Spulenwicklung eines Bauteils einer elektrischen Maschine zu bilden, umfassend:
i) Herstellen einer ersten Einzelmatte durch Zusammenfügen von 3n₁ einzelner Wellenwicklungsdrähte,
j) Herstellen einer zweiten Einzelmatte durch Zusammenfügen von 3n₂ einzelner Wellenwicklungsdrähte, und
k) Zusammenfügen der ersten Einzelmatte und der zweiten Einzelmatte,
wobei n₁ und n₂ natürliche Zahlen größer 0 sind und wobei die Wellenwicklungsdrähte in Längsrichtung der Spulenmatte beabstandete und sich in einer quer zur Längsrichtung verlaufenden Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind und so Halbwellenabschnitte bilden, so dass erste Halbwellenabschnitte mit in einer ersten Richtung gebogenen ersten Wicklungsköpfen und zweite Halbwellenabschnitte mit in einer entgegengesetzten Richtung gebogenen zweiten Wicklungsköpfen alternierend vorgesehen sind und jeweils ein erster Halbwellenabschnitt und ein benachbarter zweiter Halbwellenabschnitt einen Wellenabschnitt bilden.

Bei einer ersten Alternative des Spulenmattenherstellverfahrens umfassen wenigstens einer oder beide der Schritte i) und j) Durchführung des Wickelmattenherstellverfahrens gemäß der oben beschriebenen Ausgestaltung.

Bei einer zweiten Alternative des Spulenmattenherstellverfahrens, die alleine oder in Kombination mit der ersten Alternative vorgesehen sein kann, umfasst Schritt k):
Zusammenfügen der Einzelmatten nicht durch Verflechten oder umeinander Schlingen, sondern durch Zusammenstecken der Einzelmatten, umfassend:
k1) nebeneinander Anordnen der ersten und der zweiten Einzelmatte, so dass deren geradlinigen Drahtabschnitte mit einer gemeinsamen Richtungskomponente zueinander ausgerichtet sind;
k2) Anordnen eines ersten Teilabschnitts und eines benachbarten zweiten Teilabschnittes der ersten Einzelmatte so, dass der erste Teilabschnitt höher als der zweite Teilabschnitt liegt, und Anordnen eines dem ersten Teilabschnitt der ersten Einzelmatte gegenüberliegenden ersten Teilabschnitts der zweiten Einzelmatte so, dass er unter den ersten Teilabschnitt der ersten Einzelmatte schiebbar ist, und eines dem zweiten Teilabschnitt der ersten Einzelmatte gegenüberliegenden zweiten Teilabschnitts der zweiten Einzelmatte so, dass er über den zweiten Teilabschnitt der ersten Einzelmatte schiebbar ist, und
k3) Ineinanderschieben der ersten Einzelmatte und der zweiten Einzelmatte in Richtung der zueinander ausgerichteten Richtungskomponente der geradlinigen Drahtabschnitte, wobei der erste Teilabschnitt der zweiten Einzelmatte unter den ersten Teilabschnitt der ersten Einzelmatte geschoben wird und der zweite Teilabschnitt der zweiten Einzelmatte über den zweiten Teilabschnitt der ersten Einzelmatte geschoben wird.

Es ist bevorzugt, dass Schritt k) derart durchgeführt wird, dass jeweils ein geradliniger Drahtabschnitt der ersten Einzelmatte und ein geradliniger Drahtabschnitt der zweiten Einzelmatte in Höhenrichtung aufeinander zu liegen kommen.

Es ist bevorzugt, dass Schritt i) und j) derart durchgeführt werden, dass die geradlinigen Drahtabschnitte des ersten Teilabschnitts der ersten Einzelmatte um eine wenigstens der Drahtdicke entsprechende Höhenerstreckung höher liegen als die geradlinigen Drahtabschnitte des zweiten Teilabschnitts der ersten Einzelmatte und/oder des ersten Teilabschnitts der zweiten Einzelmatte.

Es ist bevorzugt, dass Schritt i) und j) derart durchgeführt werden, dass die geradlinigen Drahtabschnitte des zweiten Teilabschnittes der zweiten Einzelmatte um wenigstens ein wenigstens der Drahtdicke entsprechendes Höhenerstreckungsmaß höher liegen als die geradlinigen Drahtabschnitte des ersten Teilabschnitts der zweiten Einzelmatte und/oder des zweiten Teilabschnittes der ersten Einzelmatte.

Es ist bevorzugt, dass Schritt k) umfasst:
k7) Ineinanderstecken der ersten Einzelmatte und der zweiten Einzelmatte in eine Ausrichtlage, in der die Längsmittelachsen der ersten und der zweiten Einzelmatte aufeinander liegen.

Es ist bevorzugt, dass in Schritt k) der erste und/oder der zweite Teilabschnitt sowohl des ersten als auch des zweiten Wellenwicklungsdrahtes jeweils wenigstens drei Wicklungskopfgruppen umfasst, so dass jeweils wenigstens eine zentrale Wicklungskopfgruppe zwischen wenigstens zwei äußeren Wicklungskopfgruppen liegt, und dass Schritt k) weiter die nach Schritt k3) durchzuführenden Schritte umfasst:
k4) Ineinanderschieben der ersten und zweiten Einzelmatte über die Ausrichtlage, in der die erste und die zweite Einzelmatte mit ihren Längsmittelachsen zueinander ausgerichtet sind, hinaus, bis die Wicklungsköpfe, die sich in Schritt k1) auf von der der jeweils anderen Einzelmatte abgewandten Seite befunden haben, im Anschlag gegeneinander sind;
k5) Vertauschen der Höhenlage der zentralen Wicklungskopfgruppen der ersten Einzelmatte und der zweiten Einzelmatte und
k6) Ineinanderschieben der ersten und der zweiten Einzelmatte in die Ausrichtlage.

Es ist bevorzugt, dass Schritt i) und j) derart durchgeführt werden, dass jeder Wicklungskopf mit einem ersten Höhenversatz um ein halbes Höhenerstreckungsmaß an einem ersten Wicklungskopfabschnitt, der sich an einen ersten geradlinigen Drahtabschnitt anschließt, einem zweiten Höhenversatz um ein ganzes Höhenerstreckungsmaß an einem zweiten Wicklungskopfabschnitt, der sich an den ersten Wicklungskopfabschnitt anschließt, und einem dritten Höhenversatz um ein halbes Höhenerstreckungsmaß an einem dritten Wicklungskopfabschnitt versehen wird, der sich zwischen dem zweiten Wicklungskopfbereich und dem zweiten geradlinigen Drahtabschnitt erstreckt.

Dabei ist weiter vorzugsweise vorgesehen, dass jeder Wellenwicklungsdraht in den geradlinigen Abschnitten eine Drahtdicke aufweist, die sich in einer quer zur Längsrichtung und quer zur Querrichtung verlaufenden Höhenrichtung gemessen über ein Drahdickenmaß erstreckt, und dass das Höhenerstreckungsmaß abhängig von dem Drahtdickenmaß gewählt wird. Vorzugsweise wird das Höhenerstreckungsmaß gleich der Drahtdicke oder gleich der Drahtdicke zuzüglich einem vorbestimmten Toleranzmaß bestimmt.

Vorzugsweise ist das Höhenerstreckungsmaß abhängig von der Drahtdicke. Insbesondere ist das Höhenerstreckungsmaß abhängig von dem Drahtdickenmaß. Vorzugsweise ergibt sich das Höhenerstreckungsmaß aus der Drahtdicke sowie einem Toleranzmaß, das Luft/Spiel zum darunterliegenden/benachbarten Draht sowie sonstige aus konstruktiven Gründen gewählte Abstände berücksichtigt. Das Höhenerstreckungsmaß gibt an, wie hoch der Sprung in den Wicklungsköpfen ist. Das Toleranzmaß, um den das Höhenerstreckungsmaß größer als das Drahtdickenmaß ist, ist vorzugsweise wesentlich kleiner als das Drahtdickenmaß und liegt beispielsweise in einem Bereich von 0,001 % bis 5% der Drahtdicke. Vorzugsweise werden in dem Toleranzmaß übliche Toleranzwerte derart berücksichtigt, dass benachbarte Drähte ohne Spannung aufeinander aufliegen und vorzugsweise ein geringes Spiel zwischen aufeinanderliegenden benachbarten Drähten besteht.

Es ist bevorzugt, dass die Einzelmatten treppenartig gestuft mit wenigstens einem eine Stufe in Höhenrichtung bildenden Übergangsbereich ausgebildet werden, so dass die Einzelmatten und damit auch die daraus gebildete Spulenmatte einen Anfangsbereich, mehrere Standardbereiche mit jeweils einem Übergangsbereich dazwischen und einen Endbereich aufweisen, wobei im bestimmungsgemäßen Gebrauch der Spulenmatte die erste Höhenrichtung in den Höhenversätzen der Wicklungsköpfe einer Richtung radial nach außen und die zweite Höhenrichtung einer Richtung radial nach innen entspricht, dass die einzelnen Wicklungsköpfe mit einer Wicklungskopfform ausgebildet werden, die ausgewählt wird aus einer Gruppe von Wicklungskopfformen, die
- eine erste Wicklungskopfform, bei der der erste Höhenversatz in die zweite Höhenrichtung gerichtet ist, der zweite Höhenversatz in die erste Höhenrichtung gerichtet ist und der dritte Höhenversatz in die zweite Höhenrichtung gerichtet ist,
- eine zweite Wicklungskopfform, bei der der erste Höhenversatz in die erste Höhenrichtung gerichtet ist, der zweite Höhenversatz in die zweite Höhenrichtung gerichtet ist und der dritte Höhenversatz in die erste Höhenrichtung gerichtet ist,
- eine dritte Wicklungskopfform, bei der der erste Höhenversatz in die erste Höhenrichtung gerichtet ist, der zweite Höhenversatz in die erste Höhenrichtung gerichtet ist und der dritte Höhenversatz in die zweite Höhenrichtung gerichtet ist,
- eine vierte Wicklungskopfform, bei der der erste Höhenversatz in die erste Höhenrichtung gerichtet ist, der zweite Höhenversatz in die zweite Höhenrichtung gerichtet ist und der dritte Höhenversatz in die zweite Höhenrichtung gerichtet ist,
- eine fünfte Wicklungskopfform, bei der der erste Höhenversatz in die zweite Höhenrichtung gerichtet ist, der zweite Höhenversatz in die erste Höhenrichtung gerichtet ist und der dritte Höhenversatz in die erste Höhenrichtung gerichtet ist, und
- eine sechste Wicklungskopfform, bei der der erste Höhenversatz in die zweite Höhenrichtung gerichtet ist, der zweite Höhenversatz in die zweite Höhenrichtung gerichtet ist und der dritte Höhenversatz in die erste Höhenrichtung gerichtet ist,
umfasst,
und dass in den Standardbereichen Wicklungsköpfe mit der ersten oder der zweiten Wicklungskopfform vorgesehen werden und dass wenigstens einige der Wellenwicklungsdrähte in dem Übergangsbereich Wicklungsköpfe mit der dritten und/oder der vierten und/oder der fünften und/oder der sechsten Wicklungskopfform erhalten.

Es ist bevorzugt, dass die erste und die zweite Einzelmatte aufeinander gestapelt werden und dass
- bei der ersten Einzelmatte
   in dem Anfangsbereich und in den Standardbereichen die Wicklungsköpfe die zweite Wicklungskopfform erhalten, in dem Übergangsbereich die Wicklungsköpfe wenigstens eines Wellenwicklungsdrahts oder einer Gruppe von Wellenwicklungsdrähten die vierte Wicklungskopfform und die Wicklungsköpfe wenigstens eines anderen Wellenwicklungsdrahtes oder einer anderen Gruppe von Wellenwicklungsdrähten die sechste Wellenwicklungsform erhalten und an dem Endbereich die Wicklungsköpfe des wenigstens einen oder der wenigstens einen Gruppe von Wellenwicklungsdrähten die vierte Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die vierte Wicklungskopfform erhalten, in den Standardbereichen sowie in dem Endbereich die Wicklungsköpfe die erste Wicklungskopfform erhalten und in dem Übergangsbereich die Wicklungsköpfe des wenigstens einen Wellenwicklungsdrahts oder der einen Gruppe von Wellenwicklungsdrähten die vierte Wicklungskopfform und die Wicklungsköpfe wenigstens eines anderen Wellenwicklungsdrahtes oder einer anderen Gruppe von Wellenwicklungsdrähten die sechste Wellenwicklungsform erhalten.

Es ist bevorzugt, dass die erste und die zweite Einzelmatte aufeinander gestapelt werden und dass
- bei der ersten Einzelmatte
   in dem Anfangsbereich und in den Standardbereichen die Wicklungsköpfe die erste Wicklungskopfform erhalten, in dem Übergangsbereich die Wicklungsköpfe wenigstens eines Wellenwicklungsdrahts oder einer Gruppe von Wellenwicklungsdrähten die fünfte Wicklungskopfform und die Wicklungsköpfe wenigstens eines anderen Wellenwicklungsdrahtes oder einer anderen Gruppe von Wellenwicklungsdrähten die dritte Wellenwicklungsform erhalten und an dem Endbereich die Wicklungsköpfe des wenigstens einen oder der wenigstens einen Gruppe von Wellenwicklungsdrähten die fünfte Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die fünfte Wicklungskopfform erhalten, in den Standardbereichen sowie in dem Endbereich die Wicklungsköpfe die zweite Wicklungskopfform erhalten und in dem Übergangsbereich die Wicklungsköpfe des wenigstens einen Wellenwicklungsdrahts oder der einen Gruppe von Wellenwicklungsdrähten die fünfte Wicklungskopfform und die Wicklungsköpfe wenigstens eines anderen Wellenwicklungsdrahtes oder einer anderen Gruppe von Wellenwicklungsdrähten die dritte Wellenwicklungsform erhalten.

Es ist bevorzugt, dass die erste und die zweite Einzelmatte aufeinander gestapelt werden und dass
- bei der ersten Einzelmatte
   in dem Anfangsbereich und in den Standardbereichen die Wicklungsköpfe die erste Wicklungskopfform erhalten, in dem Übergangsbereich die Wicklungsköpfe wenigstens eines Wellenwicklungsdrahts oder einer Gruppe von Wellenwicklungsdrähten die sechste Wicklungskopfform und die Wicklungsköpfe wenigstens eines anderen Wellenwicklungsdrahtes oder einer anderen Gruppe von Wellenwicklungsdrähten die vierte Wellenwicklungsform erhalten und an dem Endbereich die Wicklungsköpfe des wenigstens einen oder der wenigstens einen Gruppe von Wellenwicklungsdrähten die sechste Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die sechste Wicklungskopfform erhalten, in den Standardbereichen sowie in dem Endbereich die Wicklungsköpfe die zweite Wicklungskopfform erhalten und in dem Übergangsbereich die Wicklungsköpfe des wenigstens einen Wellenwicklungsdrahts oder der einen Gruppe von Wellenwicklungsdrähten die sechste Wicklungskopfform und die Wicklungsköpfe wenigstens eines anderen Wellenwicklungsdrahtes oder einer anderen Gruppe von Wellenwicklungsdrähten die vierte Wellenwicklungsform erhalten.

Es ist bevorzugt, dass die erste und die zweite Einzelmatte aufeinander gestapelt werden und dass
- bei der ersten Einzelmatte in dem Anfangsbereich und in den Standardbereichen die Wicklungsköpfe die zweite Wicklungskopfform erhalten, in dem Übergangsbereich die Wicklungsköpfe wenigstens eines Wellenwicklungsdrahts oder einer Gruppe von Wellenwicklungsdrähten die dritte Wicklungskopfform und die Wicklungsköpfe wenigstens eines anderen Wellenwicklungsdrahtes oder einer anderen Gruppe von Wellenwicklungsdrähten die fünfte Wellenwicklungsform erhalten und an dem Endbereich die Wicklungsköpfe des wenigstens einen oder der wenigstens einen Gruppe von Wellenwicklungsdrähten die dritte Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die dritte Wicklungskopfform erhalten, in den zweiten Standardbereichen sowie in dem Endbereich die Wicklungsköpfe die erste Wicklungskopfform erhalten und in dem Übergangsbereich die Wicklungsköpfe des wenigstens einen Wellenwicklungsdrahts oder der einen Gruppe von Wellenwicklungsdrähten die dritte Wicklungskopfform und die Wicklungsköpfe wenigstens eines anderen Wellenwicklungsdrahtes oder einer anderen Gruppe von Wellenwicklungsdrähten die fünfte Wellenwicklungsform erhalten.

Es ist bevorzugt, dass sowohl die erste Einzelmatte als auch die zweite Einzelmatte durch ein Wickelmattenherstellverfahren nach einer der voranstehenden erfindungsgemäßen Ausgestaltungen hergestellt werden und dass die erste und die zweite Einzelmatte ineinander gesteckt werden und dass
- bei der ersten Einzelmatte
   in dem Anfangsbereich die Wicklungsköpfe wenigstens eines Wellenwicklungsdrahtes oder jedes Wellenwicklungsdrahts einer Gruppe von Wellenwicklungsdrähten die sechste Wicklungskopfform erhalten, in den Standardbereichen die Wicklungsköpfe die zweite Wicklungskopfform erhalten, in dem Übergangsbereich die Wicklungsköpfe des wenigstens einen Wellenwicklungsdrahts oder der einen Gruppe von Wellenwicklungsdrähten eine Folge aus wenigstens einer dritten und wenigstens zwei sechsten Wicklungskopfformen erhalten und die Wicklungsköpfe wenigstens eines anderen Wellenwicklungsdrahtes oder einer anderen Gruppe von Wellenwicklungsdrähten eine Folge aus wenigstens einer ersten und wenigstens einer vierten Wellenwicklungsform erhalten und an dem Endbereich die Wicklungsköpfe des wenigstens einen oder der wenigstens einen Gruppe von Wellenwicklungsdrähten ein Folge aus wenigstens einer dritten und wenigstens einer sechsten Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die sechste Wicklungskopfform erhalten und die Wicklungsköpfe eines anderen Wellenwicklungsdrahts oder einer anderen Gruppe von Wellenwicklungsdrähten die dritte Wicklungskopfform erhalten, in den Standardbereichen die Wicklungsköpfe die erste Wicklungskopfform erhalten und in dem Übergangsbereich die Wicklungsköpfe des wenigstens einen Wellenwicklungsdrahts oder der einen Gruppe von Wellenwicklungsdrähten eine Folge aus wenigstens einer zweiten und wenigstens einer sechsten Wicklungskopfform erhalten und die Wicklungsköpfe wenigstens eines anderen Wellenwicklungsdrahtes oder einer anderen Gruppe von Wellenwicklungsdrähten eine Folge aus wenigstens einer sechsten, wenigstens einer vierten und wenigstens einer dritten Wicklungskopfform erhalten und in dem Endbereich die Wicklungsköpfe des einen Wellenwicklungsdrahtes oder der einen Gruppe von Wellenwicklungsdrähten die zweite Wicklungskopfform erhalten und die Wicklungsköpfe des anderen Wellenwicklungsdrahtes oder der anderen Gruppe von Wellenwicklungsdrähten die sechste Wicklungskopfform erhalten.

Es ist bevorzugt, dass sowohl die erste Einzelmatte als auch die zweite Einzelmatte durch ein Wickelmattenherstellverfahren nach einer der voranstehenden erfindungsgemäßen Ausgestaltungen hergestellt werden und dass die erste und die zweite Einzelmatte ineinander gesteckt werden und dass
- bei der ersten Einzelmatte
   in dem Anfangsbereich die Wicklungsköpfe wenigstens eines Wellenwicklungsdrahtes oder jedes Wellenwicklungsdrahts einer Gruppe von Wellenwicklungsdrähten die dritte Wicklungskopfform erhalten, in den Standardbereichen die Wicklungsköpfe die erste Wicklungskopfform erhalten, in dem Übergangsbereich die Wicklungsköpfe des wenigstens einen Wellenwicklungsdrahts oder der einen Gruppe von Wellenwicklungsdrähten eine Folge aus wenigstens einer sechsten und wenigstens zwei dritten Wicklungskopfformen erhalten und die Wicklungsköpfe wenigstens eines anderen Wellenwicklungsdrahtes oder einer anderen Gruppe von Wellenwicklungsdrähten eine Folge aus wenigstens einer zweiten und wenigstens einer fünften Wellenwicklungsform erhalten und an dem Endbereich die Wicklungsköpfe des wenigstens einen oder der wenigstens einen Gruppe von Wellenwicklungsdrähten ein Folge aus wenigstens einer sechsten und wenigstens einer dritten Wicklungskopfform erhalten; und
- bei der zweiten Einzelmatte
   in dem Anfangsbereich die Wicklungsköpfe wenigstens eines Wellenwicklungsdrahtes oder wenigstens einer Gruppe von Wellenwicklungsdrähten die dritte Wicklungskopfform erhalten und die Wicklungsköpfe eines anderen Wellenwicklungsdrahts oder einer anderen Gruppe von Wellenwicklungsdrähten die sechste Wicklungskopfform erhalten, in den Standardbereichen die Wicklungsköpfe die zweite Wicklungskopfform erhalten und in dem Übergangsbereich die Wicklungsköpfe des wenigstens einen Wellenwicklungsdrahts oder der einen Gruppe von Wellenwicklungsdrähten eine Folge aus wenigstens einer ersten und wenigstens einer dritten Wicklungskopfform erhalten und die Wicklungsköpfe wenigstens eines anderen Wellenwicklungsdrahtes oder einer anderen Gruppe von Wellenwicklungsdrähten eine Folge aus wenigstens einer dritten, wenigstens einer fünften und wenigstens einer sechsten Wicklungskopfform erhalten und in dem Endbereich die Wicklungsköpfe des einen Wellenwicklungsdrahtes oder der einen Gruppe von Wellenwicklungsdrähten die erste Wicklungskopfform erhalten und die Wicklungsköpfe des anderen Wellenwicklungsdrahtes oder der anderen Gruppe von Wellenwicklungsdrähten die dritte Wicklungskopfform erhalten.

Eine bevorzugte Ausgestaltung des Spulenmattenherstellverfahren ist gekennzeichnet durch Durchführen derart, dass damit eine Spulenmatte ohne Leitertausch und ohne Lagentausch hergestellt wird.

Eine bevorzugte Ausgestaltung des Spulenmattenherstellverfahren ist gekennzeichnet durch Durchführen derart, dass damit eine Spulenmatte mit Leitertausch und ohne Lagentausch hergestellt wird.

Eine bevorzugte Ausgestaltung des Spulenmattenherstellverfahren ist gekennzeichnet durch Durchführen derart, dass damit eine Spulenmatte ohne Leitertausch und mit Lagentausch hergestellt wird.

Eine bevorzugte Ausgestaltung des Spulenmattenherstellverfahren ist gekennzeichnet durch Durchführen derart, dass damit eine Spulenmatte mit Leitertausch und mit Lagentausch hergestellt wird.

Vorteilhaft erfolgt ein Herstellen des Bauteils einer elektrischen Maschine mit den Schritten:
Bereitstellen eines Bauteilkörpers, Durchführen eines Verfahrens nach einem der voranstehenden Ansprüche und Aufwickeln der so erhaltenen Matte, um die eine Spulenwicklung des Bauteils der elektrischen Maschine zu erhalten, und Einfügen der aufgewickelten Matte in den Bauteilkörper.

Gemäß einem weiteren Aspekt schafft die Erfindung eine Vorrichtung zum Durchführen eines Verfahrens nach einer der voranstehenden Ausgestaltungen, umfassend:
eine Bereitstellvorrichtung zum Bereitstellen von Wellenwicklungsdrähten oder Einzelmatten und
eine Steckeinrichtung zum Zusammenstecken der Wellenwicklungsdrähte bzw. der Einzelmatten durch eine Bewegung derselben zueinander in einer quer zu deren Längsrichtung verlaufenden Richtung.

Es ist bevorzugt, dass die Bereitstelleinrichtung eine Wellenwicklungsdrahtherstelleinrichtung zum Biegen der Wellenabschnitte aus einem Draht und/oder eine Wellenkopfformeinrichtung zum Formen der Wellenköpfe aufweist.

Es ist bevorzugt, dass die Wellenkopfformeinrichtung mehrere Biegebacken mit Biegeradien zum Formen der Höhenversätze aufweist.

Es ist bevorzugt, dass die Vorrichtung eine Steuerung hat, die dazu eingerichtet ist, die Vorrichtung zum Durchführen der Schritte des Verfahrens nach einer der voranstehenden Ausgestaltungen zu steuern.

Gemäß einem weiteren Aspekt schafft die Erfindung ein Computerprogrammprodukt oder Computerprogramm, umfassend maschinenlesbare Steueranweisungen, die, wenn in einen Rechner der Steuerung geladen, die Vorrichtung zum Durchführen der Schritte des Verfahrens nach einer der voranstehenden Ausgestaltungen veranlassen.

Vorzugsweise werden die Wellenwicklungsdrähte mit einem Verfahren und/oder einer Vorrichtung hergestellt und somit durch die Bereitstelleinrichtung bereitgestellt, wie sie in der deutschen Patentanmeldung 10 2017 127 634.3 beschrieben und gezeigt ist.

Besondere Ausgestaltungen der Erfindung betreffen eine steckbare Wellenwickelmatte. Auch werden Verfahren und Vorrichtungen zum Herstellen einer solchen beschrieben.

Vorzugsweise sind die Wellenwicklungsdrähte aus einem Profildraht mit einem von einem runden Querschnitt abweichenden Profilform, insbesondere einem Rechteckprofil, gebildet. Eine Rechteckprofilform hat Vorteile, da das Volumen der Nut optimal mit einem Leiterquerschnitt ausgefüllt hat. Die hier beschriebenen Matten und Verfahren sind besonders für solche Profildrähte geeignet, da die Profildrähte nicht tordiert werden und somit die Belastung auf die Drähte und deren Isolierungen gering ist. Dies führt zu erhöhter Zuverlässigkeit und verringert die Gefahr von Drahtbeschädigungen.

Bei dem Bauteil befinden sich in einer Nut vorzugsweise jeweils Leiter verschiedener Einzelmatten einer Spulenwicklung oder einer Spulenmatte.

Um einen möglichst hohen (optimalen) Wirkungsgrad in einer E-Maschine zu erhalten muss die Spulenwicklung verschiedene Eigenschaften erfüllen. Ein im Stand der Technik bestehendes Problem ist, dass die Spulenmatte bei Erfüllung solcher Kriterien (z.B. optimales Ausfüllen mit Leitermaterial, optimierte Leiterverläufe) entweder verwoben werden muss oder die Herstellung der Einzeldrähte sehr aufwendig ist. Mit den erfindungsgemäßen Ausgestaltungen ist es jedoch möglich, eine Wickelmatte und/oder Spulenmatte herzustellen, welche aus möglichst gleichen Einzeldrähten, die nicht miteinander verwoben werden müssen, besteht.

Zum Bereitstellen der Wellenwicklungsdrähte wird vorteilhafterweise eine Vorrichtung zur Drahtherstellung vorgesehen, die es ermöglicht einen Wicklungskopf mit drei Biegestellen zu kröpfen. Dabei lässt sich weiter vorteilhafterweise sowohl die Z-Richtung (nach oben oder unten) als auch die Biegehöhe in Z-Richtung aller Biegestellen in jedem Wicklungskopf variieren. Weiter vorteilhafterweise sind Drähte für verschiedene Blechpaketlängen und Shiftmaße herstellbar. Das Shiftmaß bezeichnet den gemittelten Abstand, den ein Draht im Wicklungskopf in X-Richtung überbrückt. Das Shiftmaß kann auch innerhalb eines Drahts variieren.

Vorzugsweise ist hierzu eine Vorrichtung zum Kröpfen von Wellenwicklungsköpfen an einem Wellenwicklungsdraht vorgesehen.

Um aus den einzelnen Wellenwicklungsdrähten eine Wickelmatte herzustellen, wird weiter vorzugsweise ein Drahthandling vorgeschlagen, welches es ermöglicht, die Drähte zu transportieren, stapeln und zu stecken. Im Stand der Technik müssen die Drähte in einer Wickelmatte verwebt oder verflochten werden, um bestimmte Wickelschemas herzustellen; hierbei ist das Drahthandling sehr aufwendig oder teilweise nicht realisierbar, da die Drähte ineinander verdreht werden müssen. Dieser Prozessschritt kann durch das Kreuzstecken ersetzt werden, welches aus reinen Linearbewegungen realisiert werden kann. Das Kreuzstecken ist immer dann einsetzbar, wenn ein Lagenwechsel auf bei beiden Seiten des Blechpakets realisiert werden soll.

Mit bevorzugten Ausgestaltungen der Erfindung lässt sich eine Wickelmatte herstellen, welche sich durch gut automatisierbare Verfahren realisieren lässt und die erforderlichen Anforderungen erfüllt. Außerdem kann der Wicklungskopf so gestaltet sein, dass der gesamte Wicklungskopf eine möglichst geringe radiale Höhe aufweist. In unterschiedlichen Ausführungsformen werden verschiedene Wickelmatten oder Spulenmatten bereitgestellt, welche sich in den elektrischen Eigenschaften und den Herstellungsverfahren unterscheiden. Umso besser die elektrischen Eigenschaften werden, umso höher wird der Fertigungsaufwand, wobei aber auch bei besten elektrischen Eigenschaften immer noch ein erheblich geringerer Aufwand zum Automatisieren der Herstellung wie bei bekannten Verfahren erreichbar ist.

Da das im Stand der Technik vorgeschlagene Verflechten oder Verweben ein sehr aufwendiges Verfahren ist und auch sehr schwer zu automatisieren ist, wird die Wickelmatte gemäß vorteilhaften Ausgestaltungen der Erfindung so realisiert, dass diese durch Stapeln, Stecken und/oder Kreuzstecken hergestellt werden kann, mit teilweise gleichen elektrischen Vorteilen. Besondere Eigenheiten liegen dabei im Verfahren und der daraus resultierenden Kopfgeometrie der Einzeldrähte.

Vorzugsweise erfolgt eine Reihenschaltung der Einzelmatten für den Potentialausgleich. Bei Ausgestaltungen der Erfindung findet kein kontinuierlicher Lagentausch statt, somit ist kein Verweben der Wickelmatte erforderlich.

Bevorzugte Ausgestaltungen der Erfindung haben drei Sprünge in den einzelnen Wicklungsköpfen. Vorzugsweise gibt es Wicklungsköpfe auch auf zwei Ebenen, aber beide Ebenen sind versetzt zu der Ebene der geraden Abschnitte. Dadurch hat die Wickelmatte und auch die daraus gebildete Spulenmatte im Bereich der Wicklungsköpfe eine sehr geringe Ausdehnung in Höhenrichtung (die der radialen Richtung bei aufgewickelter Wickelmatte/Spulenmatte im Bauteil entspricht).

Vorzugsweise weist die radiale Erstreckung einer in n Lagen aufgewickelten Spulenmatte oder Wickelmatte im Bauteil im Bereich der Wicklungsköpfe einen maximalen Wert von (n+1) mal dem Höhenerstreckungsmaß auf.

Vorteilhafterweise bleibt der Draht immer flach und wird nicht tordiert. Dies ist insbesondere bei Profildraht vorteilhaft.

Vorzugsweise werden eine gesteckte Matte und definierte Kopfformen vorgeschlagen. Vorzugsweise werden eine gesteckte Matte und eine Verschaltung für Potentialausgleich vorgeschlagen.

Vorzugsweise sind drei Sprünge im Kopf vorgesehen, der jeweilige Wicklungskopf kann sich auch auf zwei Ebenen befinden, wobei aber beide Ebenen versetzt zur Ebene der geraden Abschnitte sind. Vorzugsweise wird eine 5-7ner Spulenschritt in zwei Ebenen (wenn mit Lagentausch) vorgeschlagen. Vorzugsweise ist eine Wicklung mit 12 Leitern und 6er Spulenschritt im Verschaltbereich vorgesehen. Vorzugsweise ist eine Reihenschaltung der Einzelmatten für Potentialausgleich vorgesehen. Vorteilhaft kann ein Lagentausch und ein 5-7ner Spulenschritt vorgesehen sein, wobei die Wickelmatte außerdem nicht verwebt ist.

Das Stecken anstatt des Verwebens hat den Vorteil einer einfacheren automatischen Herstellung. Bei entsprechender Kopfform springen die Einzeldrähte beim Stecken an die richtige Stelle und richten sich mit ihren geradlinigen Abschnitten auf einer Ebene aus (außer am Treppensprung, falls vorgesehen). Auch lassen sich die Einzeldrähte wieder einfach auseinander nehmen, falls dies einmal erforderlich sein sollte. Das Stecken kann ohne Belastung der Drähte, insbesondere ohne Tordieren erfolgen.

Ein weiterer Aspekt der Erfindung betrifft ein Kröpfen bei einer Flachwicklung. Insbesondere wird ein Kröpfen in Wicklungsköpfen von als Flachwicklung ausgebildeten Wellenwicklungsdrähten beschrieben.

Vorzugsweise werden die Wicklungsköpfe an einer ersten bis dritten Stelle gebogen, wobei im Bereich jede dieser Biegung auch eine Kröpfung zum Erhalt eines Höhensprungs eingebracht wird. Durch drei Sprungstellen ist ein drahtschonenderes Verfahren geschaffen.

Die Vorrichtung zur Drahtherstellung weist vorzugsweise eine Vorrichtung zum Biegen von Höhenversätzen auf.

Vorzugsweise ist die Vorrichtung zum Biegen von Höhenversätzen derart ausgebildet, dass alle ebenen Drahtabschnitte der Einzeldrähte einzeln einspannbar und einzeln in Z-Richtung verfahrbar sind. Dadurch werden alle Höhenversätze zeitgleich gebogen. Die Sprunghöhe ist hierbei variabel einstellbar.

Um die unterschiedlichen, hier vorgeschlagenen Wicklungskopfformen herzustellen, sind vorzugsweise pro Wicklungskopf zeitgleich drei Einspannungen an drei Spannflächen vorgesehen. Dabei lässt sich weiter vorzugsweise die Einspannkraft oder auch ein gezieltes Spiel einstellen.

Vorzugsweise ist die Vorrichtung zum Biegen von Höhenversätzen derart ausgebildet, dass ein Einzeldraht oder immer mehrere parallele Einzeldrähte zeitgleich biegbar sind.

Um eine Querschnittsänderung auszuschließen, ist der Draht an den Biegestellen zwischen den Spannflächen vorzugsweise frei im Raum. Dadurch kann die theoretische Dehnung der neutralen Faser durch eine Änderung des Radius an der Stelle des Höhenversatzes verhindert werden.

### Kurze Beschreibung der Zeichnungen:

Ausführungsbeispiele der Erfindung werden im Folgenden anhand der beigefügten Zeichnungen näher erläutert. Darin zeigt:
Fig. 1 eine perspektivische Darstellung zweier parallel verlaufender Wellenwicklungsdrähte zum Herstellen einer Wickelmatte;
Fig. 2eine Querschnittsdarstellung durch ein Bauteil einer elektrischen Maschine, insbesondere einen Stator, vorzugsweise eines Elektromotors, wobei eine Spulenwicklung in Nuten eines Gehäuses eingefügt ist, wobei die Spulenwicklung aus einer aus mehreren Wickelmatten gebildeten Spulenmatte gebildet ist;
Fig. 3 eine schematische Darstellung einer ersten Variante einer Spulenmatte oder Wickelmatte, ausgebildet als ebene Matte;
Fig. 4 eine schematische Darstellung vergleichbar zu Fig. 3, einer zweiten Variante einer Spulenmatte oder Wickelmatte, ausgebildet als treppenförmige Matte;
Fig. 5eine Draufsicht auf eine Spulenmatte, in der der radialen Richtung im Bauteil nach Fig. 2 entsprechenden Z-Richtung (Höhenrichtung) gesehen;
Fig, 6 eine Draufsicht auf einen Wicklungskopf der beiden Wellenwicklungsdrähte von Fig. 1;
Fig. 7eine perspektivische Darstellung eines Wicklungskopf der beiden Wellenwicklungsdrähte von Fig. 1 ;Fig. 8 eine Draufsicht auf Spannflächen einer Kröpfvorrichtung zum Biegen der Wicklungskopfform, wie sie in Fig. 6 und 7 dargestellt ist;
Fig. 9 eine Ansicht auf die Kröpfvorrichtung in einer der Umfangsrichtung in dem Bauteil entsprechenden X-Richtung der Wellenwicklungsdrähte (Längsrichtung) gesehen;
Fig. 10 eine perspektivische Darstellung der Kröpfvorrichtung;
Fig. 11 eine perspektivische Gesamtdarstellung einer Wellenwicklungsdraht-Bereitstelleinrichtung, die die Kröpfvorrichtung aufweist;
Fig. 12 eine Draufsicht in einer der späteren radialen Richtung in dem Bauteil entsprechenden Z-Richtung der Wellenwicklungsdrähte gesehen auf Spann- und Biegeeinheiten der Kröpfvorrichtung;
Fig. 13 eine perspektivische Ansicht einer Biegebacke einer der Spanneinheiten;
Fig. 14ein Ablaufdiagramm eines Kröpfverfahrens zum Kröpfen der Wicklungsköpfe; d.h. zum Einbringen von Höhenversätzen in die Wicklungsköpfe;
Fig. 15a bis 15f Schnittdarstellungen durch eine Halbwellenform eines der Wellenwicklungsdrähte in einer der späteren axialen Richtung in dem Bauteil entsprechenden y-Richtung (Querrichtung) gesehen, die entsprechende Höhenversätze in Z-Richtung einer ersten bis sechsten Wicklungskopfform zeigen;
Fig. 16 bis 18Draufsichten auf einen ersten und einen zweiten Wellenwicklungsdraht bei verschiedenen Stadien eines Steckens der Wellenwicklungsdrähte im Verlauf einer Herstellung einer Wickelmatte;
Fig. 19 und 20 Draufsichten auf eine Anordnung von Wellenwicklungsdrähten bei verschiedenen Stadien eines Steckens zum Herstellen der Wickelmatte;
Fig. 21 eine perspektivische Darstellung einer Anordnung von Wellenwicklungsdrähten zum Verdeutlichen eines paarweisen Steckens;
Fig. 22eine erste und eine zweite Wickelmatte, die als Einzelmatten zu einer Spulenmatte zusammengesteckt werden, in einem ersten Stadium eines Spulenmattenherstellverfahrens;
Fig. 23 bis 24perspektivische Ansichten der ersten und der zweiten Wickelmatte während verschiedener Phasen des Spulenmattenherstellverfahrens;
Fig. 25a bis 25d Draufsichten auf zwei Paare von Wellenwicklungsdrähten während unterschiedlicher Phasen einer Variante des Steckverfahrens zum Herstellen einer Wickelmatte - Kreuzstecken;
Fig. 26eine schematische Darstellung einer ersten Ausführungsform einer Spulenmatte mit Drahtverläufen, sowie einer ersten Einzelmatte und einer zweiten Einzelmatte dieser Spulenmatte mit den in den Einzelmatten vorgesehenen Wicklungskopfformen;
Fig. 27 eine schematische Darstellung einer zweiten Ausführungsform einer Spulenmatte mit Drahtverläufen, sowie einer ersten Einzelmatte und einer zweiten Einzelmatte dieser Spulenmatte mit den in den Einzelmatten vorgesehenen Wicklungskopfformen;
Fig. 28eine schematische Darstellung einer dritten Ausführungsform einer Spulenmatte mit Drahtverläufen, sowie einer ersten Einzelmatte und einer zweiten Einzelmatte dieser Spulenmatte mit den in den Einzelmatten vorgesehenen Wicklungskopfformen;
Fig. 29eine Darstellung eines Endbereichs eines Wellenwicklungsdrahtes der Spulenmatte mit angedeuteten Varianten von Drahtabgängen;
Fig. 30eine erste perspektivische Ansicht einer aus einer Spulenmatte mit gleichmäßigem Spulenschritt gebildeten verschaltete Spulenwicklung;
Fig. 31eine Fig. 30 entsprechende perspektivische Ansicht einer aus einer Spulenmatte mit wechselndem Spulenschritt gebildeten verschalteten Spulenwicklung;
Fig. 32 eine zweite perspektivische Ansicht der aus der Spulenmatte mit gleichmäßigem Spulenschritt gebildeten verschalteten Spulenwicklung;
Fig. 33 eine Fig. 32 entsprechende zweite perspektivische Ansicht der aus der Spulenmatte mit wechselndem Spulenschritt gebildeten verschalteten Spulenwicklung;
Fig. 34 eine vereinfachte Darstellung eines Segments eines z.B. als Stator ausgebildeten Bauteils einer elektrischen Maschine mit einem mit Nuten versehenen Gehäuse zur Begriffsklärung, wobei eine in den Nuten eingefügte Spulenwicklung als Einschichtwicklung ausgebildet ist; und
Fig. 35eine Darstellung vergleichbar zu Fig. 34 des Gehäuses des Bauteils zur Begriffsklärung, wobei die Spulenwicklung als Zweischichtwicklung mit einem Sprung in den Wicklungsköpfen dargestellt ist.

### Beschreibung bevorzugter Ausführungsbeispiele der Erfindung:

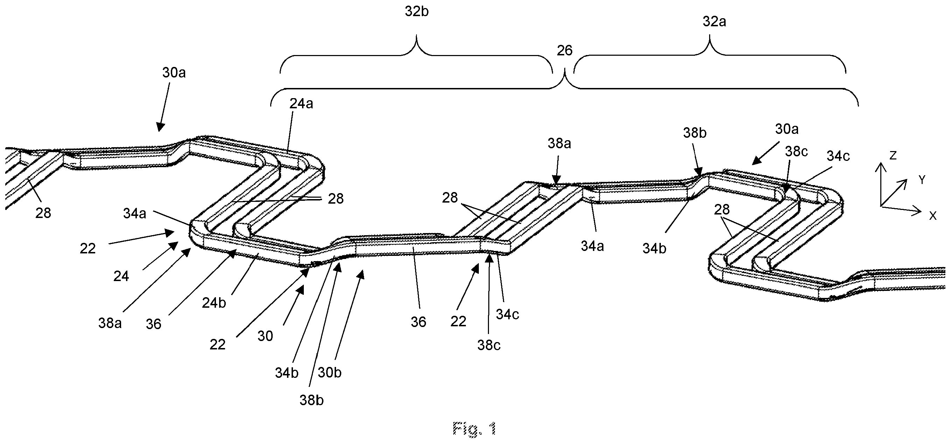

In Fig. 1 ist ein Teilabschnitt eines Paares von Wellenwicklungsdrähten 24, 24a, 24b in perspektiver Ansicht dargestellte, aus denen sich eine Wickelmatte zum Bilden einer Spulenwicklung 20 zusammensetzen lässt. In Fig. 1 ist insbesondere ein Wellenabschnitt 26 des Paares Wellenwicklungsdrähte 24, 24a, 24b dargestellt. Jeder Wellenwicklungsdraht 24 erstreckt sich in seine in Fig. 1 in X-Richtung weisende Längsrichtung und weist eine Reihe von in dieser Längsrichtung beabstandete geradlinige Drahtabschnitte 28 auf, die sich in einer Querrichtung - Y-Richtung - erstrecken, wobei benachbarte geradlinige Drahtabschnitte 28 durch einen Wicklungskopf 30 miteinander verbunden sind.

Die geradlinigen Drahtabschnitte 28 dienen dazu, in die Nuten 16 eines Bauteiles 12, wie beispielsweise eines Stators 14 eingesetzt zu werden. Die Länge des geradlinigen Drahtabschnitts 28 entspricht somit im Wesentlichen der axialen Baulänge des beispielsweise aus einem Blechpaket gebildeten Gehäuses 10.

Demnach entspricht die Y-Richtung - Querrichtung - im späteren bestimmungsgemäßen Gebrauch einer aus den Wellenwicklungsdrähten 24 gebildeten Spulenwicklung 20 der axialen Richtung in dem Bauteil 12; die Längsrichtung - X-Richtung - entspricht der Umfangsrichtung in dem Bauteil 12, und die hier als Höhenrichtung bezeichnende Z-Richtung entspricht im bestimmungsgemäßen Gebrauch der aus den Wellenwicklungsdrähten 24 gebildeten Spulenwicklung 20 der radialen Richtung.

Die Wellenwicklungsdrähte 24 sind als Flachwicklung und wellenförmig ausgebildet, wobei ein erster Wicklungskopf 30a, der in eine erste Biegerichtung gebogen ist, und ein zweiter Wicklungskopf 30d, der eine entgegensetzte zweite Biegerichtung aufweist, in Längsrichtung des Wellenwicklungsdrahtes 24 jeweils alternierend vorgesehen sind. Somit ist an einem Ende eines geradlinigen Drahtabschnittes 28 der erste Wicklungskopf 30a und dann am zweiten Ende geradlinigen Drahtabschnittes der zweite Wicklungskopf 30b vorgesehen. Ein geradliniger Drahtabschnitt 28 und ein erster Wicklungskopf 30a bilden einen ersten Halbwellenabschnitt 32a und ein weiterer geradliniger Drahtabschnitt 28 und ein zweiter Wicklungskopf 30a bilden einen zweiten Halbwellenabschnitt 32b, wobei ein Wellenabschnitt 26 aus einem ersten Halbwellenabschnitt 32a und einem zweiten Halbwellenabschnitt 32b gebildet ist. Der Abstand benachbarter geradliniger Drahtabschnitte 28 eines Wellenwicklungsdrahtes 24, welche jeweils durch einen Wicklungskopf 30 miteinander verbunden sind, entspricht dem Shiftmaß.

Jeder Wicklungskopf 30 ist jeweils an einer ersten Biegestelle 34a, einer zweiten Biegestelle 34b und einer dritten Biegestelle 34c gebogen, wobei die Biegestellen 34a, 34b und 34c voneinander beabstandet und durch Verbindungsabschnitte 36 miteinander verbunden sind. Diese Verbindungsabschnitte 36 sind - bis auf eine hiernach noch näher erläuterte Gegenbiegung - im Wesentlichen geradlinig.

An den Biegestellen 34a, 34b, 34c ist der Wellenwicklungsdraht 24 in der Y-X-Ebene gebogen. Weiter weist dieser Wicklungskopf 30 an jeder der ersten bis dritten Biegestelle 34a, 34b, 34c einen Sprung 22 in der Höhenrichtung auf. Je nach Ausrichtung der Sprünge 22 in den Biegestellen 34a bis 34c ergeben sich unterschiedliche Wicklungskopfformen 1 bis 6, auf die hiernach noch näher eingegangen wird.

Insgesamt ist jeder Wicklungskopf 30 an den drei Biegestellen 34a, 34b, 34c gekröpft, wobei sowohl die Z-Richtung - nach oben oder nach unten - als auch die Biegehöhe in Z-Richtung aller Biegestellen 34a - 34b in jedem Wicklungskopf 30 variieren kann.

Der Sprung 22 in der ersten Biegestelle 34a bildet einen ersten Höhenversatz 38a; der Sprung 22 in der zweiten Biegestelle 34b bildet einen zweiten Höhenversatz 38b; und der Sprung 22 in der dritten Biegestelle 34c bildet einen dritten Höhenversatz 38c.

Die Länge der geradlinigen Drahtabschnitte 28 entspricht im Wesentlichen der Blechpaketlänge in der Axialrichtung des als Blechpaket ausgebildeten Gehäuses 10. Demnach wird die Länge der geradlinigen Drahtabschnitte 28 entsprechend der axialen Baulänge des Gehäuses 10 gewählt; insgesamt werden die Wellenwicklungsdrähte 24 jeweils entsprechend dem Gehäuse 10 mit daran angepassten geradlinigen Drahtabschnitten 28 und daran angepassten Shiftmaß hergestellt. Eine später noch erläuterte Bereitstellvorrichtung zum Bereitstellen der Wellenwicklungsdrähte 24 ist so ausgebildet, dass die Wellenwicklungsdrähte 24 mit für verschiedene Blechpaketlängen und Shiftmaße herstellbar ist. Das Shiftmaß bezeichnet den gemittelten Abstand, den ein bei dem Wicklungsdraht 24 in dem Wicklungskopf 30 in X-Richtung - Längsrichtung - überbrückt. Das Shiftmaß kann auch innerhalb eines Wellenwicklungsdraht 24 variieren.

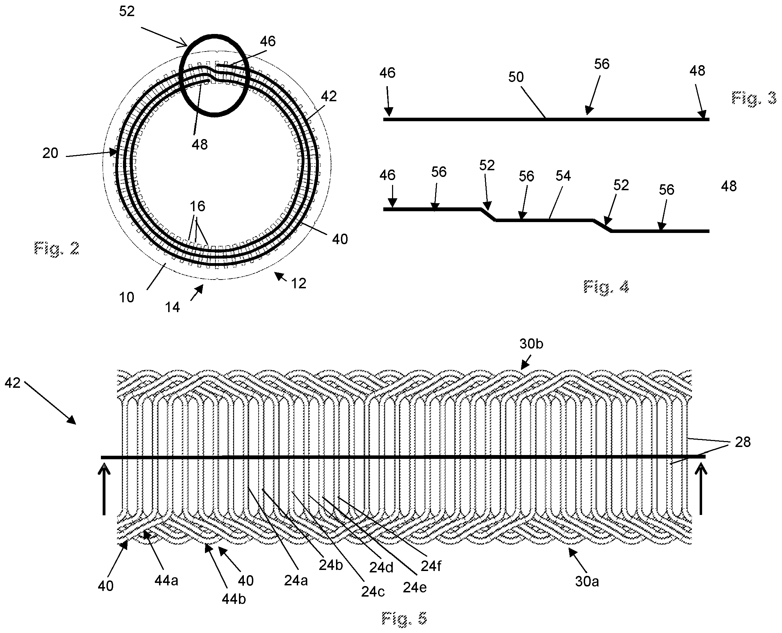

Aus derartigen Wellenwicklungsdrähten 24, wie sie in Fig. 1 dargestellt sind, werden Wickelmatten 40 hergestellt, aus der dann die Spulenwicklung 20 eines Bauteils 12, wie insbesondere eines Stators 14, gebildet werden kann, wie dies in Fig. 2 dargestellt ist.

Fig. 2 zeigt ein beispielsweise aus einem Blechpaket gebildetes Gehäuses 10 eines insbesondere als Stator 14 eines Elektromotors ausgebildeten Bauteils 12, wobei die aus einer oder mehreren Wickelmatten 40 gebildete Spulenwicklung 20 durch Aufwickeln der Wickelmatte 40 in radial nach innen offene Nuten 16 in dem Gehäuse 10 eingefügt sind. Dabei werden die geradlinigen Drahtabschnitte 28 in die Nuten 16 eingefügt, wobei die ersten Wicklungsköpfe 30a an der einen axialen Seite des Gehäuses 10 vorstehen und die zweiten Wicklungsköpfe 30b an der anderen axialen Seite des Gehäuses 10 vorstehen.

Soll eine einschichtige Spulenwicklung 20 gebildet werden, dann lässt sich dies mit einer einzelnen Wickelmatte 40 bewerkstelligen. Zum Bilden einer zweischichtigen Spulenwicklung lässt sich eine Spulenmatte 42 verwenden, welche aus einer ersten Wickelmatte 40 und einer zweiten Wickelmatte 40 als Einzelmatten 44a, 44b zusammengesetzt ist. Eine Wickelmatte 40 besteht aus mehreren einzelnen Wellenwicklungsdrähten 24. Diese werden zu einer ersten Einzelmatte 44a und zu einer zweiten Einzelmatte 44b zusammengesetzt, welche jeweils einlagig aufgebaut sind. Die Einzelmatten 44a, 44b können dann anschließend zu der Spulenmatte 42 zusammengefügt werden, so dass immer ein geradliniger Drahtabschnitt 28 der ersten Einzelmatte 44a und ein geradliniger Drahtabschnitt der zweiten Einzelmatte 44b übereinander liegen. Ausnahmen bildet ein Anfangsbereich 46 und ein Endbereich 48 der Spulenmatte 42.

Wie in Fig. 3 dargestellt, kann die jeweilige Wickelmatte 40 und die daraus gebildete Spulenmatte 42 als ebene Matte 50 ausgebildet sein. Bei einer ebenen Matte 50 befinden sich in jeder Wickelmatte 40 im noch nicht zusammengewickelten Zustand alle geradlinigen Drahtabschnitte 28 auf einer gemeinsamen Ebene, d. h. es gibt keinen Höhenversatz in Z-Richtung zwischen geradlinigen Drahtabschnitten 28 innerhalb einer Wickelmatte 40. Wickelt man eine solche ebene Matte 50 mehrfach auf, um sie in das Bauteil 12 einzufügen, dann ergibt sich in einem Übergangsbereich 52 eine Spannung innerhalb der Wellenwicklungsdrähte 24, da die geradlinigen Drahtabschnitte 28 in diesem Übergangsbereich 52 ihre radiale Lage ändern.

Um diese Spannungen zu vermeiden, kann man, wie dies in Fig. 3 dargestellt ist, auch eine treppenförmige Matte 54 vorsehen, wo an denjenigen Bereichen der treppenförmigen Matte 54, die in dem Übergangsbereich 52 zu liegen kommen, ein Höhenversatz zwischen geradlinigen Drahtabschnitten 28 vorgesehen ist. Bei einer treppenförmigen Matte 54 gibt es somit in den Übergangsbereichen 52 eine Stufe, wobei in den Standardbereichen 56, welche zwischen dem Anfangsbereich 46 und dem Übergangsbereich 52, bzw. zwischen zwei Übergangsbereichen 52 oder zwischen dem Übergangsbereich 52 und dem Endbereich 48 liegen, die geradlinige Drahtabschnitte 28 in jeder Wickelmatte 40 sich bei dem noch nicht aufgewickelten Zustand alle in der gleichen Ebene befinden, d. h. in den Standardbereichen 56 gibt es keinen Höhenversatz zwischen den geradlinigen Drahtabschnitten 28.

Fig. 5 zeigt eine Draufsicht (in Z-Richtung) auf eine Ausführungsform einer Spulenmatte 42, welche aus einer als Wickelmatte 40 ausgebildeten ersten Einzelmatte 44a und einer als Wickelmatte 40 ausgebildeten zweiten Einzelmatte 44b zusammengesetzt ist. Die erste Einzelmatte 44a ist aus drei n₁ einzelnen Wellenwicklungsdrähten 24 hergestellt, und die zweite Einzelmatte 44b ist aus drei n₂ Wellenwicklungsdrähten 24 hergestellt. Dabei sind n₁ und n₂ natürliche Zahlen ≥ 0. In den folgenden dargestellten Ausführungsbeispielen entspricht n₁ = nz = 2. Demensprechend weißt die erste Einzelmatte 44y zum Beispiel sechs Wellenwicklungsdrähte 24 auf, die in den folgenden Tabellen mit aa, ab, ac, ad, ae und af bezeichnet sind. Entsprechend weist auch die zweite Einzelmatte 44b sechs Wellenwicklungsdrähte 24 auf, die in den folgenden Tabellen mit by, bb, bc, bd, be und bf bezeichnet sind.

Jede Wickelmatte 40 lässt sich durch Stapeln STP der Wellenwicklungsdrähte 24 (einfaches Aufeinanderlegen) oder insbesondere durch ein im Folgenden noch näher erläutertes Stecken STK der einzelnen Wellenwicklungsdrähte 24 herstellen. Die Spulenmatte 42 lässt sich durch Stapeln STP der Einzelmatten 44a, 44b, oder durch das im Folgenden näher dargelegte Stecken STK der Einzelmatten 44a, 44b herstellen.

Durch diese im Folgenden näher erläuternden Verfahren lassen sich unterschiedliche Wickelschemata für die Spulenmatte 42 ausbilden, die in den folgenden Tabellen 1 bis 4 aufgezeigt werden. Das jeweilige Wickelschema kann nachvollzogen werden, wenn man die Spulenmatte 42 wie in Fig. 5 angedeutet mittig durchschneidet und dann von der einen Seite aus in X-Richtung betrachtet.

Bei den in den Tabellen 1 bis 4 wiedergegebenen Beispielen für Wickelschemata hat die erste Einzelmatte 44a hat sechs Wellenwicklungsdrähte 24a - 24f, die in den Tabellen mit aa, ab, ac, ad, ae, af bezeichnet sind. Die sechs Wellenwicklungsdrähte 24a bis 24f der zweiten Einzelmatte 44b sind mit bg, bh, bi, bj, bk, bl bezeichnet. Das a oder b in der oberen Zeile jeder Tabelle bezeichnet somit die Lage a oder b (Einzelmatte 44a oder Einzelmatte 44b) und die Buchstaben a bis I unten in jeder Zelle der Tabelle bezeichnet den jeweiligen Wellenwicklungsdraht.

Die Tabelle 1 zeigt dabei die Drahtanordnung in der jeweiligen Nut 16 für eine Spulenmatte 42 ohne Leitertausch und ohne Lagentausch. Bei einer derartigen Spulenmatte 42 ohne Leitertausch und ohne Lagentausch und gleicher Anzahl der Einzeldrähte n₁=n₂ entspricht die Zonenbreite 0,5*n₁ = 0,5*n₂ und somit der halben Anzahl der Einzeldrähte. Bei einer derartigen Spulenmatte 42 ohne Leitertausch und ohne Lagentausch wird eine ebene Matte 50 durch einfaches Stapeln hergestellt. Soll eine treppenförmige Matte 54 hergestellt werden, dann werden die einzelnen Wellenwicklungsdrähte 24 in den Einzelmatten 44a, 44b gesteckt. Das Herstellen der Einzelmatten 44a, 44b erfolgt demnach durch Stecken.

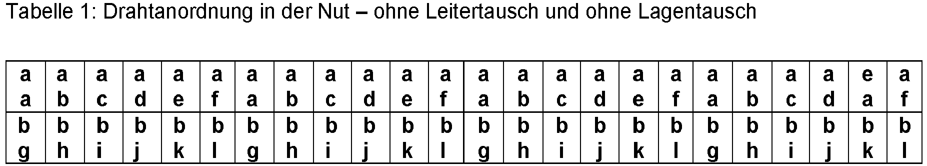

In der folgenden Tabelle 2 ist ein Wickelschema für eine Spulenmatte 42 mit Leitertausch und ohne Lagentausch erläutert.

Bei der Spulenmatte 42 mit Leitertausch und ohne Lagentausch entspricht die Zonenbreite der Anzahl n₁ = n₂ der Einzeldrähte. Eine ebene Matte 50 kann mit diesem Wickelschema durch Stapeln hergestellt werden. Eine treppenförmige Matte 54 mit diesem Wickelschema kann durch Stecken der Einzeldrähte hergestellt werden.

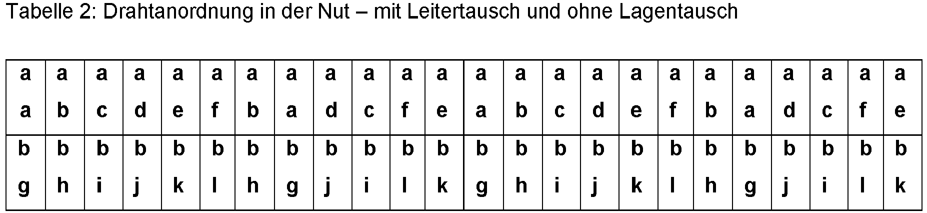

In der folgenden Tabelle 3 wird das Wickelschema einer Spulenmatte 42 ohne Leitertausch und mit Lagentausch dargestellt. Die Zonenbreite einer Spulenmatte 42 mit diesem Wickelschema entspricht der doppelten Anzahl 2n₁ = 2n₂ der Einzeldrähte. Eine ebene Matte 50 ist durch Stecken der Einzelmatten 44a, 44b möglich. Die Herstellung einer treppenförmigen Matte 54 ist durch Stecken der Einzelmatten 44a, 44b und Kreuzstecken der einzelnen Wellenwicklungsdrähte 24 möglich.

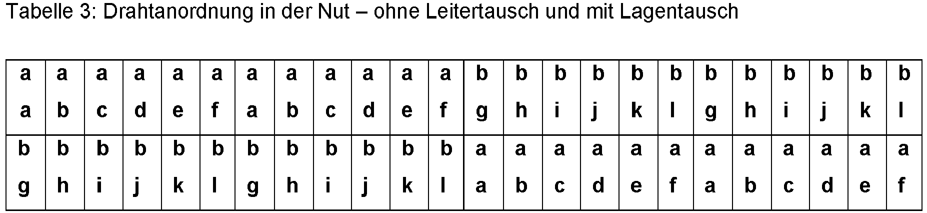

In der folgenden Tabelle 4 ist das Wickelschema einer Spulenmatte 42 mit Leitertausch und mit Lagentausch wiedergegeben. Die Zonenbreite entspricht der doppelten Anzahl 2n₁ = 2nz der einzelnen Wellenwicklungsdrähte 24. Eine ebene Matte 50 lässt sich mit diesem Wickelschema durch Stecken der Einzelmatten 44a, 44b herstellen. Eine treppenförmige Matte 54 lässt sich mit diesem Wickelschema durch Stecken der Einzelmatten 44a, 44b und Kreuzstecken der einzelnen Wellenwicklungsdrähte 24 herstellen.

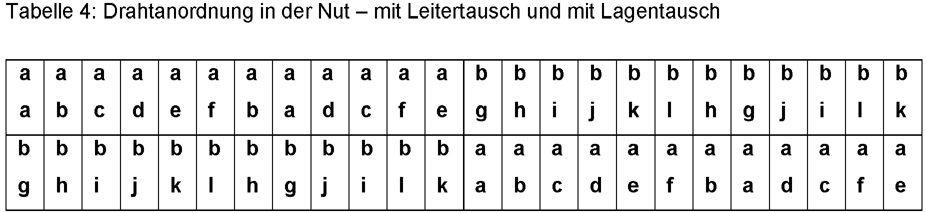

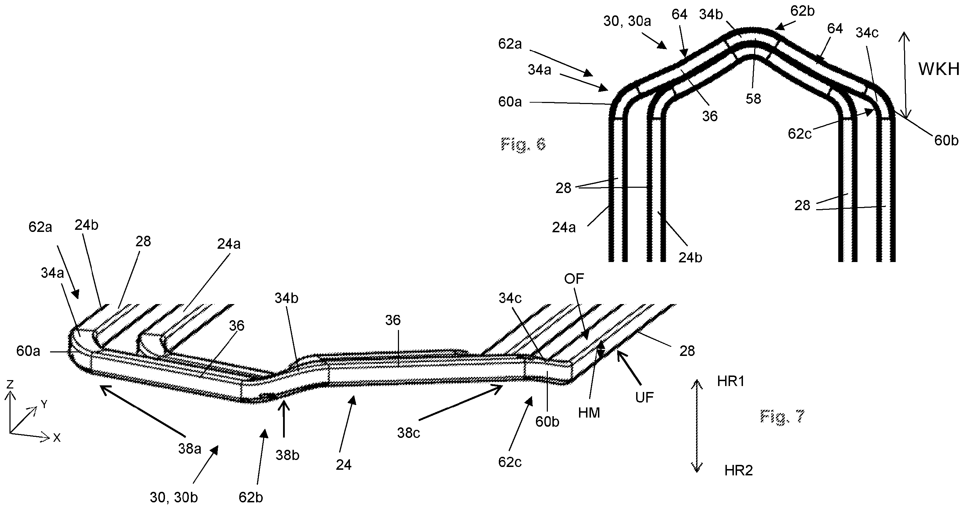

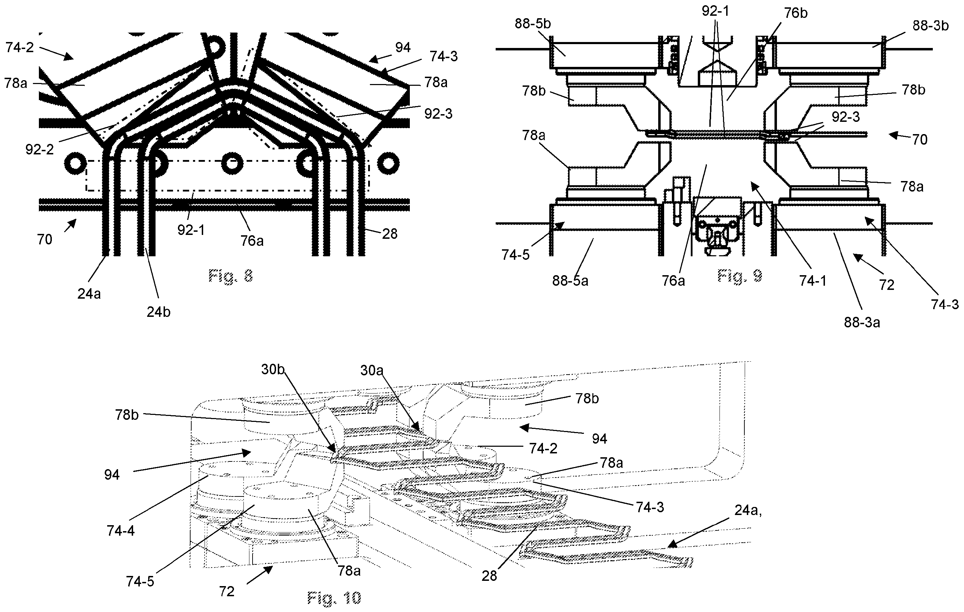

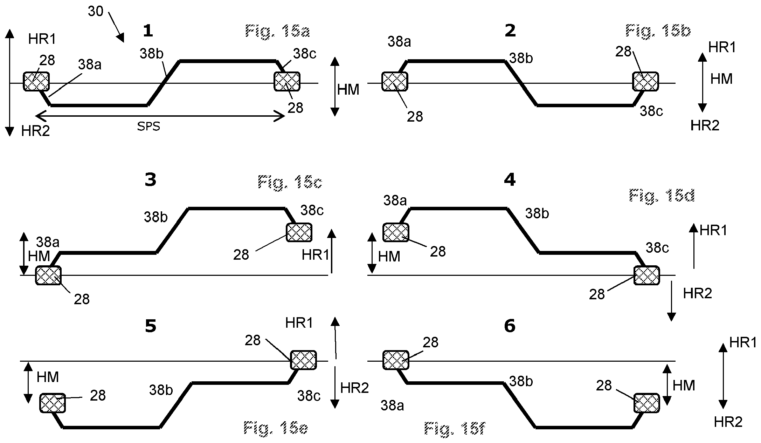

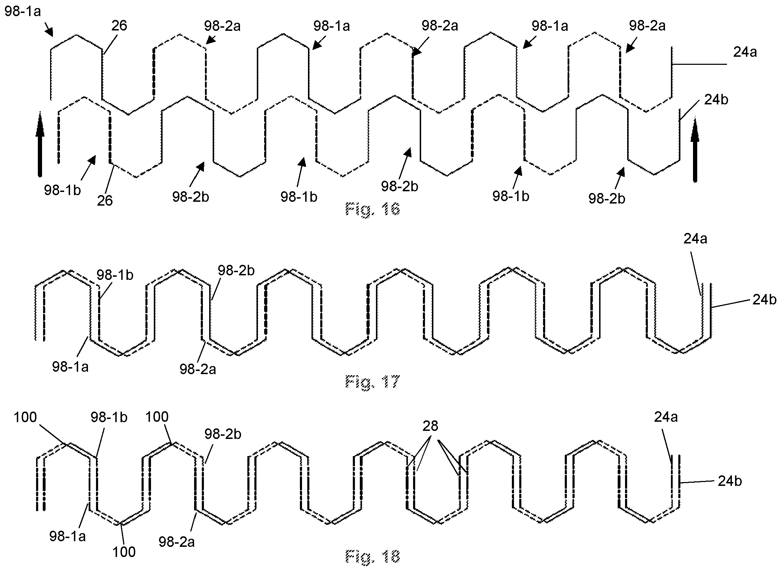

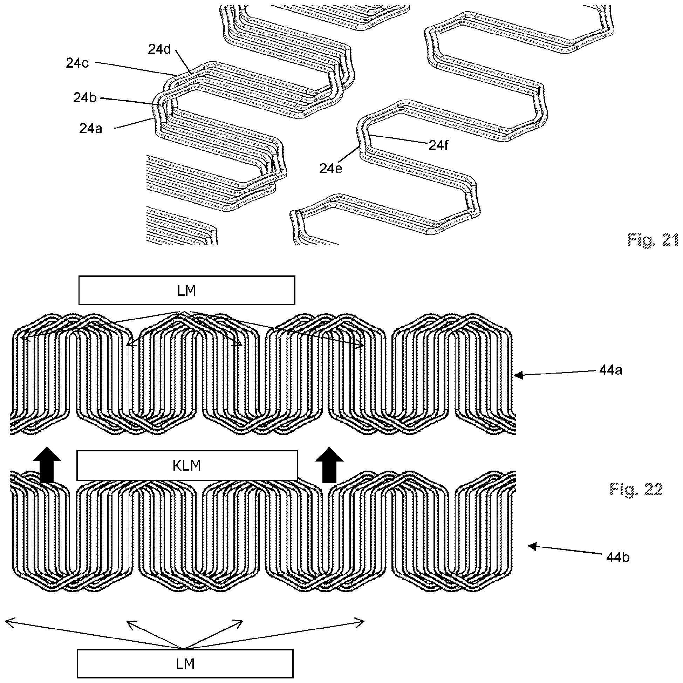

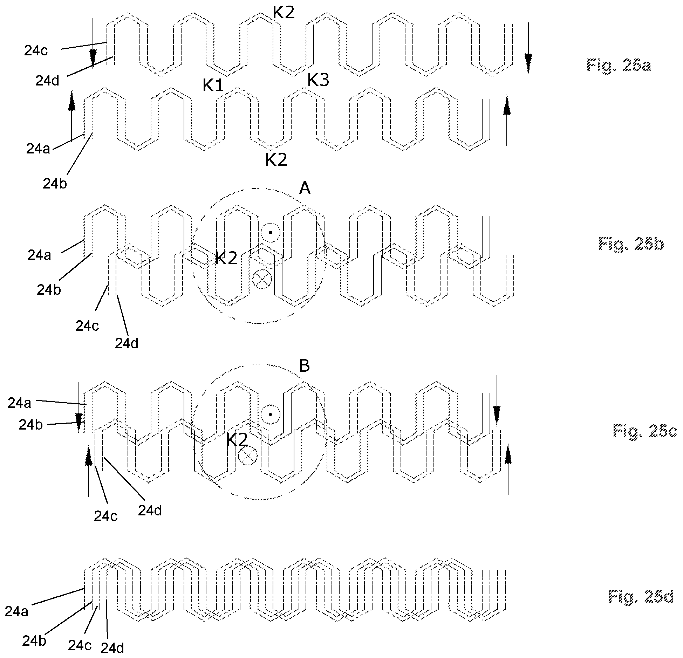

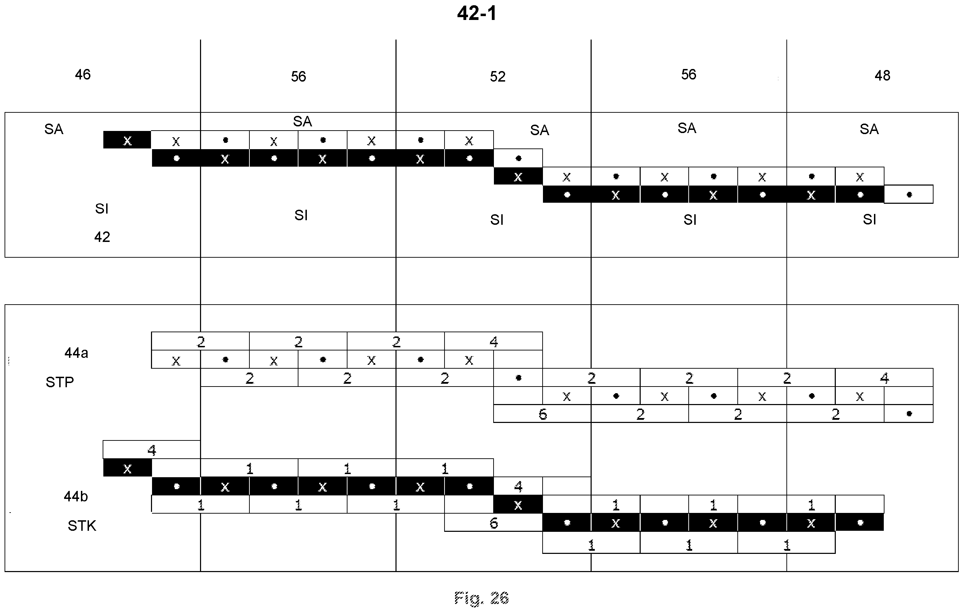

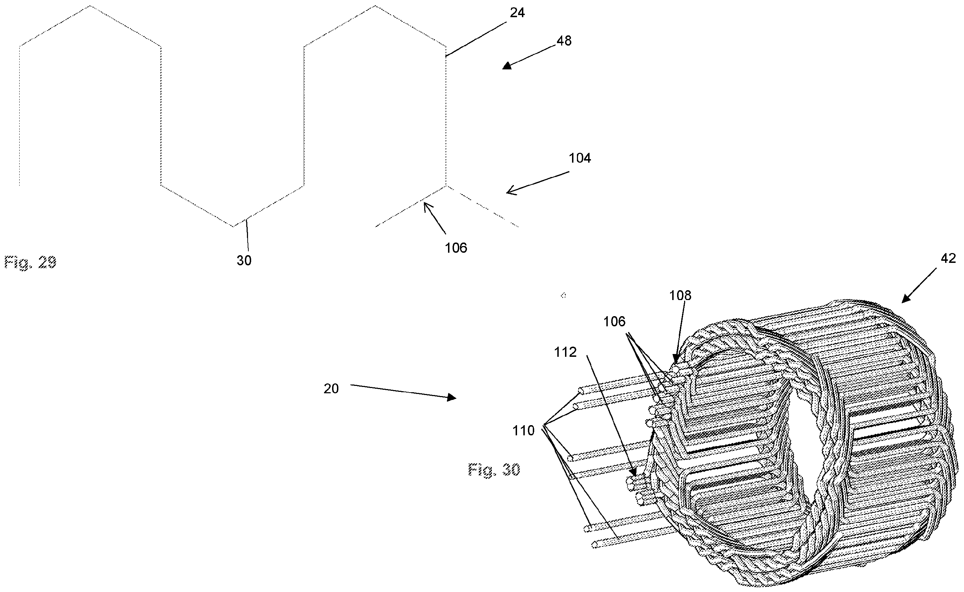

Im Folgenden werden die Verfahren zur Herstellung der Spulenmatten 42 gemäß den eben erläuterten Wickelschemata näher erläutert. Dabei wird zunächst unter Bezug auf die Figuren 6 und 7 auf die Ausgestaltung der einzelnen Wellenwicklungsdrähte 24 näher eingegangen, dann anhand der Figuren 8 bis 14 eine Vorrichtung und ein Verfahren zum Bereitstellen derartiger Wellenwicklungsdrähte erläutert und dann anhand der Figuren 15a bis 15f unterschiedliche mit diesen Vorrichtungen und Verfahren herzustellende Wicklungskopfformen 1 bis 6 dargestellt. Sodann wird anhand der Figuren 16 bis 21 das Herstellen einer eine der Einzelmatten 44a, 44b darstellenden Wickelmatte 40 durch Stecken der Wellenwicklungsdrähte 24 erläutert. Anschließend wird anhand der Figuren 22 bis 24 das Herstellen einer Spulenmatte 42 durch Stecken der Einzelmatten 44a, 44b erläutert. Sodann wird anhand der Figuren 25a bis 25d das Verfahren des Kreuzsteckens erläutert. Die Figuren 26 bis 28 zeigen dann drei konkrete Ausführungsformen der Spulenmatte 42; eine Herstellung der Spulenwicklung 20 und deren Verschaltung wird dann anhand der Figuren 29 bis 33 erläutert.

Fig. 6 zeigt eine Draufsicht auf erste Wicklungsköpfe 30a eines Paares Wellenwicklungsdrähten 24, 24a, 24b und Fig. 7 zeigt eine perspektivische Ansicht von zweiten Wicklungsköpfen 30b des Paares von Wellenwicklungsdrähten 24, 24a, 24b. Der erste Wicklungskopf 30a des ersten Wellenwicklungsdrahtes 24a ist so ausgebildet, dass ein Spulenschritt von 7 erreicht wird, während der erste Wicklungskopf 30a bei dem zweiten Wellenwicklungsdraht 24b für einen Spulenschritt von 5 sorgt. Entsprechend ist bei dem zweiten Wicklungskopf 30b des ersten Wellenwicklungsdrahtes 24a ein Spulenschritt von 5 vorgesehen, während bei dem zweiten Wicklungskopf 30b des zweiten Wellenwicklungsdrahtes 24b ein Spulenschritt von 7 vorgesehen ist. Somit wird jeweils ein Spulenschritt 5- 7 und insgesamt eine Spulenweite von 6 erreicht.

Die Wicklungsköpfe 30 haben an der zweiten Biegestelle 34b eine mittige Dachbiegung 58 und an der ersten Biegestelle 34a und der dritten Biegestelle 34c jeweils eine Übergangsbiegung 60a, 60b. Zwischen der Übergangsbiegung 60a, 60b und der Dachbiegung 58 ist jeweils der Verbindungsabschnitt 36 vorgesehen. Der Bereich der ersten Übergangsbiegung 60a bildet einen ersten Wicklungskopfabschnitt 62a, der Bereich der Dachbiegung 58 bildet einen zweiten Wicklungskopfabschnitt 62b, und der Bereich der zweiten Übergangsbiegung 60b bildet einen dritten Wicklungskopfabschnitt 62c. Jeder Verbindungsabschnitt 36 weist zudem eine Gegenbiegung 64 auf.

Die einzelnen Wellenwicklungsdrähte 24 unterscheiden sich grundsätzlich für alle Varianten von Wickelmatten 40 und auch von Spulenmatten 42 nicht. Sie sind jeweils aus einem Profildraht und insbesondere aus einem Rechteckprofildraht gebildet. Die Z-Höhenversätze 38a, 38b, 38c die hiernach noch näher erläutert werden, können sich in den einzelnen Wellenwicklungsdrähten 24, 24a, 24b unterscheiden. Dabei kann sowohl die Richtung als auch die Höhe des Höhenversatzes 38a, 38b, 38c variieren. Jeder Höhenversatz 38a, 38b, 38c kann in eine erste Höhenrichtung HR1 oder in eine zweite Höhenrichtung HR2 gerichtet sein. Die erste Höhenrichtung HR1 kann sich zum Beispiel in Z-Richtung so erstrecken, dass sie bei bestimmungsgemäßen Gebrauch der Spulenmatte 42 in dem Bauteil 12 der Richtung radial nach außen entspricht; die zweite Höhenrichtung HR2 ist entgegensetzt zu der ersten Höhenrichtung HR1 gerichtet und kann sich beispielsweise in Z-Richtung so erstrecken, dass sie im bestimmungsgemäßen Gebrauch der Spulenmatte 42 in dem Bauteil 12 der Richtung radial nach innen entspricht. Der Betrag der Höhe der Höhenversätze 38a, 38b, 38c ist insbesondere ein halbes oder ein ganzes Höhenerstreckungsmaß HM. Das Höhenerstreckungsmaß HM entspricht der Erstreckung jedes geradlinigen Drahtabschnittes 28 in Z-Richtung (Höhenrichtung) zuzüglich einem vorbestimmten Toleranzwert. Der Toleranzwert berücksichtigt Spiel/Luft zwischen benachbarten Drähten sowie eventuell sonstige aus konstruktiven Gründen gewählte Abstände.

Hinsichtlich der Wickelkopfform, die sich durch die jeweilige Richtung und die jeweilige Höhe der Höhenversätze 38a, 38b, 38c in dem Wicklungskopf 30 charakterisieren lässt, kann sich dabei jeder Wellenwicklungsdraht 24 innerhalb einer Spulenmatte 42 und einer Wickelmatte 40 unterscheiden. Jeder einzelne Wellenwicklungsdraht 24 kann an verschiedenen Wicklungsköpfen 30 auch unterschiedliche Wicklungskopfformen aufweisen.

Der Wicklungskopf 30 der Wellenwicklungsdrähte 24 weist, wie oben erläutert, eine Dachform mit einer leichten Gegenbiegung 64 auf. An den drei Biegestellen 34a, 34b, 34c sind die Höhenversätze 38a, 38b, 38c in den Wellenwicklungsdraht 24 gebogen. Die Fig. 15a bis 15f zeigen, dass sich diese in Höhe und Richtung unterscheiden. Durch die Gegenbiegung 64 kann mehr Platz für das Biegen der Höhenversätze 38a, 38b, 38c erreicht werden, ohne dass die Wickelkopfhöhe WKH (Erstreckung des Wicklungskopfes 30 in Y-Richtung) zunimmt. Außerdem ist kein Wellenwicklungsdraht 24 zu irgendeinem Zeitpunkt verdreht. Die Ausrichtung der oberen Fläche OF und der unteren Fläche UF bleibt entlang der neutralen Faser gleich.

Im Folgenden wird anhand der Fig. 8 bis 14 eine Wellenwicklungsdraht-Bereitstelleinrichtung 66 zum Bereitstellen der Wellenwicklungsdrähte 24, 24a, 24b näher erläutert. Die Wellenwicklungsdraht-Bereitstelleinrichtung 66 weist eine Wellenwicklungsdrahtherstelleinrichtung 68 und eine Wicklungskopfformeinrichtung 70 zum Formen der Wicklungsköpfe 30, 30a, 30b auf.

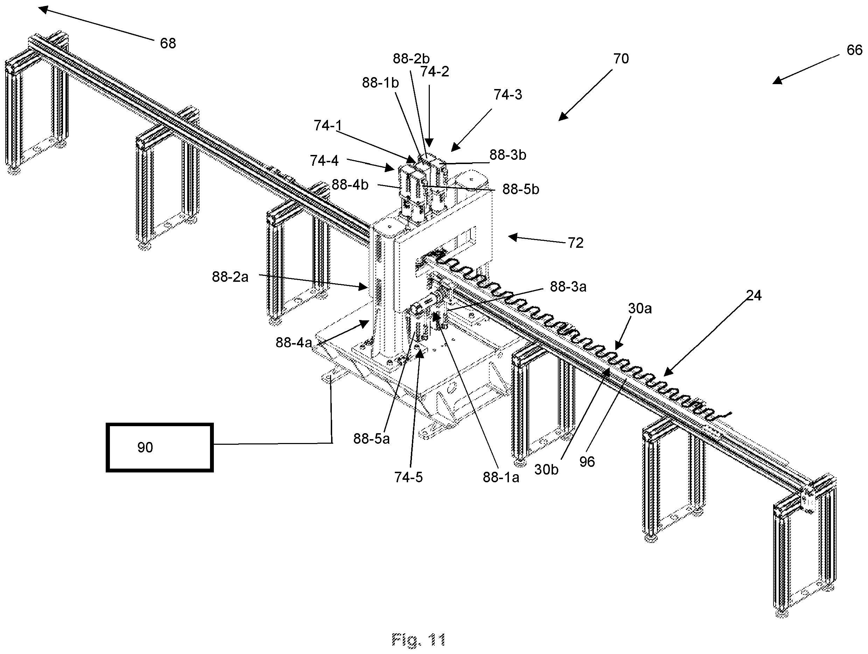

Die Wellenwicklungsdrahtherstelleinrichtung 68 ist in Fig. 11 nur durch einen Pfeil angedeutet und nicht näher dargestellt. Die Wellenwicklungsdrahtherstelleinrichtung 68 ist so ausgebildet, wie dies in der deutschen Patentanmeldung DE 10 2017 127 634.3, auf die für weitere Einzelheiten ausdrücklich verwiesen wird, beschrieben und gezeigt ist. Demnach werden die Wellenwicklungsdrähte 24, 24a, 24b als Flachwicklung in einer Ebene hergestellt, wobei in den Wicklungsköpfen 30, 30a, 30b an den Biegestellen 34a, 34b, 34c die Übergangsbiegungen 60a, 60b und die Dachbiegung 58 sowie die Gegenbiegungen 64 gebogen werden. Dieses Biegen erfolgt mit entsprechend ausgewählten Biegeelementen so, dass die Wicklungsköpfe 30, 30a, 30b die jeweils gewünschten Shiftmaße und somit Spulenschritte zwischen den geradlinigen Drahtabschnitten 28 zuzüglich einem Betrag in X-Richtung bereitstellen, der der Veränderung der Ausdehnung des Wicklungskopfes 30 in X-Richtung bei Einbringen der Höhenversätze 38a, 38b, 38c entspricht. In diesem noch ebenen Zustand werden die Wellenwicklungsdrähte 24, 24a, 24b einzeln oder wie in dem dargestellten Ausführungsbeispiel als Gruppe, insbesondere als Paar von Wellenwicklungsdrähten 24a, 24b der Wicklungskopfformeinrichtung 70 zugeführt.

Die Wicklungskopfformeinrichtung 70 weist eine in den Fig. 8 bis 10 und 12 gezeigte Spanneinrichtung 72 mit einer ersten bis fünften Spanneinheit 74-1, 74-2, 74-3, 74-4, 74-5 auf.

Die erste Spanneinheit 74-1 ist eine zentrale Spanneinheit zum Festhalten der geradlinigen Drahtabschnitte 28, zwischen denen diejenigen Wicklungsköpfe 30, 30a, 30b liegen, die in der Wicklungskopfformeinrichtung 70 mit den Höhenversätzen 38a, 38b, 38c zu versehen sind. Bei der dargestellten Ausführungsform können der erste und der zweite Wicklungskopf 30a, 30b eines Wellenabschnitts 26 gleichzeitig geformt werden. Hierzu weist die erste Spanneinheit 74-1 einen ersten Spannbacken 76a und einen zweiten Spannbacken 76b auf, die zum gleichzeitigen Einspannen und Festhalten von jeweils drei benachbarten geradlinigen Drahtabschnitten 28 der gleichzeitig zu formenden Wellenwicklungsdrahte 24a, 24b ausgebildet sind. Hierzu weisen die Spannbacken 76a, 76b ebene Spannflächen 92-1 auf, die gegen die obere Fläche OF bzw. die untere Fläche UF der geradlinigen Drahtabschnitte 28 gepresst werden und so die geradlinigen Drahtabschnitte 28 auf einer Ebene festhalten.

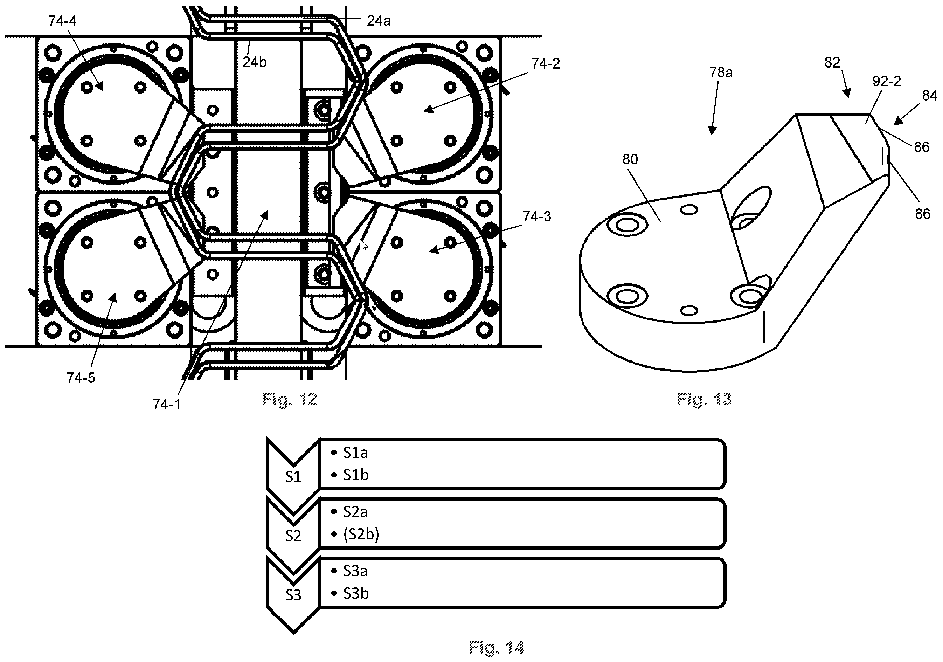

Die zweite bis fünfte Spanneinheit 74-2, 74-3, 74-4, 74-5 weist jeweils eine erste Biegebacke 78a und eine zweite Biegebacke 78b auf, von denen eine einzeln in Fig. 13 dargestellt ist. Jede Biegebacke 78a, 78b weist einen Befestigungsabschnitt 80 und einen Formabschnitt 82 auf. An dem an einem Ausleger ausgebildeten Formabschnitt 82 sind ebene Spannflächen 92-2 und 92-3 zum Einspannen der Verbindungsabschnitte 36 und Biegeformen 84 mit Biegeradien 86 vorgesehen, um so die Biegestellen 34a, 34b, 34c sanft zu formen, d.h. mit den Höhenversätzen 38a, 38b, 38c zu versehen. Hierdurch erfolgt ein Kröpfen des Drahtes an den Biegestellen 38a, 38b, 38c. Die Wellenkopfformeinrichtung 70 ist somit als Kröpfvorrichtung ausgebildet.

Jede Spannbacke 76a, 76b und jede Biegebacke 78a, 78b jeder der Spanneinheiten 74-1, 74-2, 74-3, 74-4, 74-5 ist mit einem eigenen Aktor 88-1a, 88-1b, 88-2a, 88-2b, 88-3a, 88-3b, 88-4a, 88-4b, 88-5a, 88-5b in Z-Richtung bewegbar. Jeder Aktor 88-1a, 88-1b, 88-2a, 88-2b, 88-3a, 88-3b, 88-4a, 88-4b, 88-5a, 88-5b ist individuell durch eine Steuerung 90 ansteuerbar. In der Steuerung 90 sind Bewegungsmuster für die Aktoren 88-1a, 88-1b, 88-2a, 88-2b, 88-3a, 88-3b, 88-4a, 88-4b, 88-5a, 88-5b zum Formen jeweils einer von sechs Wicklungskopfformen 1, 2, 3, 4, 5, 6 (dargestellt in Fig. 15a bis 15f) abgelegt. Welche Wicklungskopfform 1, 2, 3, 4, 5, 6 jeweils zu formen ist, ergibt sich aus dem gewählten Wicklungsschema und wird weiter unten noch näher anhand von drei Ausführungsbeispielen 42-1, 42-2, 42-3 für die Spulenmatte 42 erläutert, die in den Fig. 26-28 dargestellt sind.

Die in den Fig. 8 bis 13 dargestellte Wicklungskopfformvorrichtung 70 ist eine Vorrichtung zum Biegen der Höhenversätze 38a, 38b, 38c. Eine Funktion der Wicklungskopfformvorrichtung 70 liegt darin, einzelne Abschnitte 28, 62a, 62c der einzelnen Wellenwicklungsdrähte 24a, 24b einzeln einzuspannen und einzeln in Z-Richtung verfahren zu können. Dadurch werden alle Höhenversätze 38a, 38b, 38c zeitgleich gebogen. Die Sprunghöhe ist hierbei variabel einzustellen. Um alle im Folgenden noch erläuterten möglichen Wicklungskopfformen 1 bis 6 abzudecken, sind pro Wicklungskopf 30, 30a, 30b zeitgleich drei Einspannungen an den drei Spannflächen 92-1, 92-2, 92-3 - insbesondere an den geradlinigen Drahtabschnitten 28, dem ersten Wicklungskopfabschnitt 62a und dem dritten Wickelungskopfabschnitt 62c - vorgesehen. Dabei lässt sich die Einspannkraft oder auch ein gezieltes Spiel einstellen.

In Fig. 8 ist am Beispiel der Formung des ersten Wicklungskopfes 30a eine Anordnung einer ersten Spannfläche 92-1, einer zweiten Spannfläche 92-2 und einer dritten Spannfläche 92-3 zu sehen. Die erste Spannfläche 92-1 ist an einer der Spannbacken 76a, 76b der ersten Spanneinheit 74-1 angeordnet, die zweite Spannfläche 92-2 ist an einer Biegebacke 78a, 78b der zweiten Spanneinheit 74-2 angeordnet, und die dritte Spannfläche 92-3 ist an einer Biegebacke 78a, 78b der dritten Spanneinheit 74-3 angeordnet. Man erkennt, dass es möglich ist, einen oder immer mehrere parallele Wellenwicklungsdrähte 24a, 24b zeitgleich zu biegen.

Um eine Querschnittsänderung zu vermeiden, ist der Draht an den Biegestellen 34a, 34b, 34c zwischen den Spannflächen 92-1, 92-2, 92-3 frei im Raum. Dadurch kann die theoretische Dehnung der neutralen Faser durch eine Änderung des Radius an der Stelle des Höhenversatzes 38a, 38b, 38c verhindert werden.

Ein Wicklungskopf 30, 30a, 30b wird jeweils durch eine Biegeeinheit 86 geformt. Jede Biegeeinheit 86 weist zwei gegenüberliegende Linearaktuatoren - z.B. die Aktoren 88-2a, 88-2b, 88-3a und 88-3b für das Formen des ersten Wicklungskopfes 30a - mit gespiegelten Spannbacken - z.B. für das Formen des ersten Wicklungskopfes 30a die erste Biegebacke 78a der zweiten Spanneinheit 74-2 und die erste Biegebacke 78a der dritten Spanneinheit 74-3 sowie die zweite Biegebacke 78b der zweiten Spanneinheit 74-2 und die zweiten Biegebacke 78b der dritten Spanneinheit 74-3 - auf, wie dies in den Fig. 9 und 10 dargestellt ist.

Zum Biegen eines Wicklungskopfes 30a sind also immer nur drei Spanneinheiten 74-1, 74-2, 74-3 zeitgleich im Einsatz. Nach jedem Biegevorgang wird der Wellenwicklungsdraht oder, wie hier, die Gruppe Wicklungsdrähte 24a, 24b auf einem Schlitten 88 um einen Wicklungskopf weiter getaktet. Bei Ausgestaltungen der Wickelkopfformeinrichtung 70 mit entsprechend mehreren nebeneinander angeordneten Biegeeinheiten 86 können beliebig viele Wicklungsköpfe 30, 30a, 30b zeitgleich geformt werden, bis hin zum zeitgleichen Biegen aller Wicklungsköpfe 30.

In Fig. 13 ist die Ausgestaltung der Biegebacken 78a, 78b der zweiten bis fünften Spanneinheit 74-2 bis 74-5 am Beispiel der ersten Biegebacke 78a der zweiten Spanneinheit 74-2 dargestellt. Die Biegebacke 78a weist eine ebene Spannfläche - hier z.B. die zweite Spannfläche 92-2 - auf, mit welcher der Draht geklemmt wird. Außerdem besitzt die Biegebacke 78a an den Kanten, welche den Draht kreuzen, Biegeradien 86 zum Kröpfen der Höhenversätze 38a, 38b, 38c. In Fig. 13 ist eine der Biegebacken 78a mit Spannfläche 92-2 und zwei Biegeradien 86 zu sehen.

Die Fig. 11 und 12 zeigen, wie der grundsätzliche Aufbau der Wicklungskopfformeinrichtung 70 zum Biegen der Höhenversätze in den Wicklungsköpfen aussehen kann. Hierbei sind fünf Spanneinheiten 74-1, 74-2, 74-3, 74-4, 74-5 so angeordnet, dass jeweils zwei Spanneinheiten 74-2, 74-3 und 74-4, 74-5 auf jeder Seite den ersten Wicklungskopf 30a bzw. den zweiten Wicklungskopf 30b biegen und eine Spanneinheit 74-1 mittig zum Niederhalten der geradlinigen Drahtabschnitte dient.

In Fig. 14 ist der Ablaufplan für das Einbringen der Höhenversätze 38a, 38b, 38c in den ersten und zweiten Wicklungskopf 30a, 30b eines Wellenabschnitts 26 der Wellenwicklungsdrähte 24a, 24b mit der in den Fig. 11 und 12 gezeigten Wicklungskopfformeinrichtung 70 dargestellt. Zum Beispiel werden die Höhenversätze 38a, 38b, 38c gemäß einer der in den Fig. 15a bis 15f angegebenen Wicklungskopfformen eingebracht. Die Schritte bedeuten bei einem Verfahren zum Einbringen der Höhenversätze gemäß einer ersten in Fig. 15a wiedergegeben Wicklungskopfform 1 oder einer zweiten in Fig. 15b wiedergegbenen Wicklungskopfform 2:
S1 Spannen
   S1a erste Spanneinheit 74-1 spannt geradlinige Drahtabschnitte
   S1b zweite bis fünfte Spanneinheit 74-2 bis 74-5 spannen die ebenen Verbindungsabschnitte 36 bei den Wicklungskopfabschnitten 62a, 62c
S2 Kröpfen
   S2adie Biegebacken 78a, 78b der zweiten bis fünften Spanneinheit 74-2 bis 74-5 verfahren im gespannten Zustand in Z-Richtung, wodurch Höhenversätze 38a, 38b, 38c erzeugt werden
S3 Lösen
   S3a Lösen der ersten Spanneinheit 74-1
   S3b Lösen der zweiten bis fünften Spanneinheit 74-2 bis 74-5

Ein alternativer Ablauf wird bei einem Einbringen von Höhenversätzen 38a, 38b, 38c gemäß einer dritten bis sechsten Wicklungskopfform 3 bis 6 (Fig. 15c bis 15f) durchgeführt. Bei dem alternativen Ablauf bedeuten die Schritte in Fig. 14:
S1 Spannen
   S1a erste Spanneinheit 74-1 spannt geradlinige Drahtabschnitte
   S1b zweite bis fünfte Spanneinheit 74-2 bis 74-5 spannen die ebenen Verbindungsabschnitte 36 bei den Wicklungskopfabschnitten 62a, 62c
S2 Kröpfen
   S2a die Biegebacken 78a, 78b der zweiten bis fünften Spanneinheit 74-2 bis 74-5 verfahren im gespannten Zustand in Z-Richtung, wodurch Höhenversätze 38a, 38b erzeugt werden
   S2b Lösen der ersten Spanneinheit 74-1 und die Biegebacken 78a, 78b der zweiten bis fünften Spanneinheit 74-2 bis 74-5 verfahren in Z-Richtung, wodurch der Höhenversatz 38b erzeugt wird
S3 Lösen
   S3b Lösen der zweiten bis fünften Spanneinheit 74-2 bis 74-5

Demnach ist der in der Alternative angegebene Schritt S2b optional, was durch die Klammern in Fig. 14 angegeben ist. Schritt S3a wird bei der Alternative im Rahmen des Schritts S2b durchgeführt.

Anschließend werden die Wellenwicklungsdrähte 24a, 24b auf dem Schlitten 96 um die Länge eines Wellenabschnitts 26 in der Längsrichtung der Wellenwicklungsdrähte 24a, 24b, d.h. der X-Richtung weiter gefahren, und der in Fig. 14 verdeutlichte Ablauf wird an dem folgenden Wellenabschnitt 26 wiederholt, bis alle Wicklungsköpfe 30, 30a, 30b entsprechend einer Vorgabe geformt sind. Beispiele für derartige Vorgaben werden im Folgenden noch näher erläutert.

Bei dem zuvor erläuterten Biegen der Wicklungsköpfe 30, 30a, 30b werden die Höhenversätze 38a, 38b, 38c so eingeformt, dass eine der in den Fig. 15a bis 15f dargestellten Wicklungskopfformen 1, 2, 3, 4, 5 und 6 entsteht. Die Fig. 15a bis 15f zeigen jeweils schematisch einen Schnitt entsprechend wie bei Fig. 5 durch den entsprechenden Wellenwicklungsdraht 24, wobei die geradlinigen Drahtabschnitte 28 und der dazwischen ausgebildete Wellenwicklungskopf 30 mit den Höhenversätzen 38a, 38b, 38c in Höhenrichtung dargestellt sind.

Um die oben beschriebenen Spulenmatten 42 mit unterschiedlichen Wickelschemata herzustellen, sind bei der in Fig. 15a bis 15f gezeigten Ausgestaltung sechs verschiedene Wicklungskopfformen 1 bis 6 vorgesehen. Fig. 15a bis 15f zeigen die Draufsicht auf verschiedene Wicklungskopfformen 1 bis 6 des Wicklungskopfs 30 (in y-Richtung von Fig. 7). Dabei ist die Blickrichtung so, dass der linke geradlinige Drahtabschnitt 28 beim Verfolgen des Leiters zuerst kommt. Als Beispiel an der ersten Wickelkopfform 1: verfolgt man den Draht, dann geht man zunächst einen Höhenversatz um einen halben Sprung (halbes Höhenerstreckungsmaß HM) radial nach innen (Beispiel für die zweite Höhenrichtung HR2), dann einen ganzen Sprung (ganzes Höhenerstreckungsmaß HM) nach radial außen (Beispiel für erste Höhenrichtung HR1) und anschließend wieder einen halben Sprung (halbes Höhenerstreckungsmaß HM) nach radial innen.

Jeder Wellenwicklungsdraht 24, 24a, 24b weist in den geradlinigen Drahtabschnitten 28 eine Drahtdicke auf, die sich in einer quer zur Längsrichtung (X-Richtung) und quer zur Querrichtung (Y-Richtung) verlaufenden Höhenrichtung (Z-Richtung) gemessen nahezu über das Höhenerstreckungsmaß HM erstreckt, d.h. das Höhenerstreckungsmaß HM entspricht der in Höhenrichtung gemessenen Drahtdicke der geradlinigen Drahtabschnitte 28 zuzüglich einem vorbestimmten Toleranzmaß.

Bei jedem Wicklungskopf 30 erstreckt sich der ersten Höhenversatz 38a über ein halbes Höhenerstreckungsmaß HM und ist an dem ersten Wicklungskopfabschnitt 62a vorgesehen, der sich an den ersten geradlinigen Drahtabschnitt 28a anschließt. Insbesondere ist der erste Höhenversatz 38a in der ersten Übergangsbiegung 60a vorgesehen. Bei jedem Wicklungskopf 30 erstreckt sich weiter der zweite Höhenversatz 38b über ein ganzes Höhenerstreckungsmaß HM und ist an dem zweiten Wicklungskopfabschnitt 62b vorgesehen, der sich an den ersten Wicklungskopfabschnitt 62a anschließt. Insbesondere ist der zweite Höhenversatz 38b in der Dachbiegung 58 vorgesehen. Bei jedem Wicklungskopf 30 erstreckt sich der dritte Höhenversatz 38c über ein halbes Höhenerstreckungsmaß HM und ist an dem dritten Wicklungskopfabschnitt 62c vorgesehen, der sich zwischen dem zweiten Wicklungskopfbereich 62b und einem zweiten geradlinigen Drahtabschnitt 28b erstreckt. Insbesondere ist der dritte Höhenversatz 38c in der zweiten Übergangsbiegung 60b vorgesehen. Demnach ist die Höhe des ersten und des dritten Höhenversatzes 38a, 38c bei allen Wicklungskopfformen 1 bis 6 gleich einem halben Höhenerstreckungsmaß HM und die Höhe des zweiten Höhenversatzes 38b ist bei allen Wicklungskopfformen 1 bis 6 gleich einem ganzen Höhenerstreckungsmaß HM. Unterschiedlich ist jedoch die Höhenrichtung bei den einzelnen Höhenversätzen 38a, 38b, 38c der ersten bis sechsten Wicklungskopfform 1 bis 6.

Jeder der Höhenversätze 38a, 38b, 38c ist entweder in die erste Höhenrichtung HR1 oder die zweite Höhenrichtung HR2 gerichtet. Die erste Höhenrichtung HR1 entspricht im bestimmungsgemäßen Gebrauch der Wickelmatte 40 bzw. der Spulenmatte 42 entweder der Richtung radial nach außen oder der Richtung radial nach innen und die zweite Höhenrichtung HR2 ist entsprechend in die andere Richtung gerichtet. Bei den hier dargestellten Ausführungsbeispiel entspricht die erste Höhenrichtung HR1 der Richtung radial nach außen und die zweite Höhenrichtung HR2 der Richtung radial nach innen.

In Fig. 15a ist eine erste Wicklungskopfform 1 dargestellt, bei der der erste Höhenversatz 38a in die zweite Höhenrichtung HR2 gerichtet ist, der zweite Höhenversatz 38b in die erste Höhenrichtung HR1 gerichtet ist und der dritte Höhenversatz 38c in die zweite Höhenrichtung HR2 gerichtet ist.

In Fig. 15b ist eine zweite Wicklungskopfform 2 dargestellt, bei der der erste Höhenversatz 38a in die erste Höhenrichtung HR1 gerichtet ist, der zweite Höhenversatz 38b in die zweite Höhenrichtung HR2 gerichtet ist und der dritte Höhenversatz 38c in die erste Höhenrichtung HR1 gerichtet ist.

Wie aus Fig. 15a und 15b ersichtlich, liegen der erste und der zweite geradlinige Drahtabschnitt 28a, 28b bei der ersten und der zweiten Wicklungskopfform 1, 2 in einer Ebene. Die erste und die zweite Wicklungskopfform 1, 2 sind insbesondere für die Standardbereiche 56 vorzusehen.

In Fig. 15c ist eine dritte Wicklungskopfform 3 dargestellt, bei der der erste Höhenversatz 38a in die erste Höhenrichtung HR1 gerichtet ist, der zweite Höhenversatz 38b in die erste Höhenrichtung HR1 gerichtet ist und der dritte Höhenversatz 38c in die zweite Höhenrichtung HR2 gerichtet ist.

In Fig. 15d ist eine vierte Wicklungskopfform 4 dargestellt, bei der der erste Höhenversatz 38a in die erste Höhenrichtung HR1 gerichtet ist, der zweite Höhenversatz 38b in die zweite Höhenrichtung HR2 gerichtet ist und der dritte Höhenversatz 38c in die zweite Höhenrichtung HR2 gerichtet ist.

In Fig. 15e ist eine fünfte Wicklungskopfform 5 dargestellt, bei der der erste Höhenversatz 38a in die zweite Höhenrichtung HR2 gerichtet ist, der zweite Höhenversatz 38b in die erste Höhenrichtung HR1 gerichtet ist und der dritte Höhenversatz 38c in die erste Höhenrichtung HR1 gerichtet ist.

In Fig. 15f ist eine sechste Wicklungskopfform 6 dargestellt, bei der der erste Höhenversatz 38a in die zweite Höhenrichtung HR2 gerichtet ist, der zweite Höhenversatz 38b in die zweite Höhenrichtung HR2 gerichtet ist und der dritte Höhenversatz 38c in die erste Höhenrichtung HR1 gerichtet ist.

Wie aus den Fig. 15c bis 15f ersichtlich, sind der linke und der rechte geradlinige Drahtabschnitt 28 bei der dritten bis sechsten Wicklungskopfform 3 bis 6 um ein Höhenerstreckungsmaß HM entweder in die erste Höhenrichtung HR1 oder zweite Höhenrichtung HR2 versetzt. Die dritte bis sechste Wicklungskopfform 3 bis 6 sind daher in den Bereichen vorzusehen, wo eine solche Versetzung benachbarter geradliniger Drahtabschnitte 28 vorgesehen werden soll, was insbesondere in dem Anfangsbereich 46, dem Endbereich 48 oder dem Übergangsbereich 52 der Fall sein kann.

Nachdem die Wellenwicklungsdrähte 24, 24a, 24b entsprechend hergestellt worden sind und durch die Wellenwicklungsdraht-Bereitstelleinrichtung 66 bereit gestellt worden sind, werden sie nun zu einer Wicklungsmatte 40 zusammengefügt, um so die erste Einzelmatte 44a und die zweite Einzelmatte 44b zu bilden. Je nach Wickelschema erfolgt das Zusammenfügen der Wellenwicklungsdrähte 24 durch Stapeln STP oder durch Stecken STK oder durch Kreuzstecken.

Beim Stapeln der Spulenmatte 42 werden die Einzelmatten 44a, 44b nacheinander aufeinander gelegt. Dabei ist insbesondere vorgesehen, dass immer zwei nach unten (in die zweite Höhenrichtung HR2) geformte Z-Höhenversätze übereinander liegen, da sonst der Wicklungskopf 30 radial aufbaut. Das gleiche gilt für das Stapeln der einzelnen Wellenwicklungsdrähte 24. Die Höhenversätze 38a, 38b, 38c der einzelnen Wellenwicklungsdrähte 24 sind so ausgeformt, dass an allen Kreuzungspunkten immer derselbe Einzeldraht oben liegt.

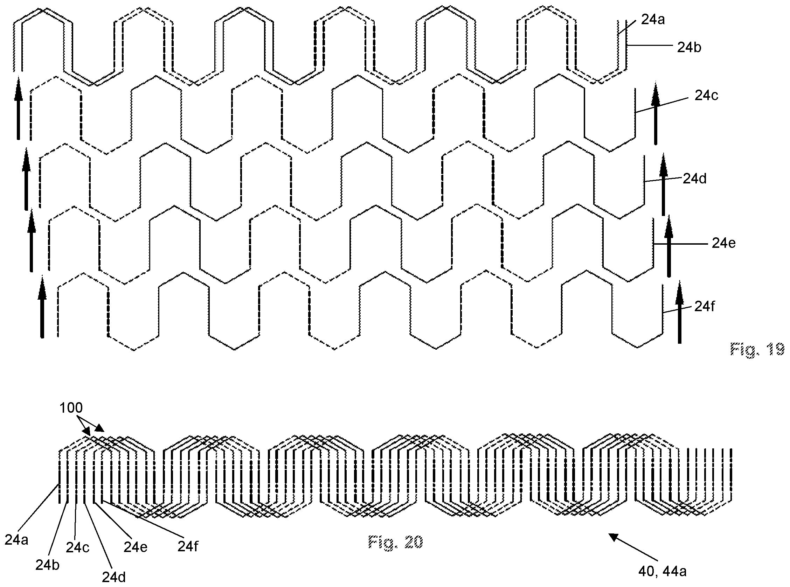

Im Folgenden wird das Stecken von Wellenwicklungsdrähten 24 anhand der Darstellung in den Fig. 16 bis 21 näher erläutert. Die Fig. 16 bis 18 zeigen dabei verschiedene Stadien beim Stecken eines ersten Wellenwicklungsdrahtes 24a und eines zweiten Wellenwicklungsdrahtes 24b. Fig. 19 verdeutlicht das Stecken weiterer Wellenwicklungsdrähte 24c, 24d, 24e und 24f zu dem bereits gesteckten Paar von Wellenwicklungsdrähten 24a, 24b. Fig. 20 zeigt die durch Stecken gemäß den Fig. 16 bis 19 erhaltene Wickelmatte 40.

Das Stecken der einzelnen Wellenwicklungsdrähte 24a bis 24f erfolgt in mehreren Schritten. Es dient dazu, Einzelmatten 44a, 44b herzustellen, bei denen an den Kreuzungspunkten nicht zwingend der gleiche Draht oben liegen muss. Zunächst wird immer ein Teilabschnitt der einzelnen Wellenwicklungsdrähte 24a, 24b nach oben oder unten gedrückt, wie in Fig. 16 dargestellt. Der Teilabschnitt, der nach unten gedrückt wird, wird gestrichelt dargestellt, der Teilabschnitt, der nach oben gedrückt wird, wird mit durchgezogener Linie dargestellt.

Wie in Fig. 16 dargestellt, wird ein erster Teilabschnitt 98-1a des ersten Wellenwicklungsdrahts 24a nach oben gedrückt und ein benachbarter zweiter Teilabschnitt 98-2a des ersten Wellenwicklungsdrahtes 24a wird nach unten gedrückt. Am zweiten Wellenwicklungsdraht 24b wird entsprechend ein erster Teilabschnitt 98-1b nach unten gedrückt und ein benachbarter zweiter Teilabschnitt des zweiten Wellenwicklungsdrahts 24b wird nach oben gedrückt. Die Ausdehnung der Teilabschnitte 98-1a, 98-2a über den Wellenwicklungsdraht 24a kann unterschiedlich sein und zwischen einem Halbwellenabschnitt 32a und der gesamten Länge des Wellenwicklungdrahtes 24a minus einem Halbwellenabschnitt 32a betragen. In dem dargestellten Beispiel umfassen der erste und der zweite Teilabschnitt 98-1a, 98-2a, 98-1b, 98-2b jeweils einen Wellenabschnitt 26 und sind über die Länge des jeweiligen Wellenwicklungsdraht 24a, 24b alternierend zueinander vorgesehen.

Anschließend werden die beiden Wellenwicklungsdrähte 24a, 24b ineinander gesteckt, wie dies in Fig. 17 zu sehen ist.

Mit entsprechend nach oben und nach unten gedrückten Teilabschnitten 98-1a, 98-2a, 98-1b, 98-2b werden dabei der erste und der zweite Wellenwicklungsdraht 24a, 24b in Querrichtung ineinander geschoben, wie dies in Fig. 16 durch Pfeile angedeutet ist, so dass, wie in Fig. 17 gezeigt, der jeweilige erste Teilabschnitt 98-1a des ersten Wellenwicklungsdrahts 24a über den jeweiligen ersten Teilabschnitt 98-1b des zweiten Wellenwicklungsdrahts 24b geschoben wird, während der jeweilige zweite Teilabschnitt 98-2a des ersten Wellenwicklungsdrahts 24a unter den zweiten Teilabschnitt 98-2b des ersten Wellenwicklungsdrahts 24b geschoben wird.

Sobald die Drähte komplett ineinander gesteckt sind, springen alle Abschnitte der Wellenwicklungsdrähte 24a, 24b zurück in ihre ursprüngliche Ebene, was dazu führt, dass alle geradlinigen Drahtabschnitte 28 auf einer Ebene sind. Dies wird in Fig. 18 deutlich. Man erkennt, dass die Wicklungsköpfe 30, 30a, 30b Kreuzungspunkte 100 in verschiedenen Ebenen ausbilden und alle geradlinigen Drahtabschnitte 28 in einer Ebene liegen, wie an den Linienarten zu erkennen. Mit doppelstrichpunktierten Linien sind dabei Drahtabschnitte gezeigt, die in der Ebene 0 liegen, in der alle geradlinigen Drahtabschnitte 28 liegen. Mit durchgezogenen Linien sind Drahtabschnitte dargestellt, die in einer um ein halbes Höhenerstreckungsmaß HM nach oben (d.h. in der ersten Höhenrichtung HR1) versetzt zu der Ebene 0 liegenden oberen Ebene liegen, und mit gestrichelten Linien sind Drahtabschnitte dargestellt, die in einer um ein halbes Höhenerstreckungsmaß HM nach unten, in der zweiten Höhenrichtung HR2, versetzt zu der Ebene 0 liegenden unteren Ebene liegen.

In der fertig gesteckten Lage gemäß Fig. 18 befinden sich die Wellenwicklungsdrähte 24a und 24b zueinander ausgerichtet, so dass ihre Längsmittellinien aufeinander liegen. Diese Lage wird auch als Ausrichtlage bezeichnet.

Dieser anhand eines ersten und eines zweiten Wellenwicklungsdrahtes 24a, 24b erläuterte Vorgang des Steckens wird solange wiederholt, bis die gesamte Wickelmatte 40 und somit eine der Einzelmatten 44a, 44b hergestellt ist. In Fig. 19 ist dies am Beispiel von sechs Wellenwicklungsdrähten 24a bis 24f dargestellt. Fig. 20 zeigt dann in einer Darstellung entsprechend Fig. 18 die somit hergestellte Wickelmatte 40 mit den Kreuzungspunkten 100 und den geradlinigen Drahtabschnitten 28 in einer gemeinsamen Ebene.

In den Fig. 16 bis 20 ist das Stecken von Wellenwicklungsdrähten 24 mit gleichem Spulenschritt dargestellt.

Wie anhand der Fig. 1 und 6 bis 14 erläutert, können die Wellenwicklungsdrähte 24 auch paarweise mit unterschiedlichen Spulenschritten (hier 5-7) hergestellt werden.

Wie in Fig. 21 dargestellt, können nach demselben Prinzip wie anhand von einzelnen Wellenwicklungsdrähten 24a-24f mit gleichem Spulenschritt in den Fig. 16 bis 20 erläutert, die Wellenwicklungsdrähte 24a, 24b bei unterschiedlichem Spulenschritt auch immer paarweise gesteckt werden.

Es ist leicht zu erkennen, dass ein derartiges Stecken von Wellenwicklungsdrähten 24a bis 24f einfach automatisierbar ist. Eine nicht näher dargestellte Steckeinrichtung einer Wickelmattenherstellvorrichtung braucht hierzu lediglich eine Bewegungseinrichtung zum Aufeinander zu Bewegen der Wellenwicklungsdrähte 24a und 24b, wobei die Teilabschnitte 98-1a, 98-1b, 98-2a und 98-2b zum Beispiel durch entsprechende Gleitführungen oder durch Greifer nach oben bzw. nach unten zu drücken sind.

Hat man auf diese Weise die Einzelmatten 44a, 44b hergestellt, kann daraus die Spulenmatte 42 hergestellt werden. Hierzu können die Einzelmatten 44a, 44b gestapelt oder auch, wie in den Fig. 22 bis 24 dargestellt, gesteckt werden.

Beim Stecken der Einzelmatten 44a, 44b wird wiederum ein erster Teilabschnitt 102-1a der ersten Einzelmatte 44a nach oben gedrückt und ein benachbarter zweiter Teilabschnitt 102-2a der ersten Einzelmatte 44a nach unten gedrückt. Bei der zweiten Einzelmatte 44b wird ein entsprechender erster Teilabschnitt 102-1b nach unten gedrückt und ein entsprechender zweiter Teilabschnitt 102-2b nach oben gedrückt. Daraufhin werden die Einzelmatten 44a, 44b ineinander geschoben, so dass der erste Teilabschnitt 102-1a der ersten Einzelmatte 44a über den ersten Teilabschnitt 102-1b der zweiten Einzelmatte 44b geschoben wird und der zweite Teilabschnitt 102-2a der ersten Einzelmatte 44a unter den zweiten Teilabschnitt 102-2b der zweiten Einzelmatte 44b geschoben wird.

Damit die Einzelmatten 44a, 44b so ineinander gesteckt werden können, können sie an der Steckseite (der jeweils in die andere Einzelmatte zu schiebende Seite) keinen Lagentausch haben. Wie in Fig. 21 dargestellt muss beim Stecken der Spulenmatte 42 demnach der Lagentausch immer auf der gleichen Seite der Einzelmatte 44a bzw. 44b stattfinden. D.h. dass die Wellenwicklungsdrähte 24a bis 24f der maximal in jedem zweiten Wicklungskopf 30 die Lage wechseln können. So kann bei der einen Einzelmatte 44a ein Lagentausch nur in den ersten Wicklungsköpfen 30a und bei der anderen Einzelmatte 44b ein Lagentausch nur in den zweiten Wicklungsköpfen 30b stattfinden.

Wie in Fig. 22 dargestellt, werden, um das Stecken zu erleichtern, die Wicklungsköpfe 30 nach unten und nach oben zueinander versetzt. Fig. 22 zeigt die Einzelmatten 44a, 44b vor dem Stecken.

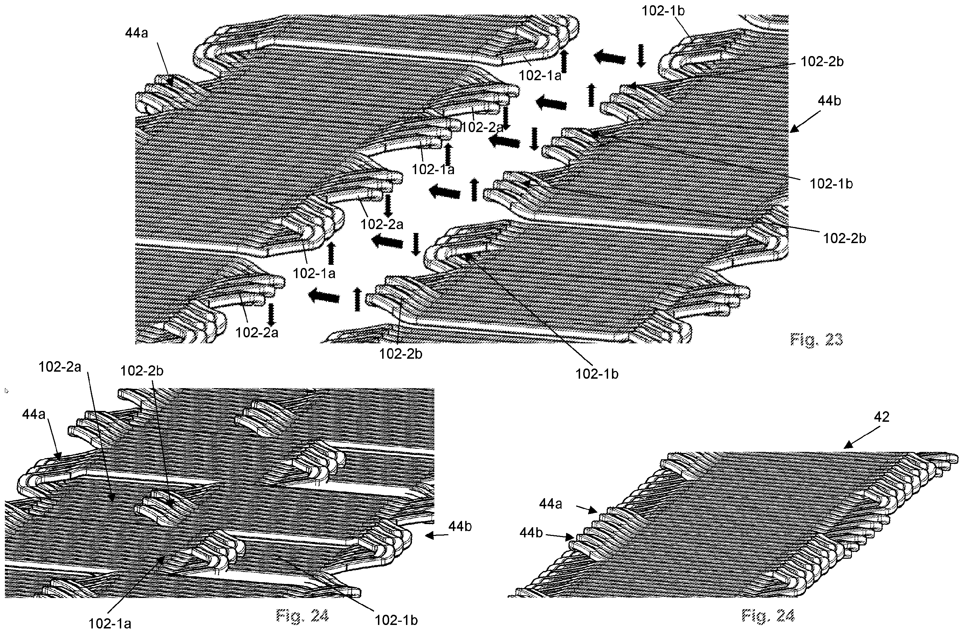

Die Fig. 23 und 23a zeigen den Schritt des Ineinanderschiebens der Teilabschnitte 102-1a, 102-1b, 102-2a und 102-2b. Insbesondere zeigen Fig. 23 und 23a die beiden Einzelmatten 44a, 44b halb gesteckt.

Die beiden Einzelmatten 44a, 44b können an den beiden Seiten ineinander gesteckt werden, sodass immer abwechselnd die Anzahl der benötigten Einzeldrähte einer Einzelmatte 44a, 44b jeweils mindestens zweimal in der oberen oder unteren Lage der Spulenmatte 42 liegen. Dadurch ergibt sich der Lagentausch in der Spulenmatte 42.

Fig. 24 zeigt die fertig gesteckte Spulenmatte 42. In Fig. 24 sind die Einzelmatten 44a, 44b komplett gesteckt. Die Längsmittellinien der Einzelmatten 44a, 44b liegen aufeinander; diese Lage wird auch als Ausrichtlage bezeichnet.

Es ist leicht zu erkennen, dass auch ein derartiges Stecken von Einzelmatten 44a, 44b einfach automatisierbar ist. Eine nicht näher dargestellte Steckeinrichtung einer Spulenmattenherstellvorrichtung braucht hierzu lediglich eine Bewegungseinrichtung zum Aufeinander zu Bewegen der Einzelmatten 44a, 44b, wobei die Teilabschnitte 102-1a, 102-1b, 102-2a und 102-2b zum Beispiel durch entsprechende Gleitführungen oder durch Greifer nach oben bzw. nach unten zu drücken sind.

Im Folgenden wird anhand der Fig. 25a bis 25d das Kreuzstecken am Beispiel eines Kreuzsteckens von zwei Paaren von Wellenwicklungsdrähten 24a, 24b und 24c, 24d näher erläutert.

Das Kreuzstecken ist dann vorgesehen, wenn ein Lagentausch auf beiden Seiten der Einzelmatte 44a, 44b erfolgen soll. Sowohl für Einzelmatten 44a, 44b als auch für Einzeldrähte - Wellenwicklungsdrähte 24, 24a-f - ist das Kreuzstecken geeignet. Das Kreuzstecken erfolgt in vier Schritten, welche nachfolgend in Fig. 25a bis 25d erläutert werden.

Fig. 25a zeigt als einen ersten Schritt ein gerades Stecken. Im ersten Schritt wird wie zuvor beschrieben gesteckt. Dabei sind an der Stelle K2, an der kreuzgesteckt werden soll, ein zentraler Wicklungskopf K2 und der jeweils dem zentralen Wicklungskopf K2 benachbarte vorhergehende und nachfolgende Wicklungskopf K1 und K3 in einer Ebene. Will man an der Stelle des Wicklungskopfes K2 in den Fig. 25a bis 25d kreuzstecken, ist wie in Fig. 25a dargestellt der jeweilige Wicklungskopf an den Stellen K1, K2 und K3 der jeweiligen Einzelmatte 44a in einer Ebene vorgesehen (durchgezogen oben, gestrichelt unten).

In Fig. 25b ist der zweite Schritt - Überstecken - dargestellt. Anders als beim Stecken werden die Wellenwicklungsdrähte 24a, 24b einerseits und 24c, 24d andererseits soweit ineinander geschoben, bis die Wicklungsköpfe 30a, 30b am Anschlag sind. Die Wellenwicklungsdrähte 24a, 24b werden also über ihre Ausrichtlage hinweg geschoben, bis die Wicklungsköpfe 30a ,30b anschlagen.

Wie dies in Fig. 25b und 25c dargestellt ist, findet anschließend der dritte Schritt - Tauschen - statt. Die beiden zentralen Wicklungsköpfe an der Stelle K2 werden nach oben gedrückt, bis der Wicklungskopf, der zuvor in der unteren Ebene war, in der oberen Ebene liegt. Dadurch findet an der Stelle K2 ein Lagentausch statt.

Anschließend erfolgt, wie dies in Fig. 25c und 25d dargestellt ist, der vierte Schritt - Zurückstecken - statt. Die Wellenwicklungsdrähte 24a, 24b, 24c, 24d werden wieder zusammengeschoben bis die geradlinigen Drahtabschnitte 28 der Wickelmatte 40 wieder genau nebeneinander liegen, wie Fig. 25d zu sehen ist - Ausrichtlage.

Ausführungsbeispiele der Spulenmatten 42 - Mattenausführungen:
Im Folgenden werden anhand der Darstellungen in den Fig. 26, 27 und 28 unterschiedliche Ausführungsbeispiele 42-1, 42-2 und 42-3 von Spulenmatten 42 näher erläutert. Dabei werden verschiedene Ausführungsbeispiele 42-1, 42-2, 42-3 der Spulenmatte 42, die nach den zuvor genannten Kriterien und Verfahren hergestellt worden ist, näher erläutert. In den Fig. 26, 27 und 28 sind drei beispielhafte Spulenmatten 42 dargestellt. Die Einzelmatten 44a, 44b sind in schwarz und weiß dargestellt. Das x steht dafür, dass die Leiter in die Zeichnungsebene hinein gehen, der Punkt, dass die Leiter aus der Ebene heraustreten. Mit SA ist die Außenseite des Stators 14 bezeichnet und mit SI ist die Stator-Innenseite bezeichnet. Außerdem entspricht jedes Feld der Breite des durchschnittlichen Spulenschritts. Dadurch ist jeder Leiter - Wellenwicklungsdrähte 24a - 24f - einer Einzelmatte 44a, 44b genau einmal in jedem Feld einer Einzelmatte 44a, 44b. Beide Einzelmatten 44a, 44b sind aus Wellenwicklungsdrähten 24 gebildet, welche mit verschiedenen Wicklungskopfformen 1 bis 6 aus Fig. 15a bis 15f hergestellt sind. Die Felder über und unter den Einzelmatten 44a, 44b stehen für die Wickelköpfe 30, die die geradlinigen Drahtabschnitte 28 in den Einzelmatten 44a, 44b miteinander verbinden. Hier ist in den Feldern jeweils die vorgesehene Wicklungskopfform 1, 2, 3, 4, 5 oder 6 nach Fig. 15a bis 15f aufgeführt, die sich beim Verfolgen eines Leiters vom Anfangsbereich 46 zum Endbereich 48 ausbilden. Diese sind so aneinandergereiht, dass der Wicklungskopf 30 radial um maximal eine Drahtstärke aufbaut. Beide Einzelmatten 44a, 44b können sowohl mit einem regelmäßigen Spulenschritt als auch mit einem wechselnden Spulenschritt (beispielsweise 5-7ner) ausgeführt werden.

Jede Spulenmatte 42, 42-1, 42-2, 42-3 weist einen Anfangsbereich 46, mindestens einen Standardbereich 56 und einem Endbereich 48 auf. Außerdem kann die Spulenmatte 42, 42-1, 42-2, 42-3 beliebig viele Standardbereiche 56 besitzen, die jeweils mit einem Übergangsbereich 52 verbunden sein können. Die unterschiedlichen Ausführungsformen 42-1, 42-2, 42-3 der Spulenmatte 42 weisen eine erste Einzelmatte 44a und eine zweite Einzelmatte 44b auf und sind so ausgeführt, dass beim Aufwickeln niemals die gleiche Einzelmatte 44a, 44b aufeinander liegt.

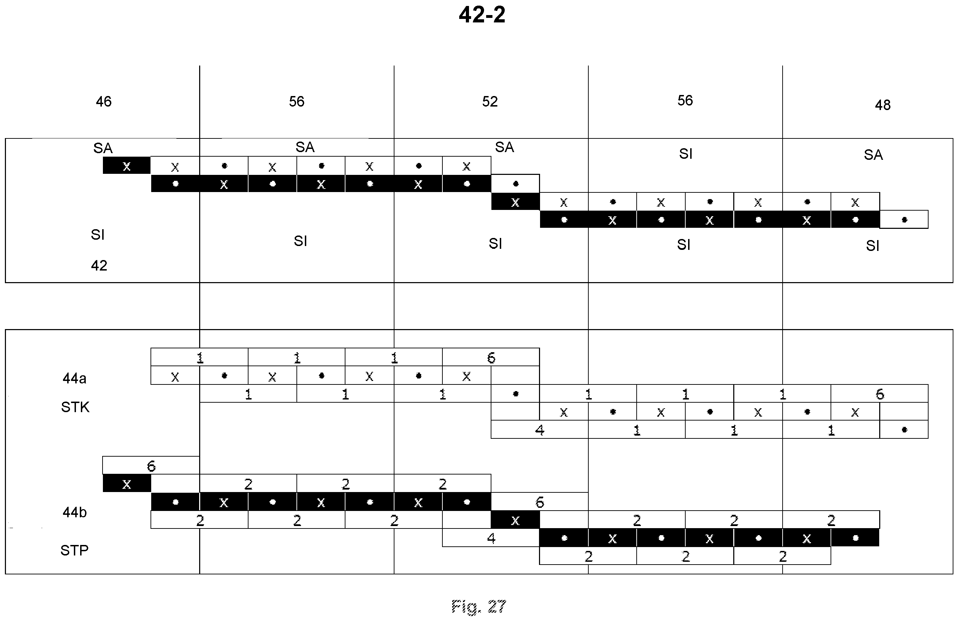

Die in den Figuren 26 und 27 dargestellten Ausführungsbeispiele 42-1 und 42-2 der Spulenmatte 42 stellen unterschiedliche Versionen einer Spulenmatte 42 ohne Lagentausch dar.

Das in Fig. 26 dargestellte erste Ausführungsbeispiel 42-1 der Spulenmatte 42 ist so gestaltet, dass in jedem Bereich immer dieselbe Einzelmatte - erste Einzelmatte 44a - oben, beziehungsweise unten liegt - zweite Einzelmatte 44b. Dadurch ist es möglich, die beiden Einzelmatten 44a, 44b zu stapeln. Die Spulenmatte 42 des ersten Ausführungsbeispiels 42-1 ist somit durch Stapeln der Einzelmatten 44a, 44b hergestellt. Die erste Einzelmatte 44a ist so ausgeführt, dass sie durch Stapeln STP hergestellt werden kann. Die zweite Einzelmatte 1.1.2 muss nur im Übergangsbereich 52 und im Endbereich 48 gesteckt werden - wie durch Stecken STK angedeutet - und kann ansonsten durch Stapeln zusammengesetzt werden.

Bei dem in Fig. 27 dargestellten zweiten Ausführungsbeispiel 42-2 der Spulenmatte 42 sind alle Wicklungsköpfe 30 radial weiter außen, um mehr Platz in dem Rotorraum für die Verschaltung zu gewinnen. Auch das zweite Ausführungsbeispiel 42-2 der Spulenmatte 42 ist so gestaltet, dass in jedem Bereich immer dieselbe Einzelmatte - erste Einzelmatte 44a - oben, beziehungsweise unten liegt - zweite Einzelmatte 44b. Dadurch ist es möglich, die beiden Einzelmatten 44a, 44b zu stapeln. In diesem Ausführungsbeispiel 42-2 der Spulenmatte 42 muss die erste Einzelmatte 44a nur im Übergangsbereich 52 und im Endbereich 48 gesteckt werden und kann ansonsten durch Stapeln zusammengesetzt werden. Die zweite Einzelmatte 44b ist so ausgeführt, dass sie durch Stapeln STP hergestellt werden kann.

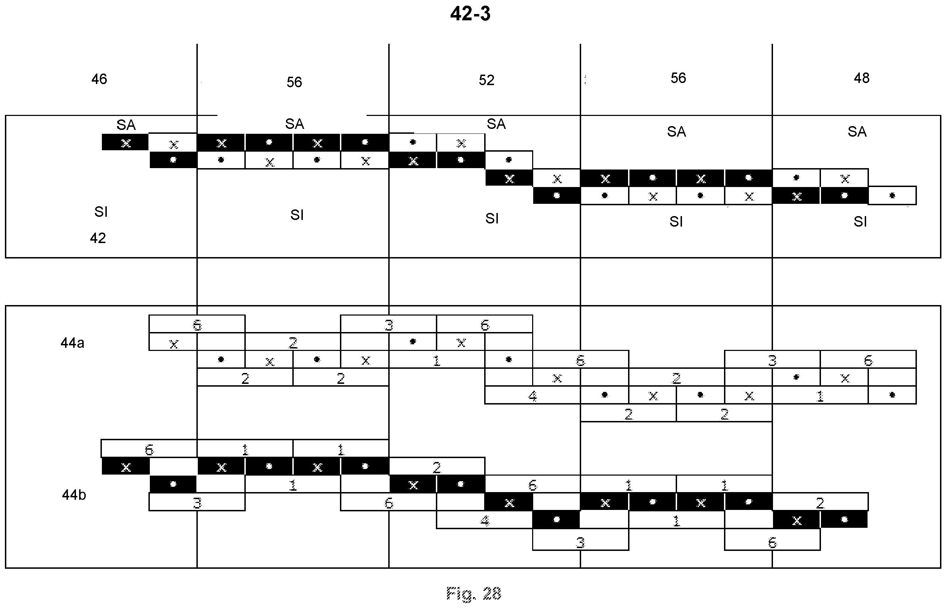

Fig. 28 zeigt ein Ausführungsbeispiel 42-3 einer Spulenmatte 42 mit Lagentausch. Insbesondere kann bei dem derzeit bevorzugten dritten Ausführungsbeispiel 42-3 der Spulenmatte 42 in jedem Standardbereich 56 und in jedem Übergangsbereich 52 frei gewählt werden, welche Einzelmatte 44a, 44b oben liegt. In diesem Fall sind sowohl die erste Einzelmatten 44a als auch die zweite Einzelmatte 44b durch Stecken STK hergestellt. Auch die gesamte Spulenmatte 42 ist gesteckt, indem di erste und die zweite Einzelmatte 44a, 44b ineinander gesteckt werden.

Alle gezeigten Ausführungsbeispiele 42-1, 42-2, 42-3 der Spulenmatte 42 sind beim Aufwickeln der Spulenmatte 42 in den Stator drehrichtungsunabhängig. Sie können sowohl im Uhrzeigersinn als auch gegen den Uhrzeigersinn aufgewickelt werden.

Die dargestellten Ausführungsbeispiele 42-1, 42-2, 42-3 der Spulenmatte 42 können auch gespiegelt hergestellt werden. Für die gespiegelten Versionen an der Stator Außenseite SA oder der Stator-Innenseite SI gibt es den in der folgenden Tabelle 5 wiedergegebenen "Übersetzungsschlüssel" der Wicklungskopfformen 1 bis 6 aus den Fig. 15a bis 15f, der für alle Versionen gilt.

**Tabelle 5: Übersetzungsschlüssel für Wicklungskopfformen bei Spiegeln der Ausführungsbeispiel 42-1, 42-2, 42-3:**

| Wicklungskopfform des gezeigten Ausführungsbeispiels: | wird in der gespiegelten Version des Ausführungsbeispiels zu Wicklungskopfform: |
|---|---|
| 1 | 2 |
| 2 | 1 |
| 3 | 6 |
| 4 | 5 |
| 5 | 4 |
| 6 | 3 |

Im Folgenden werden Beispiele für die Verschaltung der Spulenmatten 42 zum Bilden der Spulenwicklung 20 anhand der Darstellung in den Fig. 29 bis 32 näher erläutert.

Fig. 29 zeigt den Endbereich 48 eines Wellenwicklungsdrahtes 24. Regulär wird ein Abgang zur Verschaltung dadurch gebildet, dass am Endbereich 48 der letzte Wicklungskopf 30 nur halb ausgeführt wird. Der erste Wicklungskopfabschnitt 62a bildet dann den regulären Abgang 104. Anstelle dieses regulären Abganges 104 ist ein gespiegelter Abgang 106 vorgesehen, indem der letzte halbe Wicklungskopf 30 - erster Wicklungskopfabschnitt 62a - entsprechend gespiegelt vorgesehen wird.

Die Verschaltung der ersten Einzelmatte 44a und der zweiten Einzelmatte 44b kann in allen drei Ausführungsbeispielen 42-1, 42-2, 42-3 der Spulenmatte 42 auf die gleiche Art ausgeführt werden und gilt sowohl für dreiphasige als auch mehrphasige E-Maschinen. Bei einer Reihenschaltung der beiden Einzelmatten 44a, 44b zueinander kann durch die soeben anhand der Fig. 29 erläuterte gespiegelte Ausführung des letzten halben Wicklungskopfs 30 der Verschaltungsaufwand deutlich minimiert werden. In Fig. 30 bis 33 erkennt man, dass die Leiterenden dadurch paarweise herausgeführt werden und ohne zusätzliche Verschaltelemente miteinander verbunden werden können. Fig. 30 zeigt dabei die Rückansicht der aufgewickelten Spulenmatte 42, die aus Wellenwicklungsdrähten 24a - 24f mit gleichem Spulenschritt (siehe Fig. 16 bis 20) gebildet ist, und zeigt insbesondere die daraus gebildete verschaltete Spulenwicklung 20 mit gleichmäßigen Spulenschritt. Es ist die Reihenschaltung 108 dargestellt, wobei die Abgänge 106 einer Einzelmatte 44b gespiegelt sind. Außerdem sind Phasenabgänge 110 und Sternpunkte 112 dargestellt.

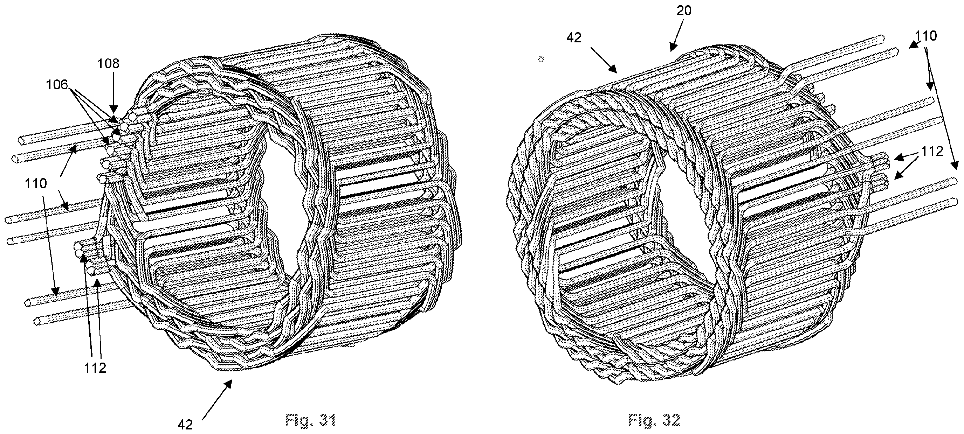

Fig. 31 zeigt die Rückansicht der Spulenmatte 42 mit wechselndem Spulenschritt (siehe Fig. 1, 5 bis 12 und 21) und insbesondere die daraus gebildete verschaltete Spulenwicklung 20 mit wechselndem Spulenschritt. Auch hier sind die Reihenschaltung 108, die Phasenabgänge 110 und die Sternpunkte 112 dargestellt.

Fig. 32 zeigt die Vorderansicht der verschalteten Spulenwicklung 20 mit gleichmäßigem Spulenschritt und Fig. 33 zeigt die Vorderansicht der verschalteten Spulenwicklung 20 mit wechselndem Spulenschritt.

Bei einem wechselnden Spulenschritt ist die Spulenwicklung 20 sowohl im wechselnden Spulenschritt verschaltbar, oder es kann an der Verschaltstelle ein gleichmäßiger Spulenschritt realisiert werden. Die jeweils anderen Enden der Leiter können je nach Stern- oder Dreiecksschaltung zum Sternpunkt (oder mehreren Sternpunkten) und / oder den Phasenabgängen verschaltet werden. Durch die Reihenschaltung der beiden Einzelmatten 44a, 44b wird ein Potentialausgleich erreicht.

Bevorzugte Ausgestaltungen der Erfindung betreffen ein Verfahren und eine Vorrichtung zum Herstellen von Wickelmatten zum Herstellen einer Spulenwicklung einer elektrischen Maschine Die Wickelmatte ist aus als Flachwicklung in einer Ebene gebogenen Wellenwicklungsdrähten zusammengefügt. Um unterschiedliche Wickelmatten mit verbesserten elektrischen Eigenschaften einfach und zuverlässig in Großserie herstellen zu können, wird vorgeschlagen, die Wellenwicklungsdrähte nicht zu verweben oder zu umschlingen, sondern zumindest teilweise zu stecken. Außerdem werden ein Verfahren und eine Vorrichtung zum Herstellen einer aus mehreren Wickelmatten als Einzelmatten gebildeten Spulenmatte vorgeschlagen. Die Vorrichtung weist vorzugsweise eine Kröpfeinrichtung zum Einbringen von Höhenversätzen in Wicklungsköpfe der Wellenwicklungsdrähte auf

### Bezugszeichenliste:

- 1: erste Wicklungskopfform
- 2: zweite Wicklungskopfform
- 3: dritte Wicklungskopfform
- 4: vierte Wicklungskopfform
- 5: fünfte Wicklungskopfform
- 6: sechste Wicklungskopfform
- 10: Gehäuse
- 12: Bauteil
- 14: Stator
- 16: Nut
- 20: Spulenwicklung
- 22: Sprung
- 24: Wellenwicklungsdraht
- 24a: erster Wellenwicklungsdraht
- 24b: zweiter Wellenwicklungsdraht
- 24c: dritter Wellenwicklungsdraht
- 24d: vierter Wellenwicklungsdraht
- 24e: fünfter Wellenwicklungsdraht
- 24f: sechster Wellenwicklungsdraht
- 26: Wellenabschnitt
- 28: geradliniger Drahtabschnitt
- 30: Wicklungskopf
- 30a: erster Wicklungskopf
- 30b: zweiter Wicklungskopf
- 32a: erste Halbwellenabschnitt
- 32b: zweiter Halbwellenabschnitt
- 34a: erste Biegestelle
- 34b: zweite Biegestelle
- 34c: dritte Biegestelle
- 36: Verbindungsabschnitt
- 38a: erster Höhenversatz
- 38b: zweiter Höhenversatz
- 38c: dritter Höhenversatz
- 40: Wickelmatte
- 42: Spulenmatte
- 42-1: erstes Ausführungsbeispiel der Spulenmatte
- 42-2: zweites Ausführungsbeispiel der Spulenmatte
- 42-3: drittes Ausführungsbeispiel der Spulenmatte
- 44a: erste Einzelmatte
- 44b: zweite Einzelmatte
- 46: Anfangsbereich
- 48: Endbereich
- 50: ebene Matte
- 52: Übergangsbereich
- 54: treppenförmige Matte
- 56: Standardbereich
- 58: Dachbiegung
- 60a: erste Übergangsbiegung
- 60b: zweite Übergangsbiegung
- 62a: erster Wicklungskopfabschnitt
- 62b: zweiter Wicklungskopfabschnitt
- 62c: dritter Wicklungskopfabschnitt
- 64: Gegenbiegung
- 66: Wellenwicklungsdraht-Bereitstelleinrichtung
- 68: Wellenwicklungsdrahtherstelleinrichtung
- 70: Wicklungskopfformeinrichtung
- 72: Spanneinrichtung
- 74-1: erste Spanneinheit
- 74-2: zweite Spanneinheit
- 74-3: dritte Spanneinheit
- 74-4: vierte Spanneinheit
- 74-5: fünfte Spanneinheit
- 76a: erste Spannbacke
- 76b: zweite Spannbacke
- 78a: erste Biegebacke
- 78b: zweite Biegebacke
- 80: Befestigungsabschnitt
- 82: Formabschnitt
- 84: Biegeform
- 86: Biegeradius
- 88-1a: Aktor für die erste Spannbacke der ersten Spanneinheit
- 88-1b: Aktor für die zweite Spannbacke der ersten Spanneinheit
- 88-2a: Aktor für die erste Biegebacke der zweiten Spanneinheit
- 88-2b: Aktor für die zweite Biegebacke der zweiten Spanneinheit
- 88-3a: Aktor für die erste Biegebacke der dritten Spanneinheit
- 88-3b: Aktor für die zweite Biegebacke der dritten Spanneinheit
- 88-4a: Aktor für die erste Biegebacke der vierten Spanneinheit
- 88-4b: Aktor für die zweite Biegebacke der vierten Spanneinheit
- 88-5a: Aktor für die erste Biegebacke der fünften Spanneinheit
- 88-5b: Aktor für die zweite Biegebacke der fünften Spanneinheit
- 90: Steuerung
- 92-1: erste Spannfläche
- 92-2: zweite Spannfläche
- 92-3: dritte Spannfläche
- 94: Biegeeinheit
- 96: Schlitten
- 98-1a: erster Teilabschnitt des ersten Wellenwicklungsdrahts
- 98-2a: zweiter Teilabschnitt des ersten Wellenwicklungsdrahts
- 98-1b: erster Teilabschnitt des zweiten Wellenwicklungsdrahts
- 98-2b: zweiter Teilabschnitt des zweiten Wellenwicklungsdrahts
- 100: Kreuzungspunkt
- 102-1a: erster Teilabschnitt der ersten Einzelmatte
- 102-2a: zweiter Teilabschnitt der ersten Einzelmatte
- 102-1b: erster Teilabschnitt der zweiten Einzelmatte
- 102-2b: zweiter Teilabschnitt der zweiten Einzelmatte
- 104: regulärer Abgang
- 106: gespiegelter Abgang
- 108: Reihenschaltung
- 110: Phasenabgänge
- 112: Sternpunkte
- A: erster Leiter
- B: zweiter Leiter
- HM: Höhenerstreckungsmaß
- HR1: erste Höhenrichtung
- HR2: zweite Höhenrichtung
- K1: Nachbarstelle zur Kreuzsteck-Stelle
- K2: Kreuzsteck-Stelle
- K3: Nachbarstelle zur Kreuzsteck-Stelle
- KLM: kein Lagentausch möglich
- LM: Lagentausch möglich
- OF: obere Fläche
- UF: untere Fläche
- SA: Stator-Außenseite
- SI: Stator-Innenseite
- SPS: Spulenschritt
- STP: Stapeln
- STK: Stecken
- WKH: Wickelkopfhöhe

## Patentansprüche

1. Wickelmattenherstellverfahren zum Herstellen einer Wickelmatte (40), um hieraus eine Spulenwicklung eines Bauteils (12) einer elektrischen Maschine zu bilden, umfassend:
a) Bereitstellen mehrerer sich in einer Längsrichtung erstreckender wellenförmig gebogener Wellenwicklungsdrähte (24a-24f), die in Längsrichtung beabstandete und sich in einer quer zur Längsrichtung verlaufenden Querrichtung erstreckende geradlinige Drahtabschnitte (28) und dachförmige Wicklungsköpfe (30, 30a, 30b) dazwischen derart aufweisen, dass benachbarte geradlinige Drahtabschnitte (28) durch einen dachförmig gebogenen Wicklungskopf (30, 30a, 30b) miteinander verbunden sind, um einen Halbwellenabschnitt (32a, 32b) zu bilden, so dass erste Halbwellenabschnitte (32a) mit in einer ersten Richtung gebogenen ersten Wicklungsköpfen (30a) und zweite Halbwellenabschnitte (32b) mit in einer entgegengesetzten zweiten Richtung gebogenen zweiten Wicklungsköpfen (30b) alternierend vorgesehen sind und jeweils ein erster Halbwellenabschnitt (32a) und ein benachbarter zweiter Halbwellenabschnitt (32b) einen Wellenabschnitt (26) bilden,
b) Zusammenfügen der Wellenwicklungsdrähte (24a-24f) nicht durch Verflechten oder umeinander Schlingen, sondern durch Zusammenstecken der Wellenwicklungsdrähte (24a-24f), umfassend:
b1) nebeneinander Anordnen eines ersten und eines zweiten Wellenwicklungsdrahts (24a, 24b), so dass deren geradlinige Drahtabschnitte mit einer gemeinsamen Richtungskomponente zueinander ausgerichtet sind;
b2) Anordnen eines ersten Teilabschnitts (98-1a) und eines benachbarten zweiten Teilabschnittes (98-2a) des ersten Wellenwicklungsdrahts (24a) so, dass der erste Teilabschnitt (98-1a) höher als der zweite Teilabschnitt (98-2a) liegt, und Anordnen eines dem ersten Teilabschnitt (98-1a) des ersten Wellenwicklungsdrahts (24a) gegenüberliegenden ersten Teilabschnitts (98-1b) des zweiten Wellenwicklungsdrahts (24b) so, dass er unter den ersten Teilabschnitt (98-1a) des ersten Wellenwicklungsdrahts (24a) schiebbar ist, und eines dem zweiten Teilabschnitt (98-2a) des ersten Wellenwicklungsdrahts (24a) gegenüberliegenden zweiten Teilabschnitts (98-2b) des zweiten Wellenwicklungsdrahts (24b) so, dass er über den zweiten Teilabschnitt (98-2a) des ersten Wellenwicklungsdrahts (24a) schiebbar ist, und
b3) Ineinanderschieben des ersten Wellenwicklungsdrahts (24a) und des zweiten Wellenwicklungsdrahts (24b) in Richtung der zueinander ausgerichteten Richtungskomponente der geradlinigen Drahtabschnitte (28), wobei der erste Teilabschnitt (98-1b) des zweiten Wellenwicklungsdrahts (24b) unter den ersten Teilabschnitt (98-1a) des ersten Wellenwicklungsdrahts (24a), in einer quer zur Längsrichtung und quer zur Querrichtung verlaufenden Höhenrichtung, geschoben wird und der zweite Teilabschnitt (98-2b) des zweiten Wellenwicklungsdrahts (24b) über den zweiten Teilabschnitt (98-2a) des ersten Wellenwicklungsdrahts (24a), in einer quer zur Längsrichtung und quer zur Querrichtung verlaufenden Höhenrichtung, geschoben wird

2. Wickelmattenherstellverfahren nach Anspruch 1,
**dadurch gekennzeichnet,**
**dass** Schritt a) wenigstens einen oder mehrere der folgenden Schritte enthält:
a1) Formen der Wicklungsköpfe (30, 30a, 30b) durch Ausbilden jeweils einer mittleren Dachbiegung (58) und je einer Übergangsbiegung (60a, 60b) im Übergangsbereich zu den zugeordneten geradlinigen Drahtabschnitten (28) und jeweils einer Gegenbiegung (64) zwischen den Übergangsbiegungen (60a, 60b) und der Dachbiegung (58);
a2) Bereitstellen der Wellenwicklungsdrähte (24, 24a-24f) mit einer Drahtdicke, die an den geradlinigen Drahtabschnitten (28) sich in einer quer zur Längsrichtung und quer zur Querrichtung verlaufenden Höhenrichtung (HR1, HR2) gemessen über ein Drahtdickenerstreckungsmaß erstreckt,
a3) Bereitstellen von Wellenwicklungsdrähten (24, 24a-24f) mit einem rechteckigen Querschnitt,
a4) Bereitstellen des ersten (24a) und des zweiten Wellenwicklungsdrahts (24b) mit zum Bilden von Kreuzungspunkten (100) ausgebildeten Wickelköpfen (30, 30a, 30b), wobei wenigstens ein Teilbereich wenigstens eines zum Bilden eines Kreuzungspunktes (100) ausgebildeten Wickelkopfs (30, 30a, 30b) des ersten Teilabschnitts (98-1a) des ersten Wellenwicklungsdrahtes (32a) gegenüber den durch diesen Wickelkopf (30, 30a, 30b) verbundenen geradlinigen Drahtabschnitten (28) um eine wenigstens einer halben Drahtdicke entsprechende Höhenerstreckung (HM) höher liegt und ein Teilbereich des zum Bilden eines Kreuzungspunktes (100) ausgebildeten Wickelkopfs (30, 30a, 30b) des ersten Teilabschnitts (98-1b) des zweiten Wellenwicklungsdrahts (24b) gegenüber den durch diesen Wickelkopf (30, 30a, 30b) verbundenen geradlinigen Drahtabschnitten (28) um eine wenigstens einer halben Drahtdicke entsprechende Höhenerstreckung (HM) tiefer liegt und/oder wobei wenigstens ein Teilbereich wenigstens eines zum Bilden eines Kreuzungspunktes (100) ausgebildeten Wickelkopfs (30, 30a, 30b) des zweiten Teilabschnitts (98-2a) des ersten Wellenwicklungsdrahtes (24a) gegenüber den durch diesen Wickelkopf (30, 30a, 30b) verbundenen geradlinigen Drahtabschnitten (28) um eine wenigstens einer halben Drahtdicke entsprechende Höhenerstreckung (HM) tiefer liegt und ein Teilbereich des zum Bilden eines Kreuzungspunktes (100) ausgebildeten Wickelkopfs (30, 30a, 30b) des zweiten Teilabschnitts (98-2b) des zweiten Wellenwicklungsdrahts (24b) gegenüber den durch diesen Wickelkopf (30, 30a, 30b) verbundenen geradlinigen Drahtabschnitten (28) um eine wenigstens einer halben Drahtdicke entsprechende Höhenerstreckung (HM) höher liegt;
a5) Durchführen von Schritt a2) und Einbringen von Höhenversätzen (38a-38c) in die Wickelköpfe (30, 30a, 30b), durch
Biegen eines ersten Höhenversatzes (38a) um ein halbes Höhenerstreckungsmaß (HM) an einem ersten Wicklungskopfabschnitt (62a), der sich an einen ersten geradlinigen Drahtabschnitt (28) anschließt,
Biegen eines zweiten Höhenversatzes (38b) um ein ganzes Höhenerstreckungsmaß (HM) an einem zweiten Wicklungskopfabschnitt (62b), der sich an den ersten Wicklungskopfabschnitt (62a) anschließt, und
Biegen eines dritten Höhenversatzes (38c) um ein halbes Höhenerstreckungsmaß (HM) an einem dritten Wicklungskopfabschnitt (62c), der sich zwischen dem zweiten Wicklungskopfabschnitt (62b) und einem zweiten geradlinigen Drahtabschnitt (28) erstreckt;
a6) Bereitstellen von 3n Wellenwicklungsdrähten, wobei n eine natürliche Zahl größer 0 ist.

3. Wickelmattenherstellverfahren nach Anspruch 2,
**dadurch gekennzeichnet,**
**dass** Schritt a5) Biegen des jeweiligen Höhenversatzes (38a-38c) in eine erste Höhenrichtung (HR1), die im bestimmungsgemäßen Gebrauch der Wickelmatte (40) einer Richtung radial nach außen, bezogen auf eine Zentralachse des Bauteils (12), entspricht, oder in eine entgegengesetzte zweite Höhenrichtung (HR2), die im bestimmungsgemäßen Gebrauch der Wickelmatte (40) einer Richtung radial nach innen, bezogen auf eine Zentralachse des Bauteils (12), entspricht, und
**dass** Schritt a5) wenigstens einen oder mehrere der Schritte umfasst:
a5a) Einbringen des ersten Höhenversatzes (38a) im Bereich einer Übergangsbiegung (60a, 60b) und des dritten Höhenversatzes (38c) im Bereich der anderen Übergangsbiegung (60b, 60a) und des zweiten Höhenversatzes (38b) im Bereich der Dachbiegung (58);
a5b) Ausbilden der Höhenversätze (38a-38c) zum Ausbilden einer Wicklungskopfform (1-6), die ausgewählt ist aus einer Gruppe von Wicklungskopfformen (1-6), die
• eine erste Wicklungskopfform (1), bei der der erste Höhenversatz (38a) in die zweite Höhenrichtung (HR2) gerichtet ist, der zweite Höhenversatz (38b) in die erste Höhenrichtung (HR1) gerichtet ist und der dritte Höhenversatz (38c) in die zweite Höhenrichtung (HR2) gerichtet ist,
• eine zweite Wicklungskopfform (2), bei der der erste Höhenversatz (38a) in die erste Höhenrichtung (HR1) gerichtet ist, der zweite Höhenversatz (38b) in die zweite Höhenrichtung (HR2) gerichtet ist und der dritte Höhenversatz (38c) in die erste Höhenrichtung (HR1) gerichtet ist,
• eine dritte Wicklungskopfform (3), bei der der erste Höhenversatz (38a) in die erste Höhenrichtung (HR1) gerichtet ist, der zweite Höhenversatz (38b) in die erste Höhenrichtung (HR1) gerichtet ist und der dritte Höhenversatz (38c) in die zweite Höhenrichtung (HR2) gerichtet ist,
• eine vierte Wicklungskopfform (4), bei der der erste Höhenversatz (38a) in die erste Höhenrichtung (HR1) gerichtet ist, der zweite Höhenversatz (38b) in die zweite Höhenrichtung (HR2) gerichtet ist und der dritte Höhenversatz (38c) in die zweite Höhenrichtung (HR2) gerichtet ist,
• eine fünfte Wicklungskopfform (5), bei der der erste Höhenversatz (38a) in die zweite Höhenrichtung (HR2) gerichtet ist, der zweite Höhenversatz (38b) in die erste Höhenrichtung (HR1) gerichtet ist und der dritte Höhenversatz (38c) in die erste Höhenrichtung (HR1) gerichtet ist, und
• eine sechste Wicklungskopfform (6), bei der der erste Höhenversatz (38a) in die zweite Höhenrichtung (HR2) gerichtet ist, der zweite Höhenversatz (38b) in die zweite Höhenrichtung (HR2) gerichtet ist und der dritte Höhenversatz (38c) in die erste Höhenrichtung (HR1) gerichtet ist;
a5c) Auswahl wenigstens eines zwischen einem Anfangsbereich (46) und einem Endbereich (48) der Wickelmatte (40) liegenden Standardbereichs (56), und Formen jedes Wicklungskopfes (30, 30a, 30b) in dem Standardbereich (56) so, dass der erste Höhenversatz (38a) und der dritte Höhenversatz (38c) in die gleiche Höhenrichtung (HR1, HR2) gerichtet sind und der zweite Höhenversatz (38b) in die entgegengesetzte Höhenrichtung (HR2, HR1) gerichtet ist;
a5d) Auswahl eines Übergangsbereichs (52), in dem die Wickelmatte (40) eine Stufe in Höhenrichtung (HR1, HR2) zum Ausbilden einer treppenartigen Stufung der Wickelmatte (40, 54) erhalten soll und
Formen von Wicklungsköpfen (30, 30a, 30b) in Wellenwicklungsdrähten (24a-24f) an dem Übergangsbereich (52) so, dass bei wenigstens einem Wicklungskopf (30, 30a, 30b) an dem ersten Wellenwicklungsdraht (24a) der erste Höhenversatz (38a) in die erste Höhenrichtung (HR1) gerichtet ist, der zweite Höhenversatz (38b) in die erste Höhenrichtung (HR1) gerichtet ist und der dritte Höhenversatz (38c) in die zweite Höhenrichtung (HR2) gerichtet ist, und bei wenigstens einem Wicklungskopf (30, 30a, 30b) an dem zweiten Wellenwicklungsdraht (24b) der erste Höhenversatz (38a) in die zweite Höhenrichtung (HR2) gerichtet ist, der zweite Höhenversatz (38b) in die zweite Höhenrichtung (HR2) gerichtet ist und der dritte Höhenversatz (38c) in die erste Höhenrichtung (HR1) gerichtet ist;
a5e) Formen wenigstens eines Wicklungskopfes (30, 30a, 30b) an wenigstens einem des ersten oder zweiten Wellenwicklungsdrahtes (24a, 24b) an einem Anfangsbereich (46) oder einem Endbereich (48) der Wickelmatte (40) so, dass der erste Höhenversatz (38a) in die erste Höhenrichtung (HR1) gerichtet ist, der zweite Höhenversatz (38b) in die zweite Höhenrichtung (HR2) gerichtet ist und der dritte Höhenversatz (38c) in die erste Höhenrichtung (HR1) gerichtet ist oder der erste Höhenversatz (38a) in die zweite Höhenrichtung (HR2) gerichtet ist, der zweite Höhenversatz (38b) in die erste Höhenrichtung (HR1) gerichtet ist und der dritte Höhenversatz (38c) in die erste Höhenrichtung (HR1) gerichtet ist.

4. Wickelmattenherstellverfahren nach einem der voranstehenden Ansprüche,
**gekennzeichnet durch** wenigstens eines der folgenden Merkmale:
4.1 dass wenigstens einige, mehrere oder alle der Teilabschnitte (98-1a, 98-2a, 98-1b, 98-2b) in Schritt b) Halbwellenabschnitte (32a, 32b) oder Wellenabschnitte (26) sind oder jeweils **durch** eine Mehrzahl von Halbwellenabschnitten (32a, 32b) oder Wellenabschnitten (26) gebildet sind;
4.2 dass die Wickelmatte (40) treppenartig gestuft mit wenigstens einem eine Stufe in Höhenrichtung bildenden Übergangsbereich (52) hergestellt wird, wobei in Schritt b) die Teilabschnitte (98-1a, 98-2a, 98-1b, 98-2b) des ersten und zweiten Wellenwicklungsdraht (24a, 24b) in dem Übergangsbereich (52) ineinandergesteckt werden;
4.3 dass in Schritt b) die Teilabschnitte (98-1a, 98-2a, 98-1b, 98-2b) des ersten und des zweiten Wellenwicklungsdrahts (24a, 24b) in einem Anfangsbereich (46) und/oder einem Endbereich (48) der Wickelmatte (40) ineinandergesteckt werden;
4.4 dass der erste und der zweite Wellenwicklungsdraht (24a, 24b) mit ihren ersten und zweiten Teilabschnitten (98-1a, 98-2a, 98-1b, 98-2b) an einem Anfangsbereich (46) der Wickelmatte (40) und/oder an einem Endbereich (48) der Wickelmatte (40) ineinander gesteckt werden und in wenigstens einem dazwischen befindlichen Bereich ohne Ineinanderstecken von Teilabschnitten (98-1a, 98-2a, 98-1b, 98-2b) aufeinanderliegend gestapelt werden;
4.5 dass in Schritt b) jeweils ein Paar oder eine Gruppe (44a) von ersten Wellenwicklungsdrähten (24a, 24b, 24c) in ein Paar oder eine Gruppe (44b) von zweiten Wellenwicklungsdrähten (24d, 24e, 24f) gesteckt werden;
4.6 in Schritt a) wenigstens ein erster, wenigstens ein zweiter und wenigstens ein dritter Wellenwicklungsdraht (24a-24c) bereit gestellt werden und dass in Schritt b) nur der wenigstens eine erste (24a) und der wenigstens eine zweite Wellenwicklungsdraht (24b) gesteckt wird, und dass der wenigstens eine dritte Wellenwicklungsdraht (24c) mit dem wenigstens einen ersten (24a) und wenigstens einen zweiten (24b) Wellenwicklungsdraht **durch** Stapeln und nicht **durch** Stecken zusammengefügt wird; und/oder
4.7 dass Schritt a) einen oder beide der Schritte a4) oder a5) umfasst und Schritt b) weiter umfasst:
b7) Ineinanderstecken des ersten Wellenwicklungsdrahtes (24a) und des zweiten Wellenwicklungsdrahtes (24b) in eine Ausrichtlage, in der die Längsmittelachsen des ersten und des zweiten Wellenwicklungsdrahtes (24a, 24b) aufeinander liegen, wobei sich die geradlinigen Drahtabschnitte (28) des ersten und des zweiten Wellenwicklungsdrahtes (24a, 24b) sich zumindest in einem Standardbereich (56) der Wickelmatte (40) auf einer gemeinsamen Ebene anordnen;
4.8 dass Schritt b) mit der bereits aus mehreren gesteckten Wellenwicklungsdrähten (24a, 24b) gebildeten Einheit und einem weiteren Wellenwicklungsdraht (24c-24f) oder einem Paar oder einer Gruppe von weiteren Wellenwicklungsdrähten (24c-24f) in analoger Weise wie mit dem ersten Wellenwicklungsdraht (24a) und dem zweiten Wellenwicklungsdraht (24b) wiederholt wird, bis alle Wellenwicklungsdrähte (24a-24f) zu der Wickelmatte (40) zusammengefügt sind;
4.9 dass das Wickelmattenherstellverfahren zum Herstellen einer einlagigen Wickelmatte (40) durchgeführt wird, bei der in Längsrichtung der Wicklungsmatte (40) eine Folge von einzelnen nicht übereinanderliegenden geradlinigen Drahtabschnitten (28) vorgesehen ist.

5. Wicklungsmattenherstellverfahren nach einem der voranstehenden Ansprüche, **dadurch gekennzeichnet,**
**dass** in Schritt b) der erste und/oder der zweite Teilabschnitt (98-1a, 98-2a, 98-1b, 98-2b) sowohl des ersten als auch des zweiten Wellenwicklungsdrahtes (24a, 24b) jeweils wenigstens drei Wickelköpfe (30, 30a, 30b) umfasst, so dass jeweils wenigstens ein zentraler Wickelkopf zwischen wenigstens zwei äußeren Wickelköpfen liegt, und dass Schritt b) weiter die nach Schritt b3) durchzuführenden Schritte umfasst:
b4) Ineinanderschieben des ersten und zweiten Wellenwicklungsdrahtes (24a, 24b) über die Ausrichtlage, in der der erste und der zweite Wellenwicklungsdraht mit ihren Längsmittelachsen zueinander ausgerichtet sind, hinaus, bis die Wicklungsköpfe (30), die sich in Schritt b1) auf von der dem jeweils anderen Wellenwicklungsdraht (24b, 24a) abgewandten Seite befunden haben, im Anschlag gegeneinander sind;
b5) Vertauschen der Höhenlage des wenigstens einen zentralen Wickelkopfes (30) des ersten Wellenwicklungsdrahtes (24a) und des zweiten Wellenwicklungsdrahtes (24b) und
b6) Ineinanderschieben des ersten und des zweiten Wellenwicklungsdrahtes (24a, 24b) in die Ausrichtlage.

6. Spulenmattenherstellverfahren zum Herstellen einer Spulenmatte (42), um daraus die Spulenwicklung eines Bauteils (12) einer elektrischen Maschine zu bilden, umfassend:
i) Herstellen einer ersten Einzelmatte (44a) durch Zusammenfügen von 3n₁ einzelner Wellenwicklungsdrähte (24a-24f),
j) Herstellen einer zweiten Einzelmatte (44b) durch Zusammenfügen von 3n₂ einzelner Wellenwicklungsdrähte (24a-24f), und
k) Zusammenfügen der ersten Einzelmatte (44a) und der zweiten Einzelmatte (44b),
wobei n₁ und n₂ natürliche Zahlen größer 0 sind und wobei die Wellenwicklungsdrähte (24a-24f) in Längsrichtung der Spulenmatte (42) beabstandete und sich in einer quer zur Längsrichtung verlaufenden Querrichtung erstreckende geradlinige Drahtabschnitte (28) und dachförmige Wicklungsköpfe (30, 30a, 30b) dazwischen derart aufweisen, dass benachbarte geradlinige Drahtabschnitte (28) durch einen dachförmig gebogenen Wicklungskopf (30, 30a, 30b) miteinander verbunden sind und so Halbwellenabschnitte (32a, 32b) bilden, so dass erste Halbwellenabschnitte (32a) mit in einer ersten Richtung gebogenen ersten Wicklungsköpfen (30a) und zweite Halbwellenabschnitte (32b) mit in einer entgegengesetzten Richtung gebogenen zweiten Wicklungsköpfen (30b) alternierend vorgesehen sind und jeweils ein erster Halbwellenabschnitt (32a) und ein benachbarter zweiter Halbwellenabschnitt (32b) einen Wellenabschnitt (26) bilden,
6.1 wobei wenigstens einer oder beide der Schritte i) und j) Durchführung des Wickelmattenherstellverfahrens nach einem der Ansprüche 1 bis 5 umfassen und/oder
6.2 wobei Schritt k) umfasst:
Zusammenfügen der Einzelmatten (44a, 44b) nicht durch Verflechten oder umeinander Schlingen, sondern durch Zusammenstecken der Einzelmatten (44a, 44b), umfassend:
k1) nebeneinander Anordnen der ersten und der zweiten Einzelmatte (44a, 44b), so dass deren geradlinigen Drahtabschnitte (28) mit einer gemeinsamen Richtungskomponente zueinander ausgerichtet sind;
k2) Anordnen eines ersten Teilabschnitts(102-1a) und eines benachbarten zweiten Teilabschnittes (102-2a) der ersten Einzelmatte (44a) so, dass der erste Teilabschnitt (102-1a) höher als der zweite Teilabschnitt (102-2a) liegt, und Anordnen eines dem ersten Teilabschnitt (102-1a) der ersten Einzelmatte (44a) gegenüberliegenden ersten Teilabschnitts (102-1b) der zweiten Einzelmatte (44b) so, dass er unter den ersten Teilabschnitt (102-1a) der ersten Einzelmatte (44a) schiebbar ist, und eines dem zweiten Teilabschnitt (102-2a) der ersten Einzelmatte (44a) gegenüberliegenden zweiten Teilabschnitts (102-2b) der zweiten Einzelmatte (44b) so, dass er über den zweiten Teilabschnitt (102-2a) der ersten Einzelmatte (44a) schiebbar ist, und
k3) Ineinanderschieben der ersten Einzelmatte (44a) und der zweiten Einzelmatte (44b) in Richtung der zueinander ausgerichteten Richtungskomponente der geradlinigen Drahtabschnitte (28), wobei der erste Teilabschnitt (102-1b) der zweiten Einzelmatte (44b) unter den ersten Teilabschnitt (102-1a) der ersten Einzelmatte (44a) geschoben wird und der zweite Teilabschnitt (102-2b) der zweiten Einzelmatte (44b) über den zweiten Teilabschnitt (102-2a) der ersten Einzelmatte (44a) geschoben wird.

7. Spulenmattenherstellverfahren nach Anspruch 6,
**dadurch gekennzeichnet,**
**dass** in Schritt k) der erste und der zweite Teilabschnitt (102-1a, 102-2a, 102-1b, 102-2b) sowohl der ersten als auch der zweiten Einzelmatte (44a, 44b) jeweils wenigstens drei Wickelkopfgruppen umfasst, so dass jeweils wenigstens eine zentrale Wickelkopfgruppe zwischen wenigstens zwei äußeren Wickelkopfgruppen liegt, und dass Schritt k) weiter die nach Schritt k3) durchzuführenden Schritte umfasst:
k4) Ineinanderschieben der ersten und zweiten Einzelmatte (44a, 44b) über eine Ausrichtlage, in der die erste und die zweite Einzelmatte (44a, 44b) mit ihren Längsmittelachsen zueinander ausgerichtet sind, hinaus, bis die Wicklungsköpfe, die sich in Schritt k1) auf von der der jeweils anderen Einzelmatte (44b, 44a) abgewandten Seite befunden haben, im Anschlag gegeneinander sind;
k5) Vertauschen der Höhenlage der zentralen Wickelkopfgruppen der ersten Einzelmatte (44a) und der zweiten Einzelmatte (44b) und
k6) Ineinanderschieben der ersten und der zweiten Einzelmatte (44a, 44b) in die Ausrichtlage.

8. Spulenmattenherstellverfahren nach einem der Ansprüche 6 oder 7,
**dadurch gekennzeichnet,**
**dass** Schritt i) und j) derart durchgeführt werden, dass jeder Wellenwicklungsdraht (98-1a, 98-2a, 98-1b, 98-2b) in den geradlinigen Drahtabschnitten (28) eine Drahtdicke aufweist, die sich in einer quer zur Längsrichtung und quer zur Querrichtung verlaufenden Höhenrichtung gemessen über ein Drahtdickenmaß erstreckt, und
**dass** jeder Wicklungskopf (30, 30a, 30b) mit einem ersten Höhenversatz (38a) um ein halbes Höhenerstreckungsmaß (HM) an einem ersten Wicklungskopfabschnitt (62a), der sich an einen ersten geradlinigen Drahtabschnitt (28) anschließt, einem zweiten Höhenversatz (38b) um ein ganzes Höhenerstreckungsmaß (HM) an einem zweiten Wicklungskopfabschnitt (62b), der sich an den ersten Wicklungskopfabschnitt (62a) anschließt, und einem dritten Höhenversatz (HM) um ein halbes Höhenerstreckungsmaß (HM) an einem dritten Wicklungskopfabschnitt (62c) versehen wird, der sich zwischen dem zweiten Wicklungskopfbereich (62b) und dem zweiten geradlinigen Drahtabschnitt (28) erstreckt, wobei das Höhenerstreckungsmaß (HM) gleich dem Drahtdickenmaß oder gleich dem Drahtdickenmaß zuzüglich einem vorbestimmten Toleranzmaß eingestellt wird.

9. Spulenmattenherstellverfahren nach Anspruch 8,
**dadurch gekennzeichnet,**
**dass** die Einzelmatten (44a, 44b) treppenartig gestuft mit wenigstens einem eine Stufe in Höhenrichtung bildenden Übergangsbereich (52) ausgebildet werden, so dass die Einzelmatten (44a, 44b) und damit auch die daraus gebildete Spulenmatte (42) einen Anfangsbereich (46), mehrere Standardbereiche (56) mit jeweils einem Übergangsbereich (52) dazwischen und einen Endbereich (48) aufweisen, wobei im bestimmungsgemäßen Gebrauch der Spulenmatte (42) die erste Höhenrichtung (HR1) in den Höhenversätzen der Wicklungsköpfe (30, 30a, 30b) einer Richtung radial nach außen und die zweite Höhenrichtung (HR2) einer Richtung radial nach innen entspricht, dass die einzelnen Wicklungsköpfe (30, 30a, 30b) mit einer Wicklungskopfform (1-6) ausgebildet werden, die ausgewählt wird aus einer Gruppe von Wicklungskopfformen, die
• eine erste Wicklungskopfform (1), bei der der erste Höhenversatz (38a) in die zweite Höhenrichtung (HR2) gerichtet ist, der zweite Höhenversatz (38b) in die erste Höhenrichtung (HR1) gerichtet ist und der dritte Höhenversatz (38c) in die zweite Höhenrichtung (HR2) gerichtet ist,
• eine zweite Wicklungskopfform (2), bei der der erste Höhenversatz (38a) in die erste Höhenrichtung (HR1) gerichtet ist, der zweite Höhenversatz (38b) in die zweite Höhenrichtung (HR2) gerichtet ist und der dritte Höhenversatz (38c) in die erste Höhenrichtung (HR1) gerichtet ist,
• eine dritte Wicklungskopfform (3), bei der der erste Höhenversatz (38a) in die erste Höhenrichtung (HR1) gerichtet ist, der zweite Höhenversatz (38b) in die erste Höhenrichtung (HR1) gerichtet ist und der dritte Höhenversatz (38c) in die zweite Höhenrichtung (HR2) gerichtet ist,
• eine vierte Wicklungskopfform (4), bei der der erste Höhenversatz (38a) in die erste Höhenrichtung (HR1) gerichtet ist, der zweite Höhenversatz (38b) in die zweite Höhenrichtung (HR2) gerichtet ist und der dritte Höhenversatz (38c) in die zweite Höhenrichtung (HR2) gerichtet ist,
• eine fünfte Wicklungskopfform (5), bei der der erste Höhenversatz (38a) in die zweite Höhenrichtung (HR2) gerichtet ist, der zweite Höhenversatz (38b) in die erste Höhenrichtung (HR1) gerichtet ist und der dritte Höhenversatz (38c) in die erste Höhenrichtung (HR1) gerichtet ist, und
• eine sechste Wicklungskopfform (6), bei der der erste Höhenversatz (38a) in die zweite Höhenrichtung (HR2) gerichtet ist, der zweite Höhenversatz (38b) in die zweite Höhenrichtung (HR2) gerichtet ist und der dritte Höhenversatz (38c) in die erste Höhenrichtung (HR1) gerichtet ist, umfasst,
und **dass** in den Standardbereichen (56) Wicklungsköpfe (30, 30a, 30b) mit der ersten (1) oder der zweiten Wicklungskopfform (2) vorgesehen werden und dass wenigstens einige der Wellenwicklungsdrähte (24a-24f) in dem Übergangsbereich (52) Wicklungsköpfe mit einer oder mehreren der dritten bis sechsten Wicklungskopfform (3-6) erhalten.

10. Spulenmattenherstellverfahren nach Anspruch 9,
**dadurch gekennzeichnet,**
**dass** die erste und die zweite Einzelmatte (44a, 44b) aufeinander gestapelt werden und
10.1 dass
• bei der ersten Einzelmatte (4a)
in dem Anfangsbereich (46) und in den Standardbereichen (56) die Wicklungsköpfe (30) die zweite Wicklungskopfform (2) erhalten, in dem Übergangsbereich (52) die Wicklungsköpfe (30) wenigstens eines Wellenwicklungsdrahts (24a-24f) oder einer Gruppe von Wellenwicklungsdrähten (24a-24f) die vierte Wicklungskopfform (4) und die Wicklungsköpfe (30) wenigstens eines anderen Wellenwicklungsdrahtes (24a-24f) oder einer anderen Gruppe von Wellenwicklungsdrähten (24a-24f) die sechste Wellenwicklungsform (6) erhalten und an dem Endbereich (48) die Wicklungsköpfe (30) des wenigstens einen oder der wenigstens einen Gruppe von Wellenwicklungsdrähten (24a-24f) die vierte Wicklungskopfform (4) erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die vierte Wicklungskopfform (4) erhalten, in den Standardbereichen (56) sowie in dem Endbereich (48) die Wicklungsköpfe (30) die erste Wicklungskopfform (1) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) die vierte Wicklungskopfform (4) und die Wicklungsköpfe (30) wenigstens eines anderen Wellenwicklungsdrahtes (24a-24f) oder einer anderen Gruppe von Wellenwicklungsdrähten (24a-24f) die sechste Wellenwicklungsform (6) erhalten; oder
10.2 dass
• bei der ersten Einzelmatte (44a)
in dem Anfangsbereich (46) und in den Standardbereichen (56) die Wicklungsköpfe (30) die erste Wicklungskopfform (1) erhalten, in dem Übergangsbereich (52) die Wicklungsköpfe (30) wenigstens eines Wellenwicklungsdrahts (24a-24f) oder einer Gruppe von Wellenwicklungsdrähten (24a-24f) die fünfte Wicklungskopfform (5) und die Wicklungsköpfe (30) wenigstens eines anderen Wellenwicklungsdrahtes (24a-24f) oder einer anderen Gruppe von Wellenwicklungsdrähten (24a-24f) die dritte Wellenwicklungsform (3) erhalten und an dem Endbereich (48) die Wicklungsköpfe (30) des wenigstens einen oder der wenigstens einen Gruppe von Wellenwicklungsdrähten (24a-24f) die fünfte Wicklungskopfform (5) erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die fünfte Wicklungskopfform (5) erhalten, in den Standardbereichen (56) sowie in dem Endbereich (48) die Wicklungsköpfe (30) die zweite Wicklungskopfform (2) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) die fünfte Wicklungskopfform (5) und die Wicklungsköpfe (30) wenigstens eines anderen Wellenwicklungsdrahtes (24a-24f) oder einer anderen Gruppe von Wellenwicklungsdrähten (24a-24f) die dritte Wellenwicklungsform (3) erhalten; oder
10.3 dass
• bei der ersten Einzelmatte (44a)
in dem Anfangsbereich (46) und in den Standardbereichen (24a-24f) die Wicklungsköpfe (30) die erste Wicklungskopfform (1) erhalten, in dem Übergangsbereich (52) die Wicklungsköpfe (30) wenigstens eines Wellenwicklungsdrahts (24a-24f) oder einer Gruppe von Wellenwicklungsdrähten (24a-24f) die sechste Wicklungskopfform (6) und die Wicklungsköpfe (30) wenigstens eines anderen Wellenwicklungsdrahtes (24a-24f) oder einer anderen Gruppe von Wellenwicklungsdrähten (24a-24f) die vierte Wellenwicklungsform (4) erhalten und an dem Endbereich (48) die Wicklungsköpfe (30) des wenigstens einen oder der wenigstens einen Gruppe von Wellenwicklungsdrähten (24a-24f) die sechste Wicklungskopfform (6) erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die sechste Wicklungskopfform (6) erhalten, in den Standardbereichen (56) sowie in dem Endbereich (48) die Wicklungsköpfe (30) die zweite Wicklungskopfform (2) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) die sechste Wicklungskopfform (6) und die Wicklungsköpfe (30) wenigstens eines anderen Wellenwicklungsdrahtes (24a-24f) oder einer anderen Gruppe von Wellenwicklungsdrähten (24a-24f) die vierte Wellenwicklungsform (4) erhalten; oder
10.4 dass
• bei der ersten Einzelmatte (44a) in dem Anfangsbereich (46) und in den Standardbereichen (56) die Wicklungsköpfe (30) die zweite Wicklungskopfform (2) erhalten, in dem Übergangsbereich (52) die Wicklungsköpfe (30) wenigstens eines Wellenwicklungsdrahts (24a-24f) oder einer Gruppe von Wellenwicklungsdrähten (24a-24f) die dritte Wicklungskopfform (3) und die Wicklungsköpfe (30) wenigstens eines anderen Wellenwicklungsdrahtes (24a-24f) oder einer anderen Gruppe von Wellenwicklungsdrähten (24a-24f) die fünfte Wellenwicklungsform (5) erhalten und an dem Endbereich (48) die Wicklungsköpfe (30) des wenigstens einen (24a-24f) oder der wenigstens einen Gruppe von Wellenwicklungsdrähten (24a-24f) die dritte Wicklungskopfform (3) erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die dritte Wicklungskopfform (3) erhalten, in den Standardbereichen (56) sowie in dem Endbereich (48) die Wicklungsköpfe (30) die erste Wicklungskopfform (1) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) die dritte Wicklungskopfform (3) und die Wicklungsköpfe (30) wenigstens eines anderen Wellenwicklungsdrahtes (24a-24f) oder einer anderen Gruppe von Wellenwicklungsdrähten (24a-24f) die fünfte Wellenwicklungsform (5) erhalten.

11. Spulenmattenherstellverfahren nach Anspruch 9,
**dadurch gekennzeichnet,**
**dass** sowohl die erste Einzelmatte (44a) als auch die zweite Einzelmatte (44b) durch ein Wickelmattenherstellverfahren nach einem der Ansprüche 1 bis 5 hergestellt werden und dass die erste und die zweite Einzelmatte gemäß Anspruch 6, Alternative 6.2 ineinander gesteckt werden und
11.1 dass
• bei der ersten Einzelmatte (44a)
in dem Anfangsbereich (46) die Wicklungsköpfe (30) wenigstens eines Wellenwicklungsdrahtes (24a-24f) oder jedes Wellenwicklungsdrahts einer Gruppe von Wellenwicklungsdrähten (24a-24f) die sechste Wicklungskopfform (6) erhalten, in den Standardbereichen (56) die Wicklungsköpfe (30) die zweite Wicklungskopfform (1) erhalten, in dem Übergangsbereich (52) die Wicklungsköpfe (30) des wenigstens einen Wellenwicklungsdrahts (24a-24f) oder der einen Gruppe von Wellenwicklungsdrähten (24a-24f) eine Folge aus wenigstens einer dritten (3) und wenigstens zwei sechsten (6) Wicklungskopfformen erhalten und die Wicklungsköpfe (30) wenigstens eines anderen Wellenwicklungsdrahtes (24a-24f) oder einer anderen Gruppe von Wellenwicklungsdrähten (24a-24f) eine Folge aus wenigstens einer ersten (1) und wenigstens einer vierten (4) Wellenwicklungsform erhalten und an dem Endbereich (48) die Wicklungsköpfe (30) des wenigstens einen oder der wenigstens einen Gruppe von Wellenwicklungsdrähten (24a-24f) ein Folge aus wenigstens einer dritten (3) und wenigstens einer sechsten (6) Wicklungskopfform erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die sechste Wicklungskopfform (6) erhalten und die Wicklungsköpfe (30) eines anderen Wellenwicklungsdrahts (24a-24f) oder einer anderen Gruppe von Wellenwicklungsdrähten (24a-24f) die dritte Wicklungskopfform (3) erhalten, in den Standardbereichen (56) die Wicklungsköpfe (30) die erste Wicklungskopfform (1) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) eine Folge aus wenigstens einer zweiten (2) und wenigstens einer sechsten (6) Wicklungskopfform erhalten und die Wicklungsköpfe (30) wenigstens eines anderen Wellenwicklungsdrahtes (24a-24f) oder einer anderen Gruppe von Wellenwicklungsdrähten (24a-24f) eine Folge aus wenigstens einer sechsten (6), wenigstens einer vierten (4) und wenigstens einer dritten (3) Wicklungskopfform erhalten und in dem Endbereich (48) die Wicklungsköpfe (30) des einen Wellenwicklungsdrahtes (24a-24f) oder der einen Gruppe von Wellenwicklungsdrähten (24a-24f) die zweite Wicklungskopfform (2) erhalten und die Wicklungsköpfe (30) des anderen Wellenwicklungsdrahtes (24a-24f) oder der anderen Gruppe von Wellenwicklungsdrähten (24a-24f) die sechste Wicklungskopfform (6) erhalten; oder
11.2 dass
• bei der ersten Einzelmatte (44a)
in dem Anfangsbereich (46) die Wicklungsköpfe (30) wenigstens eines Wellenwicklungsdrahtes (24a-24f) oder jedes Wellenwicklungsdrahts einer Gruppe von Wellenwicklungsdrähten (24a-24f) die dritte Wicklungskopfform (3) erhalten, in den Standardbereichen (56) die Wicklungsköpfe (30) die erste Wicklungskopfform (1) erhalten, in dem Übergangsbereich (52) die Wicklungsköpfe (30) des wenigstens einen Wellenwicklungsdrahts (24a-24f) oder der einen Gruppe von Wellenwicklungsdrähten (24a-24f) eine Folge aus wenigstens einer sechsten (6) und wenigstens zwei dritten (3) Wicklungskopfformen erhalten und die Wicklungsköpfe (30) wenigstens eines anderen Wellenwicklungsdrahtes (24a-24f) oder einer anderen Gruppe von Wellenwicklungsdrähten (24a-24f) eine Folge aus wenigstens einer zweiten (2) und wenigstens einer fünften (5) Wellenwicklungsform erhalten und an dem Endbereich (48) die Wicklungsköpfe (30) des wenigstens einen oder der wenigstens einen Gruppe von Wellenwicklungsdrähten (24a-24f) ein Folge aus wenigstens einer sechsten (6) und wenigstens einer dritten (3) Wicklungskopfform erhalten; und
• bei der zweiten Einzelmatte (44b)
in dem Anfangsbereich (46) die Wicklungsköpfe (30) wenigstens eines Wellenwicklungsdrahtes (24a-24f) oder wenigstens einer Gruppe von Wellenwicklungsdrähten (24a-24f) die dritte Wicklungskopfform (3) erhalten und die Wicklungsköpfe (30) eines anderen Wellenwicklungsdrahts (24a-24f) oder einer anderen Gruppe von Wellenwicklungsdrähten (24a-24f) die sechste Wicklungskopfform (6) erhalten, in den Standardbereichen (56) die Wicklungsköpfe (30) die zweite Wicklungskopfform (2) erhalten und in dem Übergangsbereich (52) die Wicklungsköpfe (30) des wenigstens einen Wellenwicklungsdrahts (24a-24f) oder der einen Gruppe von Wellenwicklungsdrähten (24a-24f) eine Folge aus wenigstens einer ersten (1) und wenigstens einer dritten (3) Wicklungskopfform erhalten und die Wicklungsköpfe (30) wenigstens eines anderen Wellenwicklungsdrahtes (24a-24f) oder einer anderen Gruppe von Wellenwicklungsdrähten (24a-24f) eine Folge aus wenigstens einer dritten (3), wenigstens einer fünften (5) und wenigstens einer sechsten (6) Wicklungskopfform erhalten und in dem Endbereich (48) die Wicklungsköpfe (30) des einen Wellenwicklungsdrahtes (24a-24f) oder der einen Gruppe von Wellenwicklungsdrähten (24a-24f) die erste Wicklungskopfform (1) erhalten und die Wicklungsköpfe (30) des anderen Wellenwicklungsdrahtes (24a-24f) oder der anderen Gruppe von Wellenwicklungsdrähten (24a-24f) die dritte Wicklungskopfform (3) erhalten.

12. Herstellen eines Bauteils (12) einer elektrischen Maschine umfassend:
Bereitstellen eines Bauteilkörpers, Durchführen eines Verfahrens nach einem der voranstehenden Ansprüche und Aufwickeln der so erhaltenen Matte (40, 42), um die eine Spulenwicklung des Bautels (12) der elektrischen Maschine zu erhalten, und Einfügen der aufgewickelten Matte (40, 42) in den Bauteilkörper.

13. Vorrichtung zum Durchführen des Verfahrens nach einem der voranstehenden Ansprüche, umfassend:
eine Bereitstelleinrichtung (66) zum Bereitstellen von Wellenwicklungsdrähten (24a-24f) oder Einzelmatten (44a, 44b), wobei die Bereitstelleinrichtung eine Wellenwicklungsdrahtherstelleinrichtung (68) zum Biegen der Wellenabschnitte (26) aus einem Draht und/oder eine Wicklungskopfformeinrichtung (70) zum Formen der Wicklungsköpfe (30) aufweist,
eine Steckeinrichtung zum Zusammenstecken der Wellenwicklungsdrähte (24a-24f) bzw. der Einzelmatten (44a, 44b) durch eine Bewegung derselben zueinander in einer quer zu deren Längsrichtung verlaufenden Richtung und eine Steuerung, die dazu eingerichtet ist, die Vorrichtung zum Durchführen der Schritte des Verfahrens eines der Ansprüche 1 bis 12 zu steuern.

14. Vorrichtung nach Anspruch 13,
**dadurch gekennzeichnet,**
**dass** die Wellenkopfformeinrichtung (70) mehrere Biegebacken (78a, 78b) mit Biegeradien zum Formen der Höhenversätze (38a, 38b, 38c) aufweist.

15. Computerprogrammprodukt oder Computerprogramm, umfassend maschinenlesbare Steueranweisungen, die, wenn in einen Rechner der Steuerung der Vorrichtung nach Anspruch 13 geladen, die Vorrichtung zum Durchführen der Schritte des Verfahrens eines der Ansprüche 1 bis 12 veranlassen.

## Claims

1. Method for producing a winding mat (40) to form a coil winding of a component (12) of an electrical machine from it, comprising:
a) providing a plurality of longitudinally extending wave winding wires (24a-24f) bent in a wave shape having longitudinally spaced straight wire sections (28) extending in a transverse direction transverse to the longitudinal direction and roof-shaped winding heads (30, 30a, 30b) therebetween such that adjacent straight wire sections (28) are interconnected by a roof-shaped bent winding head (30, 30a, 30b) to form a half-wave section (32a, 32b), such that first half-wave sections (32a) having first winding heads (30a) bent in a first direction and second half-wave sections (32b) having second winding heads (30b) bent in an opposite second direction are alternately provided, and a first half-wave section (32a) and an adjacent second half-wave section (32b) each form a wave section (26),
b) joining the wave winding wires (24a-24f) together not by braiding or looping one around the other, but by plugging the wave winding wires (24a-24f) together, comprising:
b1) arranging a first and a second wave winding wire (24a, 24b) side by side so that their straight wire sections are aligned to each other with a common directional component;
b2) arranging a first subsection (98-1a) and an adjacent second subsection (98-2a) of the first wave winding wire (24a) so that the first subsection (98-1a) is higher than the second subsection (98-2a), and arranging a first subsection (98-1b) of the second wave winding wire (24b) opposite to the first subsection (98- 1a) of the first wave winding wire (24a) such that it can be slid under the first subsection (98-1a) of the first wave winding wire (24a), and of a second subsection (98-2b) of the second wave winding wire (24b) opposite to the second subsection (98-2a) of the first wave winding wire (24a) such that it can be slid over the second subsection (98-2a) of the first wave winding wire (24a), and
b3) sliding the first wave winding wire (24a) and the second wave winding wire (24b) into each other in the direction of the mutually aligned direction component of the straight wire sections (28), wherein the first subsection (98-1b) of the second wave winding wire (24b) is slid under the first subsection (98-1a) of the first subsection (98-1a) of the first wave winding wire (24a) in a height direction transverse to the longitudinal direction and transverse to the transverse direction, and the second subsection (98-2b) of the second wave winding wire (24b) is slid over the second subsection (98-2a) of the first wave winding wire (24a) in a height direction transverse to the longitudinal direction and transverse to the transverse direction.

2. Method for producing a winding mat according to claim 1,
**characterized in that**
step a) comprises at least one or more of the following steps:
a1) shaping the winding heads (30, 30a, 30b) by forming in each case a central roof bend (58) and in each case a transition bend (60a, 60b) in the transition region to the associated straight wire sections (28) and in each case a counter-bend (64) between the transition bends (60a, 60b) and the roof bend (58);
a2) providing the wave winding wires (24, 24a-24f) having a wire thickness extending at the straight wire sections (28) in a height direction (HR1, HR2) transverse to the longitudinal direction and transverse to the transverse direction measured over a wire thickness extension dimension,
a3) providing wave winding wires (24, 24a-24f) having a rectangular cross-section,
a4) providing the first (24a) and the second wave winding wires (24b) with winding heads (30, 30a, 30b) designed to form crossing points (100), wherein at least a subsection of at least one winding head (30, 30a, 30b) of the first subsection (98-1a) of the first wave winding wire (32a) designed to form a crossing point (100) is higher by a height extension (HM) corresponding to at least half a wire thickness than the straight wire sections (28) connected by winding head (30, 30a, 30b), and a subsection of the winding head (30, 30a, 30b) of the first subsection (98-1b) of the second wave winding wire (24b) designed to form a crossing point (100) is lower by a height extension (HM) corresponding to at least half a wire thickness than the straight wire sections (28) connected by this winding head (30, 30a, 30b) and/or
wherein at least a subsection of at least one winding head (30, 30a, 30b) of the second subsection (98-2a) of the first wave winding wire (24a) designed to form a crossing point (100) is lower by a height extension (HM) corresponding to at least half a wire thickness than the straight wire sections (28) connected by this winding head (30, 30a, 30b), and a subsection of the winding head (30, 30a, 30b) of the second subsection (98-2b) of the second wave winding wire (24b) designed to form a crossing point (100) is higher by a height extension (HM) corresponding to at least half a wire thickness than the straight wire sections (28) connected by this winding head (30, 30a, 30b);
a5) performing step a2) and introducing height offsets (38a-38c) into the winding heads (30, 30a, 30b) by
bending a first height offset (38a) by half a height extension dimension (HM) at a first winding head portion (62a) adjacent to a first straight wire section (28),
bending a second height offset (38b) by an entire height extension dimension (HM) at a second winding head portion (62b) adjoining the first winding head portion (62a), and
bending a third height offset (38c) by half a height extension dimension (HM) at a third winding head portion (62c) extending between the second winding head portion (62b) and a second straight wire section (28);
a6) providing 3n wave winding wires, where n is a natural number greater than 0.

3. Method for producing a winding mat according to claim 2, **characterized in that** step a5) comprises bending the respective height offset (38a-38c) in a first height direction (HR1) which, in the intended use of the winding mat (40), corresponds to a direction radially outwards with respect to a central axis of the component (12), or in an opposite second height direction (HR2) which, in the intended use of the winding mat (40), corresponds to a direction radially inwards with respect to a central axis of the component (12), and step a5) comprises at least one or more of the steps:
a5a) introducing the first height offset (38a) in the region of one transition bend (60a, 60b) and the third height offset (38c) in the region of the other transition bend (60b, 60a) and the second height offset (38b) in the region of the roof bend (58);
a5b) forming said height offsets (38a-38c) for forming a winding head shape (1-6) selected from a group of winding head shapes (1-6) comprising
• a first winding head shape (1) in which the first height offset (38a) is directed in the second height direction (HR2), the second height offset (38b) is directed in the first height direction (HR1), and the third height offset (38c) is directed in the second height direction (HR2)
• a second winding head shape (2) in which the first height offset (38a) is directed in the first height direction (HR1), the second height offset (38b) is directed in the second height direction (HR2) and the third height offset (38c) is directed in the first height direction (HR1)
• a third winding head shape (3) in which the first height offset (38a) is directed in the first height direction (HR1), the second height offset (38b) is directed in the first height direction (HR1), and the third height offset (38c) is directed in the second height direction (HR2)
• a fourth winding head shape (4) in which the first height offset (38a) is directed in the first height direction (HR1), the second height offset (38b) is directed in the second height direction (HR2), and the third height offset (38c) is directed in the second height direction (HR2)
• a fifth winding head shape (5) in which the first height offset (38a) is directed in the second height direction (HR2), the second height offset (38b) is directed in the first height direction (HR1), and the third height offset (38c) is directed in the first height direction (HR1), and
• a sixth winding head shape (6) in which the first height offset (38a) is directed in the second height direction (HR2), the second height offset (38b) is directed in the second height direction (HR2), and the third height offset (38c) is directed in the first height direction (HR1);
a5c) selecting at least one standard region (56) located between a start region (46) and an end region (48) of the winding mat (40) and forming each winding head (30, 30a, 30b) in the standard region (56) such that the first height offset (38a) and the third height offset (38c) are directed in the same height direction (HR1, HR2) and the second height offset (38b) is directed in the opposite height direction (HR2, HR1);
a5d) selecting a transition region (52) in which the winding mat (40) is to be given a step in the height direction (HR1, HR2) for forming a stair-like step of the winding mat (40, 54), and forming winding heads (30, 30a, 30b) in wave winding wires (24a-24f) at the transition region (52) such that, in at least one winding head (30, 30a, 30b) at the first wave winding wire (24a) the first height offset (38a) is directed in the first height direction (HR1), the second height offset (38b) is directed in the first height direction (HR1), and the third height offset (38c) is directed in the second height direction (HR2), and in at least one winding head (30, 30a, 30b) at the second wave winding wire (24b) the first height offset (38a) is directed in the second height direction (HR2), the second height offset (38b) is directed in the second height direction (HR2), and the third height offset (38c) is directed in the first height direction (HR1);
a5e) forming at least one winding head (30, 30a, 30b) on at least one of the first or second wave winding wires (24a, 24b) at a start region (46) or at an end region (48) of the winding mat (40) such that the first height offset (38a) is directed in the first height direction (HR1), the second height offset (38b) is directed in the second height direction (HR2), and the third height offset (38c) is directed in the first height direction (HR1), or the first height offset (38a) is directed in the second height direction (HR2), the second height offset (38b) is directed in the first height direction (HR1), and the third height offset (38c) is directed in the first height direction (HR1).

4. Method for producing a winding mat according to any one of the preceding claims, **characterized by** at least one of the following features:
4.1 that at least some, several or all of the subsections (98-1a, 98-2a, 98-1b, 98-2b) in step b) are half-wave sections (32a, 32b) or wave sections (26) or are each formed by a plurality of half-wave sections (32a, 32b) or wave sections (26);
4.2 that the winding mat (40) is produced in a stepped manner with at least one transition region (52) forming a step in the height direction, wherein in step b) the subsections (98-1a, 98-2a, 98-1b, 98-2b) of the first and second wave winding wires (24a, 24b) are plugged into one another in the transition region (52);
4.3 that, in step b), the subsections (98-1a, 98-2a, 98-1b, 98-2b) of the first and second wave winding wires (24a, 24b) are plugged into one another at a start region (46) and/or an end region (48) of the winding mat (40);
4.4 that the first and second wave winding wires (24a, 24b) with their first and second subsections (98-1a, 98-2a, 98-1b, 98-2b) are plugged into each other at a start region (46) of the winding mat (40) and/or at an end region (48) of the winding mat (40); and, in at least one region located therebetween, are stacked one on top of the other without plugging subsections (98-1a, 98-2a, 98-1b, 98-2b) into one another;
4.5 that, in step b), a pair or group (44a) of first wave winding wires (24a, 24b, 24c) are respectively plugged into a pair or group (44b) of second wave winding wires (24d, 24e, 24f);
4.6 that, in step a), at least one first, at least one second, and at least one third wave winding wire (24a-24c) are provided and that in step b) only the at least one first (24a) and the at least one second wave winding wire (24b) are plugged and that the at least one third wave winding wire (24c) is assembled with the at least one first (24a) and at least one second (24b) wave winding wire by stacking and not by plugging; and/or
4.7 that step a) comprises one or both of steps a4) or a5) and further comprises step b):
b7) plugging the first wave winding wire (24a) and the second wave winding wire (24b) into one another in an alignment position in which the longitudinal center axes of the first and second wave winding wires (24a, 24b) lie on top of each other, wherein the straight wire sections (28) of the first and second wave winding wires (24a, 24b) align on a common plane at least in a standard region (56) of the winding mat (40);
4.8 that step b) is repeated with the unit already formed from a plurality of plugged wave winding wires (24a, 24b) and a further wave winding wire (24c-24f) or a pair or group of further wave winding wires (24c-24f) in an analogous manner as with the first wave winding wire (24a) and the second wave winding wire (24b) until all the wave winding wires (24a-24f) are joined together to form the winding mat (40);
4.9 that the winding mat production method is carried out to produce a single-layer winding mat (40) in which a succession of individual non-overlapping straight wire sections (28) is provided in the longitudinal direction of the winding mat (40).

5. Method for producing a winding mat according to any one of the preceding claims,
**characterized in that**
in step b), the first and/or the second subsection (98-1a, 98-2a, 98-1b, 98-2b) of both the first and the second wave winding wire (24a, 24b) each comprise at least three winding heads (30, 30a, 30b), so that at least one central winding head is located between at least two outer winding heads in each case, and that step b) further comprises the steps to be performed according to step b3):
b4) sliding the first and second wave winding wires (24a, 24b) into one another beyond the alignment position in which the first and second wave wires are aligned with their longitudinal center axes with respect to one another until the winding heads (30), which in step b1) were located on the side facing away from the respective other wave winding wire (24b, 24a), are in abutment against one another;
b5) interchanging the height position of the at least one central winding head (30) of the first wave winding wire (24a) and of the second wave winding wire (24b); and
b6) sliding the first and second wave winding wires (24a, 24b) into the alignment position.

6. Method for producing a coil mat (42) to form the coil winding of a component (12) of an electrical machine from it, comprising:
i) producing a first individual mat (44a) by assembling 3n₁ individual wave winding wires (24a-24f),
j) producing a second individual mat (44b) by assembling 3n₂ individual wave winding wires (24a-24f), and
k) joining the first individual mat (44a) and the second individual mat (44b) together, wherein n₁ and n₂ are natural numbers greater than 0, and wherein the wave winding wires (24a-24f) comprise straight wire sections (28) spaced apart in the longitudinal direction of the coil mat (42) and extending in a transverse direction transverse to the longitudinal direction, and roof-shaped winding heads (30, 30a, 30b) therebetween such that adjacent straight wire sections (28) are interconnected by a roof-shaped bent winding head (30, 30a, 30b) to form half-wave sections (32a, 32b), such that first half-wave sections (32a) having first winding heads (30a) bent in a first direction and second half-wave sections (32b) having second winding heads (30b) bent in an opposite direction are provided alternately, and a first half-wave section (32a) and an adjacent second half-wave section (32b) each form a wave section (26),
6.1 wherein at least one or both of steps i) and j) comprise carrying out the winding mat production method according to any one of claims 1 to 5, and/or
6.2 wherein step k) comprises:
joining the individual mats (44a, 44b) together not by braiding or looping them around each other, but by plugging the individual mats (44a, 44b) together, comprising:
k1) arranging the first and second individual mats (44a, 44b) side by side so that their straight wire sections (28) are aligned with each other with a common directional component;
k2) arranging a first subsection (102-1a) and an adjacent second subsection (102-2a) of said first individual mat (44a) such that said first subsection (102-1a) is higher than said second subsection (102-2a), and arranging a first subsection (102-1b) of the first individual mat (44b) opposite to said first subsection (102-1a) of the second individual mat (44b) such that it can be slid under the first subsection (102-1a) of said first individual mat (44a), and a second subsection (102-2b) of the second individual mat (44b) opposite the second subsection (102-2a) of the first individual mat (44a) such that it can be slid over the second subsection (102-2a) of the first individual mat (44a), and
k3) sliding the first individual mat (44a) and the second individual mat (44b) into each other in the direction of the mutually aligned directional component of the straight wire sections (28), wherein the first subsection (102-1b) of the second individual mat (44b) is slid under the first subsection (102-1a) of the first individual mat (44a), and the second subsection (102-2b) of the second individual mat (44b) is slid over the second subsection (102-2a) of the first individual mat (44a).

7. Method for producing a coil mat according to claim 6, **characterized in that** in step k) the first and the second subsection (102-1a, 102-2a, 102-1b, 102-2b) of both the first and the second individual mat (44a, 44b) each comprise at least three winding head groups, so that in each case at least one central winding head group is located between at least two outer winding head groups, and **in that** step k) further comprises the steps to be carried out after step k3):
k4) sliding the first and second individual mats (44a, 44b) into one another beyond an alignment position in which the first and second individual mats (44a, 44b) are aligned with their longitudinal center axes with respect to one another until the winding heads, which in step k1) were located on the side facing away from the respective other individual mat (44b, 44a), are in abutment against one another;
k5) interchanging the height position of the central winding head groups of the first single mat (44a) and the second single mat (44b); and
k6) sliding the first and second individual mats (44a, 44b) into each other in the alignment position.

8. Method for producing a coil mat according to any one of claims 6 or 7, **characterized in that**
steps i) and j) are performed such that each wave winding wire (98-1a, 98-2a, 98-1b, 98-2b) has a wire thickness in the straight wire sections (28) that extends over a wire thickness dimension measured in a height direction transverse to the longitudinal direction and transverse to the transverse direction, and
that each winding head (30, 30a, 30b) has a first height offset (38a) by a half height extension dimension (HM) at a first winding head portion (62a) adjoining a first straight wire portion (28), a second height offset (38b) by a whole height extension dimension (HM) at a second winding head portion (62b) adjoining the first winding head portion (62a), and a third height offset (HM) by half a height extension amount (HM) at a third winding head portion (62c) extending between the second winding head portion (62b) and the second straight wire portion (28), wherein the height extension amount (HM) is set equal to the wire thickness amount or equal to the wire thickness amount plus a predetermined tolerance amount.

9. Method for producing a coil mat according to claim 8, **characterized in that**
the individual mats (44a, 44b) are formed in a stepped manner with at least one transition region (52) forming a step in the height direction, so that the individual mats (44a, 44b) and thus also the coil mat (42) formed therefrom have a start region (46), a plurality of standard regions (56), each with a transition region (52) therebetween, and an end region (48), wherein, in the intended use of the coil mat (42), the first height direction (HR1) in the height offsets of the winding heads (30, 30a, 30b) corresponds to a radially outward direction and the second height direction (HR2) corresponds to a radially inward direction,
that the individual winding heads (30, 30a, 30b) are formed with a winding head shape (1-6) which is selected from a group of winding head shapes comprising
• a first winding head shape (1) in which the first height offset (38a) is directed in the second height direction (HR2), the second height offset (38b) is directed in the first height direction (HR1), and the third height offset (38c) is directed in the second height direction (HR2),
• a second winding head shape (2) in which the first height offset (38a) is directed in the first height direction (HR1), the second height offset (38b) is directed in the second height direction (HR2), and the third height offset (38c) is directed in the first height direction (HR1),
• a third winding head shape (3) in which the first height offset (38a) is directed in the first height direction (HR1), the second height offset (38b) is directed in the first height direction (HR1), and the third height offset (38c) is directed in the second height direction (HR2)
• a fourth winding head shape (4) in which the first height offset (38a) is directed in the first height direction (HR1), the second height offset (38b) is directed in the second height direction (HR2), and the third height offset (38c) is directed in the second height direction (HR2),
• a fifth winding head shape (5) in which the first height offset (38a) is directed in the second height direction (HR2), the second height offset (38b) is directed in the first height direction (HR1), and the third height offset (38c) is directed in the first height direction (HR1), and
• a sixth winding head shape (6) in which the first height offset (38a) is directed in the second height direction (HR2), the second height offset (38b) is directed in the second height direction (HR2), and the third height offset (38c) is directed in the first height direction (HR1), and
**in that** winding heads (30, 30a, 30b) having the first (1) or the second winding head shape (2) are provided in the standard regions (56), and **in that** at least some of the wave winding wires (24a-24f) in the transition region (52) are given winding heads having one or more of the third to sixth winding head shapes (3-6).

10. Method producing a coil mat according to claim 9, **characterized in that** the first and second individual mats (44a, 44b) are stacked on top of each other, and
10.1 that
• in the first individual mat (4a),
in the start region (46) and in the standard regions (56), the winding heads (30) are given the second winding head shape (2) in the transition region (52), the winding heads (30) of at least one wave winding wire (24a-24f) or of a group of wave winding wires (24a-24f) are given the fourth winding head shape (4), and the winding heads (30) of at least one other wave winding wire (24a- 24f) or another group of wave winding wires (24a-24f) are given the sixth wave winding shape (6), and at the end portion (48), the winding heads (30) of the at least one or the at least one group of wave winding wires (24a-24f) are given the fourth winding head shape (4); and
• in the second individual mat (44b),
in the start region (46), the winding heads (30) of at least one wave winding wire (24a-24f) or at least one group of wave winding wires (24a-24f) are given the fourth winding head shape (4), in the standard regions (56) as well as in the end region (48) the winding heads (30) are given the first winding head shape (1), and in the transition region (52) the winding heads (30) of the at least one wave winding wire (24a-24f) or of the one group of wave winding wires (24a- 24f) are given the fourth winding head shape (4), and the winding heads (30) of at least one other wave winding wire (24a-24f) or of another group of wave winding wires (24a-24f) are given the sixth wave winding shape (6); or
10.2 that
• in the first individual mat (44a),
in the start region (46) and in the standard regions (56), the winding heads (30) are given the first winding head shape (1), in the transition region (52) the winding heads (30) of at least one wave winding wire (24a-24f) or of a group of wave winding wires (24a-24f) are given the fifth winding head shape (5), and the winding heads (30) of at least one other wave winding wire (24a- 24f) or another group of wave winding wires (24a-24f) are given the third wave winding shape (3), and at the end region (48), the winding heads (30) of the at least one or the at least one group of wave winding wires (24a-24f) are given the fifth winding head shape (5); and
• in the second individual mat (44b),
in the start region (46), the winding heads (30) of at least one wave winding wire (24a-24f) or at least one group of wave winding wires (24a-24f) are given the fifth winding head shape (5), in the standard regions (56) as well as in the end region (48) the winding heads (30) are given the second winding head shape (2), and in the transition region (52) the winding heads (30) of the at least one wave winding wire (24a-24f) or of the one group of wave winding wires (24a- 24f) are given the fifth winding head shape (5), and the winding heads (30) of at least one other wave winding wire (24a-24f) or of another group of wave winding wires (24a-24f) are given the third wave winding shape (3); or
10.3 that
• in the first individual mat (44a),
in the start region (46) and in the standard regions (24a-24f), the winding heads (30) are given the first winding head shape (1), in the transition region (52) the winding heads (30) of at least one wave winding wire (24a-24f) or of a group of wave winding wires (24a-24f) are given the sixth winding head shape (6), and the winding heads (30) of at least one other wave winding wire (24a- 24f) or another group of wave winding wires (24a-24f) are given the fourth wave winding shape (4), and at the end portion (48) the winding heads (30) of the at least one or the at least one group of wave winding wires (24a-24f) are given the sixth winding head shape (6); and
• in the second individual mat (44b),
in the start region (46), the winding heads (30) of at least one wave winding wire (24a-24f) or at least one group of wave winding wires (24a-24f) are given the sixth winding head shape (6), in the standard regions (56) as well as in the end region (48) the winding heads (30) are given the second winding head shape (2), and in the transition region (52) the winding heads (30) of the at least one wave winding wire (24a- 24f) or of the one group of wave winding wires (24a-24f) are given the sixth winding head shape (6), and the winding heads (30) of at least one other wave winding wire (24a-24f) or of another group of wave winding wires (24a-24f) obtain the fourth wave winding shape (4); or
10.4 that
• in the first individual mat (44a),
in the start region (46) and in the standard regions (56), the winding heads (30) are given the second winding head shape (2), in the transition region (52) the winding heads (30) of at least one wave winding wire (24a- 24f) or of a group of wave winding wires (24a-24f) are given the third winding head shape (3), and the winding heads (30) of at least one other wave winding wire (24a- 24f) or of another group of wave winding wires (24a-24f) are given the fifth wave winding shape (5), and at the end region (48) the winding heads (30) of the at least one (24a-24f) or of the at least one group of wave winding wires (24a-24f) are given the third winding head shape (3); and
• in the second individual mat (44b),
in the start region (46), the winding heads (30) of at least one wave winding wire (24a-24f) or at least one group of wave winding wires (24a-24f) are given the third winding head shape (3), in the standard regions (56) as well as in the end region (48) the winding heads (30) are given the first winding head shape (1), and in the transition region (52) the winding heads (30) of the at least one wave winding wire (24a-24f) or of the one group of wave winding wires (24a- 24f) are given the third winding head shape (3), and the winding heads (30) of at least one other wave winding wire (24a-24f) or of another group of wave winding wires (24a- 24f) are given the fifth wave winding shape (5).

11. Method for producing a coil mat according to claim 9, **characterized in that** both the first single mat (44a) and the second single mat (44b) are manufactured by a coil mat production method according to any one of claims 1 to 5, and that the first and the second single mat are plugged into one another according to claim 6, alternative 6.2 and
11.1 that
• in the first individual mat (44a),
in the start region (46), the winding heads (30) of at least one wave winding wire (24a-24f) or of each wave winding wire of a group of wave winding wires (24a-24f) are given the sixth winding head shape (6), in the standard regions (56) the winding heads (30) are given the second winding head shape (1), in the transition region (52) the winding heads (30) of the at least one wave winding wire (24a-24f) or of the one group of wave winding wires (24a-24f) are given a sequence of at least one third (3) and at least two sixth (6) winding head shapes, and the winding heads (30) of at least one other wave winding wire (24a- 24f) or of another group of wave winding wires (24a- 24f) are given a sequence of at least one first (1) and at least one fourth (4) wave winding shape, and at the end region (48) the winding heads (30) of the at least one or the at least one group of wave winding wires (24a-24f) are given a sequence of at least one third (3) and at least one sixth (6) winding head shape; and
• in the second single mat (44b),
in the start region (46), the winding heads (30) of at least one wave winding wire (24a-24f) or at least one group of wave winding wires (24a-24f) are given the sixth winding head shape (6), and the winding heads (30) of another wave winding wire (24a-24f) or another group of wave winding wires (24a-24f) are given the third winding head shape (3), in the standard regions (56) the winding heads (30) are given the first winding head shape (1), and in the transition region (52) the winding heads (30) of the at least one wave winding wire (24a-24f) or of the one group of wave winding wires (24a- 24f) are given a sequence of at least one second (2) and at least one sixth (6) winding head shape, and the winding heads (30) of at least one other wave winding wire (24a-24f) or of another group of wave winding wires (24a-24f) are given a sequence of at least one sixth (6), at least one fourth (4), and at least one third (3) winding head shape, and in the end region (48) the winding heads (30) of the one wave winding wire (24a-24f) or of the one group of wave winding wires (24a-24f) are given the second winding head shape (2), and the winding heads (30) of the other wave winding wire (24a-24f) or of the other group of wave winding wires (24a-24f) are given the sixth winding head shape (6); or
11.2 that
• in the first individual mat (44a),
in the start region (46), the winding heads (30) of at least one wave winding wire (24a-24f) or each wave winding wire of a group of wave winding wires (24a-24f) are given the third winding head shape (3), in the standard regions (56) the winding heads (30) are given the first winding head shape (1), in the transition region (52) the winding heads (30) of the at least one wave winding wire (24a-24f) or of the one group of wave winding wires (24a-24f) are given a sequence of at least one sixth (6) and at least two third (3) winding head shapes, and the winding heads (30) of at least one other wave winding wire (24a-24f) or of another group of wave winding wires (24a- 24f) are given a sequence of at least one second (2) and at least one fifth (5) wave winding shape, and at the end region (48) the winding heads (30) of the at least one or the at least one group of wave winding wires (24a-24f) are given a sequence of at least one sixth (6) and at least one third (3) winding head shape; and
• in the second individual mat (44b),
in the start region (46), the winding heads (30) of at least one wave winding wire (24a-24f) or at least one group of wave winding wires (24a-24f) are given the third winding head shape (3), and the winding heads (30) of another wave winding wire (24a-24f) or another group of wave winding wires (24a- 24f) are given the sixth winding head shape (6), in the standard regions (56) the winding heads (30) are given the second winding head shape (2), and in the transition region (52) the winding heads (30) of the at least one wave winding wire (24a-24f) or of the one group of wave winding wires (24a- 24f) are given a sequence of at least one first (1) and at least one third (3) winding head shape, and the winding heads (30) of at least one other wave winding wire (24a-24f) or of another group of wave winding wires (24a-24f) are given a sequence of at least one third (3), at least one fifth (5) and at least one sixth (6) winding head shape and, in the end region (48), the winding heads (30) of the one wave winding wire (24a-24f) or of the one group of wave winding wires (24a- 24f) are given the first winding head shape (1), and the winding heads (30) of the other wave winding wire (24a-24f) or of the other group of wave winding wires (24a-24f) are given the third winding head shape (3).

12. Manufacturing a component (12) of an electric machine comprising:
providing a component body, performing a method according to any one of the preceding claims, and winding the mat (40, 42) thus obtained to obtain the one coil winding of the electric machine component (12), and inserting the wound mat (40, 42) into the component body.

13. Apparatus for carrying out the method according to any one of the preceding claims, comprising:
a supply device (66) for supplying wave winding wires (24a-24f) or individual mats (44a, 44b), the supply device comprising a wave winding wire manufacturing device (68) for bending the wave sections (26) from a wire and/or a winding head shaping device (70) for shaping the winding heads (30),
a plugging device for plugging together the wave winding wires (24a-24f) and the individual mats (44a, 44b), respectively, by moving them relative to each other in a direction transverse to their longitudinal direction, and a controller adapted to control the apparatus for performing the steps of the method of any one of claims 1 to 12.

14. Apparatus according to claim 13,
**characterized in that**
the winding head shaping device (70) comprises a plurality of bending jaws (78a, 78b) having bending radii for forming the height offsets (38a, 38b, 38c).

15. A computer program product or computer program comprising machine-readable control instructions which, when loaded into a computer of the controller of the apparatus of claim 13, cause the apparatus to perform the steps of the method of any one of claims 1 to 12.

## Revendications

1. Procédé de fabrication d'une natte d'enroulement pour fabriquer une natte d'enroulement (40) afin de former à partir de celui-ci un enroulement de bobine d'un composant (12) d'une machine électrique, comprenant:
a) fournir une pluralité de fils d'enroulement ondulés (24a-24f) courbé en forme d'onde s'étendant dans une direction longitudinale, comprenant des sections de fil rectilignes (28) espacées longitudinalement et s'étendant dans une direction transversale transversalement à la direction longitudinale, et des têtes d'enroulement en forme de toit (30, 30a, 30b) entre elles, de sorte que des sections de fil rectilignes adjacentes (28) sont reliées par une tête d'enroulement (30, 30a, 30b) courbée en forme de toit pour former une section demi-onde (32a, 32b), de sorte que des premières sections demi-onde (32a) avec des premières têtes d'enroulement (30a) courbées dans une première direction et des secondes sections demi-onde (32b) avec des secondes têtes d'enroulement (30b) courbées dans une seconde direction opposée sont prévues en alternance, et une première section demi-onde (32a) et une seconde section demi-onde (32b) adjacente forment chacune une section d'onde (26),
b) assemblage des fils d'enroulement ondulés (24a-24f), non pas par tressage ou par enroulement, mais par emboîtement des fils d'enroulement ondulés (24a-24f), comprenant:
b1) la juxtaposition d'un premier et d'un second fil d'enroulement ondulé (24a, 24b) de sorte que leurs sections de fil rectilignes soient alignées l'une par rapport à l'autre avec une composante directionnelle commune;
b2) disposer une première sous-section (98-1a) et une deuxième sous-section adjacente (98-2a) du premier fil d'enroulement ondulé (24a) de telle sorte que la première sous-section (98-1a) soit plus haute que la deuxième sous-section (98-2a), et disposer une première sous-section (98-1b) du deuxième fil d'enroulement ondulé (24b) opposée à la première sous-section (98-1a) du premier fil d'enroulement ondulé (24a) de manière à pouvoir être glissée sous la première sous-section (98-1a) du premier fil d'enroulement ondulé (24a), et une deuxième sous-section(98-2b) du deuxième fil d'enroulement ondulé (24b) opposée à la deuxième sous-section (98-2a) du premier fil d'enroulement ondulé (24a) de manière à pouvoir être glissée sur la deuxième sous-section (98-2a) du premier fil d'enroulement ondulé (24a), et
b3) l'insertion l'un dans l'autre du premier fil d'enroulement ondulé (24a) et du deuxième fil d'enroulement ondulé (24b) dans la direction de la composante directionnelle alignée l'une par rapport à l'autre des sections de fil rectilignes (28), la première sous-section (98-1b) du deuxième fil d'enroulement ondulé (24b) étant glissée sous la première sous-section (98-1a) du premier fil d'enroulement ondulé (24a), dans une direction de la hauteur transversale à la direction longitudinale et transversale à la direction transversale, et la deuxième sous-section (98-2b) du deuxième fil d'enroulement ondulé (24b) étant glissée sur la deuxième sous-section (98-2a) du premier fil d'enroulement ondulé (24a), dans une direction de la hauteur transversale à la direction longitudinale et transversale à la direction transversale.

2. Procédé de fabrication d'une natte d'enroulement selon la revendication 1, **caractérisé en ce que**
l'étape a) comprend au moins une ou plusieurs des étapes suivantes:
a1) former les têtes d'enroulement (30, 30a, 30b) en réalisant respectivement une courbure en toit centrale (58) et respectivement une courbure de transition (60a, 60b) dans la zone de transition vers les sections de fil rectilignes associées (28) et respectivement une contre-courbure (64) entre les courbures de transition (60a, 60b) et la courbure en toit (58);
a2) fournir les fils d'enroulement ondulé (24, 24a-24f) ayant une épaisseur de fil qui, au niveau des parties de fil rectilignes (28), s'étend dans une direction de la hauteur (HR1, HR2) transversale à la direction longitudinale et transversale à la direction transversale, mesurée sur une mesure d'extension d'épaisseur de fil,
a3) fournir des fils d'enroulement ondulé (24, 24a-24f) ayant une section transversale rectangulaire,
a4) mise à disposition du premier (24a) et du deuxième (24b) fil d'enroulement ondulé avec des têtes d'enroulement (30, 30a, 30b) conçues pour former des points de croisement (100), au moins une zone partielle d'au moins une tête d'enroulement (30, 30a, 30b), conçue pour former un point de croisement (100), de la première sous-section (98-1a) du premier fil d'enroulement ondulé (32a) étant située plus haute d'une extension en hauteur (HM) correspondant au moins à une demi-épaisseur de fil par rapport aux sections de fil rectilignes (28) reliés par cette tête d'enroulement (30, 30a, 30b), et une zone partielle de la tête d'enroulement (30, 30a, 30b), conçue pour former un point de croisement (100), de la première sous-section (98-1b) du deuxième fil d'enroulement ondulé (24b) étant située plus basse d'une extension en hauteur (HM) correspondant à au moins une demi-épaisseur de fil par rapport aux sections de fil rectilignes (28) reliés par cette tête d'enroulement (30, 30a, 30b) et/ou au moins une zone partielle d'au moins une tête d'enroulement (30, 30a, 30b), conçue pour former un point de croisement (100), de la deuxième sous-section (98-2a) du premier fil d'enroulement ondulé (24a) étant située plus bas d'une extension en hauteur (HM) correspondant au moins à une demi-épaisseur de fil par rapport aux sections de fil rectilignes (28) reliées par cette tête d'enroulement (30, 30a, 30b), et une zone partielle de la tête d'enroulement (30, 30a, 30b), conçue pour former un point de croisement (100), de la deuxième sous-section (98-2b) du deuxième fil d'enroulement ondulé (24a) étant située de la deuxième section partielle (98-2b) du deuxième fil d'enroulement ondulé (24b) est plus haute d'une extension en hauteur (HM) correspondant au moins à une demi-épaisseur de fil par rapport aux sections de fil rectilignes (28) reliées par cette tête d'enroulement (30, 30a, 30b);
a5) effectuer l'étape a2) et introduire des décalages en hauteur (38a-38c) dans les têtes d'enroulement (30, 30a, 30b), par
le pliage d'un premier décalage en hauteur (38a) d'une demi-mesure d'extension en hauteur (HM) au niveau d'une première partie de tête d'enroulement (62a) qui est adjacente à une première partie de fil rectiligne (28),
le pliage d'un deuxième décalage en hauteur (38b) d'une mesure entière d'extension en hauteur (HM) au niveau d'une deuxième partie de tête d'enroulement (62b) qui est adjacente à la première partie de tête d'enroulement (62a), et
le pliage d'un troisième décalage en hauteur (38c) d'une demi-mesure d'extension en hauteur (HM) au niveau d'une troisième partie de tête d'enroulement (62c) qui s'étend entre la deuxième partie de tête d'enroulement (62b) et une deuxième partie de fil rectiligne (28);
a6) fournir 3n fils d'enroulement ondulé, où n est un nombre naturel supérieur à 0.

3. Procédé de fabrication d'une natte d'enroulement selon la revendication 2,
**caractérisé en ce que**
l'étape a5) comprend plier le décalage en hauteur respectif (38a-38c) dans une première direction en hauteur (HR1) qui, dans l'utilisation conforme à la destination de la natte d'enroulement (40), correspond à une direction radialement vers l'extérieur, par rapport à un axe central de l'élément de construction (12), ou dans une deuxième direction en hauteur opposée (HR2) qui, dans l'utilisation conforme à la destination de la natte d'enroulement (40), correspond à une direction radialement vers l'intérieur, par rapport à un axe central de l'élément de construction (12), et
**en ce que** l'étape a5) comprend au moins une ou plusieurs des étapes:
a5a) formation du premier décalage en hauteur (38a) dans la zone d'une courbure de transition (60a, 60b) et du troisième décalage en hauteur (38c) dans la zone de l'autre courbure de transition (60b, 60a) et du deuxième décalage en hauteur (38b) dans la zone de la courbure en toit (58);
a5b) former les décalages en hauteur (38a-38c) pour former une forme de tête d'enroulement (1-6) choisie parmi un groupe de formes de tête d'enroulement (1-6) comprenant
• une première forme de tête d'enroulement (1), dans laquelle le premier décalage en hauteur (38a) est orienté dans la deuxième direction de la hauteur (HR2), le deuxième décalage en hauteur (38b) est orienté dans la première direction de la hauteur (HR1) et le troisième décalage en hauteur (38c) est orienté dans la deuxième direction de la hauteur (HR2),
• une deuxième forme de tête d'enroulement (2), dans laquelle le premier décalage en hauteur (38a) est orienté dans la première direction de la hauteur (HR1), le deuxième décalage en hauteur (38b) est orienté dans la deuxième direction de la hauteur (HR2) et le troisième décalage en hauteur (38c) est orienté dans la première direction de la hauteur (HR1),
• une troisième forme de tête d'enroulement (3), dans laquelle le premier décalage en hauteur (38a) est orienté dans la première direction de la hauteur (HR1), le deuxième décalage en hauteur (38b) est orienté dans la première direction de la hauteur (HR1) et le troisième décalage en hauteur (38c) est orienté dans la deuxième direction de la hauteur (HR2),
• une quatrième forme de tête d'enroulement (4), dans laquelle le premier décalage en hauteur (38a) est orienté dans la première direction de la hauteur (HR1), le deuxième décalage en hauteur (38b) est orienté dans la deuxième direction de la hauteur (HR2) et le troisième décalage en hauteur (38c) est orienté dans la deuxième direction de la hauteur (HR2),
• une cinquième forme de tête d'enroulement (5), dans laquelle le premier décalage en hauteur (38a) est orienté dans la deuxième direction de la hauteur (HR2), le deuxième décalage en hauteur (38b) est orienté dans la première direction de la hauteur (HR1) et le troisième décalage en hauteur (38c) est orienté dans la première direction de la hauteur (HR1), et
• une sixième forme de tête d'enroulement (6), dans laquelle le premier décalage en hauteur (38a) est orienté dans la deuxième direction de la hauteur (HR2), le deuxième décalage en hauteur (38b) est orienté dans la deuxième direction de la hauteur (HR2) et le troisième décalage en hauteur (38c) est orienté dans la première direction de la hauteur (HR1);
a5c) sélectionner au moins une zone standard (56) située entre une zone de début (46) et
une zone de fin (48) de la natte d'enroulement (40) et former chaque tête d'enroulement (30, 30a, 30b) dans la zone standard (56) de sorte que le premier décalage en hauteur (38a) et le troisième décalage en hauteur (38c) soient orientés dans la même direction de la hauteur (HR1, HR2) et que le deuxième décalage en hauteur (38b) soit orienté dans la direction de la hauteur opposée (HR2, HR1);
a5d) sélectionner une zone de transition (52) dans laquelle la natte d'enroulement (40) doit recevoir une marche dans la direction de la hauteur (HR1, HR2) pour former une marche en escalier de la natte d'enroulement (40, 54), et
former des têtes d'enroulement (30, 30a, 30b) dans des fils d'enroulement ondulés (24a-24f) au niveau de la zone de transition (52) de telle sorte que, pour au moins une tête d'enroulement (30, 30a, 30b) sur le premier fil d'enroulement ondulé (24a), le premier décalage en hauteur (38a) est orienté dans la première direction de la hauteur (HR1), le deuxième décalage en hauteur (38b) est orienté dans la première direction de la hauteur (HR1) et le troisième décalage en hauteur (38c) est orienté dans la deuxième direction de la hauteur (HR2), et pour au moins une tête d'enroulement (30, 30a, 30b) sur le deuxième fil d'enroulement ondulé (24b), le premier décalage en hauteur (38a) est orienté dans la deuxième direction de la hauteur (HR2), le deuxième décalage en hauteur (38b) est orienté dans la deuxième direction de la hauteur (HR2) et le troisième décalage en hauteur (38c) est orienté dans la première direction de la hauteur (HR1);
a5e) former au moins une tête d'enroulement (30, 30a, 30b) sur au moins l'un du premier ou du deuxième fil d'enroulement ondulé (24a, 24b) au niveau d'une zone de début (46) ou d'une zone de fin (48) de la natte d'enroulement (40) de telle sorte que le premier décalage en hauteur (38a) est orienté dans la première direction de la hauteur (HR1), le deuxième décalage en hauteur (38b) est orienté dans la deuxième direction de la hauteur (HR2) et le troisième décalage en hauteur (38c) est orienté dans la première direction de la hauteur (HR1) ou le premier décalage en hauteur (38a) est orienté dans la deuxième direction de la hauteur (HR2), le deuxième décalage en hauteur (38b) est orienté dans la première direction de la hauteur (HR1) et le troisième décalage en hauteur (38c) est orienté dans la première direction de la hauteur (HR1).

4. Procédé de fabrication d'une natte d'enroulement selon l'une quelconque des revendications précédentes,
**caractérisé par** au moins une des caractéristiques suivantes:
4.1 au moins quelques, plusieurs ou toutes les sous-sections (98-1a, 98-2a, 98-1b, 98-2b) à l'étape b) sont des sections demi-ondes (32a, 32b) ou des sections ondulées (26) ou sont formées chacune par une pluralité de sections demi-ondes (32a, 32b) ou de sections ondulées (26);
4.2 la natte d'enroulement (40) est fabriqué en gradins à la manière d'un escalier avec au moins une zone de transition (52) formant une marche dans la direction de la hauteur, les - sous-sections (98-1a, 98-2a, 98-1b, 98-2b) du premier et du deuxième fil d'enroulement ondulé (24a, 24b) étant emboîtées l'une dans l'autre dans la zone de transition (52) à l'étape b);
4.3 à l'étape b), les sous-sections (98-1a, 98-2a, 98-1b, 98-2b) du premier et du deuxième fil d'enroulement ondulé (24a, 24b) sont emboîtées l'une dans l'autre dans une zone de début (46) et/ou une zone de fin (48) de la natte d'enroulement (40);
4.4 le premier et le deuxième fil d'enroulement ondulé (24a, 24b) sont fixés par leurs premier et deuxième sous-sections (98-1a, 98-2a, 98-1b, 98-2b) à une zone de début (46) de la natte d'enroulement (40) et/ou sont emboîtées les unes dans les autres à une zone de fin (48) de la natte d'enroulement (40) et sont empilées les unes sur les autres sans emboîtement des sous-sections (98-1a, 98-2a, 98-1b, 98-2b) dans au moins une zone se trouvant entre elles;
4.5 à l'étape b), une paire ou un groupe (44a) de premiers fils d'enroulement ondulé (24a, 24b, 24c) sont respectivement enfichés dans une paire ou un groupe (44b) de deuxièmes fils d'enroulement ondulé (24d, 24e, 24f);
4.6 à l'étape a), au moins un premier fil d'enroulement ondulé, au moins un deuxième fil d'enroulement ondulé et au moins un troisième fil d'enroulement ondulé (24a-24c) sont mis à disposition et à l'étape b), seul ledit au moins un premier fil d'enroulement ondulé (24a) et ledit au moins un deuxième fil d'enroulement ondulé (24b) sont enfichés et ledit au moins un troisième fil d'enroulement ondulé (24c) est assemblé avec ledit au moins un premier fil d'enroulement ondulé (24a) et ledit au moins un deuxième fil d'enroulement ondulé (24b) par empilement et non par enfichage; et/ou
4.7 l'étape a) comprend l'une des étapes a4) ou a5) ou les deux, et l'étape b) comprend en outre:
b7) l'emboîtement du premier fil d'enroulement ondulé (24a) et du deuxième fil d'enroulement ondulé (24b) dans une position d'alignement dans laquelle les axes centraux longitudinaux du premier et du deuxième fil d'enroulement ondulé (24a, 24b) se trouvent l'un sur l'autre, les sections de fil rectilignes (28) du premier et du deuxième fil d'enroulement ondulé (24a, 24b) se disposant sur un plan commun au moins dans une zone standard (56) de la natte d'enroulement (40);
4.8 l'étape b) est répétée avec l'unité déjà formée de plusieurs fils d'enroulement ondulé (24a, 24b) enfichés et d'un autre fil d'enroulement ondulé (24c-24f) ou d'une paire ou d'un groupe d'autres fils d'enroulement ondulé (24c-24f) de la même manière qu'avec le premier fil d'enroulement ondulé (24a) et le deuxième fil d'enroulement ondulé (24b), jusqu'à ce que tous les fils d'enroulement ondulé (24a-24f) soient assemblés pour former la natte d'enroulement (40);
4.9 le procédé de fabrication d'une natte d'enroulement est mis en oeuvre pour la fabrication d'une natte d'enroulement (40) à une couche, dans lequel il est prévu, dans la direction longitudinale de la natte d'enroulement (40), une succession de sections de fil (28) rectilignes individuels non superposés.

5. Procédé de fabrication d'une natte d'enroulement selon l'une quelconque des revendications précédentes,
**caractérisé en ce que**
à l'étape b), la première et/ou la deuxième sous-section (98-1a, 98-2a, 98-1b, 98-2b) tant du premier que du deuxième fil d'enroulement ondulé (24a, 24b) comprend respectivement au moins trois têtes d'enroulement (30, 30a, 30b), de sorte que respectivement au moins une tête d'enroulement centrale se trouve entre au moins deux têtes d'enroulement extérieures, et **en ce que** l'étape b) comprend en outre les étapes à exécuter selon l'étape b3):
b4) l'insertion du premier et du deuxième fil d'enroulement ondulé (24a, 24b) l'un dans l'autre au-delà de la position d'alignement dans laquelle le premier et le deuxième fil d'enroulement ondulé sont alignés l'un par rapport à l'autre avec leurs axes centraux longitudinaux, jusqu'à ce que les têtes d'enroulement (30), qui se trouvaient à l'étape b1) sur le côté opposé à l'autre fil d'enroulement ondulé (24b, 24a), soient en butée l'une contre l'autre;
b5) échange de la position en hauteur de ladite au moins une tête d'enroulement centrale (30) du premier fil d'enroulement ondulé (24a) et du deuxième fil d'enroulement ondulé (24b); et
b6) l'insertion du premier et du deuxième fil d'enroulement ondulé (24a, 24b) l'un dans l'autre dans la position d'alignement.

6. Procédé de fabrication d'une natte de bobine pour fabriquer une natte de bobine (42) pour en former l'enroulement de bobine d'un composant (12) d'une machine électrique, comprenant:
i) fabriquer une première natte individuelle (44a) en assemblant 3n₁ fils d'enroulement ondulé individuels (24a-24f),
j) fabriquer une deuxième natte individuelle (44b) par assemblage de 3n₂ fils d'enroulement ondulé individuels (24a-24f), et
k) assembler la première natte individuelle (44a) et la deuxième natte individuelle (44b), où n₁ et n₂ sont des nombres naturels supérieurs à 0, et où les fils d'enroulement ondulé (24a-24f) comprennent des sections de fil rectilignes (28) espacées dans la direction longitudinale de la matte de bobine (42) et s'étendant dans une direction transversale transversale à la direction longitudinale, et des têtes d'enroulement en forme de toit (30, 30a, 30b) entre elles, de sorte que des sections de fil rectilignes adjacentes (28) sont reliées par une tête d'enroulement (30, 30a, 30b) courbée en forme de toit pour former des sections demi-onde (32a, 32b), de sorte que des premières sections demi-onde (32a) avec des premières têtes d'enroulement (30a) courbées dans une première direction et des deuxièmes sections demi-onde (32b) avec des deuxièmes têtes d'enroulement (30b) courbées dans une seconde direction opposée sont prévues en alternance, et une première section demi-onde (32a) et une seconde section demi-onde (32b) adjacente forment chacune une section d'onde (26),
6.1 dans lequel au moins l'une des étapes i) et j) ou les deux comprennent la mise en oeuvre du procédé de fabrication d'une natte d'enroulement selon l'une des revendications 1 à 5 et/ou
6.2 dans lequel l'étape k) comprend:
assembler les nappes individuelles (44a, 44b) non pas en les tressant ou en les enroulant les unes autour des autres, mais en les insérant les unes dans les autres, comprenant:
k1) disposer côte à côte la première et la deuxième matte individuelle (44a, 44b) de sorte que leurs sections de fil rectilignes (28) soient alignées l'une par rapport à l'autre avec une composante directionnelle commune;
k2) disposer une première section partielle (102-1a) et une deuxième section partielle adjacente (102-2a) de la première natte individuelle (44a) de telle sorte que la première section partielle (102-1a) soit située plus haut que la deuxième section partielle (102-2a), et disposer une première section partielle (102-1b) de la deuxième natte individuelle (44b) opposée à la première section partielle (102-1a) de la première natte individuelle (44a) de manière à pouvoir être glissée sous la première section partielle (102-1a) de la première natte individuelle (44a), et une deuxième section partielle (102-2b) de la deuxième natte individuelle (44b), opposée à la deuxième section partielle (102-2a) de la première natte individuelle (44a) de manière à pouvoir être glissée sur la deuxième section partielle (102-2a) de la première natte individuelle (44a), et
k3) insérer la première natte individuelle (44a) et la deuxième natte individuelle (44b) l'une dans l'autre dans la direction des composantes directionnelles alignées des sections de fil rectilignes (28), la première section partielle (102-1b) de la deuxième natte individuelle (44b) étant glissée sous la première section partielle (102-1a) de la première natte individuelle (44a) et la deuxième section partielle (102-2b) de la deuxième natte individuelle (44b) étant glissée sur la deuxième section partielle (102-2a) de la première natte individuelle (44a).

7. Procédé de fabrication d'une natte de bobine selon la revendication 6,
**caractérisé en ce que**
à l'étape k), la première et la deuxième sections partielles (102-1a, 102-2a, 102-1b, 102-2b) aussi bien de la première que de la deuxième natte individuelle (44a, 44b) comprennent chacune au moins trois groupes de têtes d'enroulement, de sorte qu'au moins un groupe de têtes d'enroulement central se trouve à chaque fois entre au moins deux groupes de têtes d'enroulement extérieurs, et **en ce que** l'étape k) comprend en outre les étapes à exécuter après l'étape k3):
k4) insérer les première et deuxième natte individuelles (44a, 44b) l'une dans l'autre au-delà d'une position d'alignement dans laquelle les première et deuxième natte individuelles (44a, 44b) sont alignés l'une par rapport à l'autre avec leurs axes centraux longitudinaux, jusqu'à ce que les têtes d'enroulement, qui se trouvaient à l'étape k1) sur le côté opposé à l'autre natte individuelle (44b, 44a), soient en butée l'une contre l'autre;
k5) échanger la position en hauteur des groupes de têtes d'enroulement centraux de la première natte individuelle (44a) et de la deuxième natte individuelle (44b); et
k6) insérer la première et la deuxième natte individuelle (44a, 44b) l'une dans l'autre dans la position d'alignement.

8. Procédé de fabrication d'une natte de bobine selon l'une quelconque des revendications 6 ou 7,
**caractérisé en ce que**
les étapes i) et j) sont effectuées de telle sorte que chaque fil d'enroulement ondulé (98-1a, 98-2a, 98-1b, 98-2b) présente, dans les sections de fil rectilignes (28), une épaisseur de fil qui s'étend sur une mesure d'épaisseur de fil mesurée dans une direction de la hauteur s'étendant transversalement à la direction longitudinale et transversalement à la direction transversale, et
**en ce que** chaque tête d'enroulement (30, 30a, 30b) présente un premier décalage en hauteur (38a) d'une demi-mesure d'extension en hauteur (HM) au niveau d'une première partie de tête d'enroulement (62a) qui est adjacente à une première section de fil rectiligne (28), un deuxième décalage en hauteur (38b) d'une mesure d'extension en hauteur entière (HM) au niveau d'une deuxième partie de tête d'enroulement (62b) qui est adjacente à la première partie de tête d'enroulement (62a), et un troisième décalage en hauteur (HM) d'une demi-mesure d'extension en hauteur (HM) au niveau d'une troisième partie de tête d'enroulement (62c) qui s'étend entre la deuxième partie de tête d'enroulement (62b) et la deuxième section de fil rectiligne (28), dans lequel la mesure d'extension en hauteur (HM) est réglée égale à la mesure d'épaisseur de fil ou égale à la mesure d'épaisseur de fil plus une mesure de tolérance prédéterminée.

9. Procédé de fabrication d'une natte de bobine selon la revendication 8,
**caractérisé en ce que**
les nattes individuelles (44a, 44b) sont formés en gradins avec au moins une zone de transition (52) formant une marche dans le sens de la hauteur, de sorte que les nattes individuelles (44a, 44b) et donc aussi les nattes de bobines (42) formé à partir de ceux-ci présentent une zone de début (46), plusieurs zones standard (56) avec respectivement une zone de transition (52) entre elles et une zone de fin (48), la première direction de la hauteur (HR1) dans les décalages en hauteur des têtes d'enroulement (30, 30a, 30b) correspondant à une direction radiale vers l'extérieur et la deuxième direction de la hauteur (HR2) à une direction radiale vers l'intérieur dans l'utilisation prévue de la natte de bobine (42), **en ce que** les têtes d'enroulement individuelles (30, 30a, 30b) sont formées avec une forme de tête d'enroulement (1-6) qui est choisie parmi un groupe de formes de têtes d'enroulement qui comprend
• une première forme de tête d'enroulement (1), dans laquelle le premier décalage en hauteur (38a) est orienté dans la deuxième direction de la hauteur (HR2), le deuxième décalage en hauteur (38b) est orienté dans la première direction de la hauteur (HR1) et le troisième décalage en hauteur (38c) est orienté dans la deuxième direction de la hauteur (HR2),
• une deuxième forme de tête d'enroulement (2), dans laquelle le premier décalage en hauteur (38a) est orienté dans la première direction de la hauteur (HR1), le deuxième décalage en hauteur (38b) est orienté dans la deuxième direction de la hauteur (HR2) et le troisième décalage en hauteur (38c) est orienté dans la première direction de la hauteur (HR1),
• une troisième forme de tête d'enroulement (3), dans laquelle le premier décalage en hauteur (38a) est orienté dans la première direction de la hauteur (HR1), le deuxième décalage en hauteur (38b) est orienté dans la première direction de la hauteur (HR1) et le troisième décalage en hauteur (38c) est orienté dans la deuxième direction de la hauteur (HR2),
• une quatrième forme de tête d'enroulement (4), dans laquelle le premier décalage en hauteur (38a) est orienté dans la première direction de la hauteur (HR1), le deuxième décalage en hauteur (38b) est orienté dans la deuxième direction de la hauteur (HR2) et le troisième décalage en hauteur (38c) est orienté dans la deuxième direction de la hauteur (HR2),
• une cinquième forme de tête d'enroulement (5), dans laquelle le premier décalage en hauteur (38a) est orienté dans la deuxième direction de la hauteur (HR2), le deuxième décalage en hauteur (38b) est orienté dans la première direction de la hauteur (HR1) et le troisième décalage en hauteur (38c) est orienté dans la première direction de la hauteur (HR1), et
• une sixième forme de tête d'enroulement (6), dans laquelle le premier décalage en hauteur (38a) est orienté dans la deuxième direction de la hauteur (HR2), le deuxième décalage en hauteur (38b) est orienté dans la deuxième direction de la hauteur (HR2) et le troisième décalage en hauteur (38c) est orienté dans la première direction de la hauteur (HR1);
et **en ce que** des têtes d'enroulement (30, 30a, 30b) ayant la première (1) ou la deuxième forme de tête d'enroulement (2) sont prévues dans les zones standard (56), et **en ce qu'**au moins certains des fils d'enroulement ondulé (24a-24f) dans la zone de transition (52) reçoivent des têtes d'enroulement ayant une ou plusieurs des troisième à sixième formes de tête d'enroulement (3-6).

10. Procédé de fabrication d'une natte de bobine selon la revendication 9,
**caractérisé en ce que**
la première et la deuxième natte individuelle (44a, 44b) sont empilés l'une sur l'autre et
10.1 que
• dans la première nappe individuelle (4a),
dans la zone de début (46) et dans les zones standard (56), les têtes d'enroulement (30) reçoivent la deuxième forme de tête d'enroulement (2), dans la zone de transition (52), les têtes d'enroulement (30) d'au moins un fil d'enroulement ondulé (24a-24f) ou d'un groupe de fils d'enroulement ondulé (24a-24f) reçoivent la quatrième forme de tête d'enroulement (4) et les têtes d'enroulement (30) d'au moins un autre fil d'enroulement ondulé (24a- 24f) ou d'un autre groupe de fils d'enroulement ondulé (24a-24f) reçoivent la sixième forme d'enroulement ondulé (6) et, au niveau de la zone de fin (48), les têtes d'enroulement (30) dudit au moins un fil d'enroulement ondulé ou dudit au moins un groupe de fils d'enroulement ondulé (24a-24f) reçoivent la quatrième forme de tête d'enroulement (4); et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la quatrième forme de tête d'enroulement (4), dans les zones standard (56) ainsi que dans la zone de fin (48), les têtes d'enroulement (30) reçoivent la première forme de tête d'enroulement (1) et dans la zone de transition (52), les têtes d'enroulement (30) de l'au moins un fil d'enroulement ondulé (24a-24f) ou du groupe de fils d'enroulement ondulé (24a-24f) reçoivent la quatrième forme de tête d'enroulement (4) et les têtes d'enroulement (30) d'au moins un autre fil d'enroulement ondulé (24a-24f) ou d'un autre groupe de fils d'enroulement ondulé (24a-24f) reçoivent la sixième forme d'enroulement ondulé (6); ou
10.2 que
• dans la première natte individuelle (44a),
dans la zone de début (46) et dans les zones standard (56), les têtes d'enroulement (30) reçoivent la première forme de tête d'enroulement (1), dans la zone de transition (52), les têtes d'enroulement (30) d'au moins un fil d'enroulement ondulé (24a-24f) ou d'un groupe de fils d'enroulement ondulé (24a-24f) reçoivent la cinquième forme de tête d'enroulement (5) et les têtes d'enroulement (30) d'au moins un autre fil d'enroulement ondulé (24a- 24f) ou d'un autre groupe de fils d'enroulement ondulé (24a-24f) reçoivent la troisième forme d'enroulement ondulé (3) et, dans la zone de fin (48), les têtes d'enroulement (30) dudit au moins un fil d'enroulement ondulé ou dudit au moins un groupe de fils d'enroulement ondulé (24a-24f) reçoivent la cinquième forme de tête d'enroulement (5); et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la cinquième forme de tête d'enroulement (5), dans les zones standard (56) ainsi que dans la zone de fin (48), les têtes d'enroulement (30) reçoivent la deuxième forme de tête d'enroulement (2) et dans la zone de transition (52), les têtes d'enroulement (30) d'au moins un fil d'enroulement ondulé (24a-24f) ou d'un groupe de fils d'enroulement ondulé (24a-30f) reçoivent la cinquième forme de tête d'enroulement (5) et les têtes d'enroulement (30) d'au moins un autre fil d'enroulement ondulé (24a-24f) ou d'un autre groupe de fils d'enroulement ondulé (24a- 24f) reçoivent la troisième forme d'enroulement ondulé (3); ou
10.3 que
• dans la première natte individuelle (44a),
dans la zone de début (46) et dans les zones standard (24a-24f), les têtes d'enroulement (30) reçoivent la première forme de tête d'enroulement (1), dans la zone de transition (52), les têtes d'enroulement (30) d'au moins un fil d'enroulement ondulé (24a-24f) ou d'un groupe de fils d'enroulement ondulé (24a-24f) reçoivent la sixième forme de tête d'enroulement (6) et les têtes d'enroulement (30) d'au moins un autre fil d'enroulement ondulé (24a- 24f) ou d'un autre groupe de fils d'enroulement ondulé (24a-24f) reçoivent la quatrième forme d'enroulement ondulé (4) et, au niveau de la zone de fin (48), les têtes d'enroulement (30) dudit au moins un fil d'enroulement ondulé ou dudit au moins un groupe de fils d'enroulement ondulé (24a-24f) reçoivent la sixième forme de tête d'enroulement (6); et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la sixième forme de tête d'enroulement (6), dans les zones standard (56) ainsi que dans la zone de fin (48), les têtes d'enroulement (30) reçoivent la deuxième forme de tête d'enroulement (2) et dans la zone de transition (52), les têtes d'enroulement (30) dudit au moins un fil d'enroulement ondulé (24a-24) ou dudit premier groupe de fils d'enroulement ondulé (24a-24f) reçoivent la sixième forme de tête d'enroulement (6) et les têtes d'enroulement (30) d'au moins un autre fil d'enroulement ondulé (24a-24f) ou d'un autre groupe de fils d'enroulement ondulé (24a-24f) reçoivent la quatrième forme d'enroulement ondulé (4); ou
10.4 que
• dans la première natte individuelle (44a), dans la zone de début (46) et dans les zones standard (56), les têtes d'enroulement (30) obtiennent la deuxième forme de tête d'enroulement (2), dans la zone de transition (52), les têtes d'enroulement (30) d'au moins un fil d'enroulement ondulé (24a-24f) ou d'un groupe de fils d'enroulement ondulé (24a-24f) reçoivent la troisième forme de tête d'enroulement (3) et les têtes d'enroulement (30) d'au moins un autre fil d'enroulement ondulé (24a- 24f) ou d'un autre groupe de fils d'enroulement ondulé (24a-24f) reçoivent la cinquième forme d'enroulement ondulé (5) et, au niveau de la zone de fin (48), les têtes d'enroulement (30) dudit au moins un (24a-24f) ou dudit au moins un groupe de fils d'enroulement ondulé (24a-24f) reçoivent la troisième forme de tête d'enroulement (3); et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la troisième forme de tête d'enroulement (3), dans les zones standard (56) ainsi que dans la zone de fin (48), les têtes d'enroulement (30) reçoivent la première forme de tête d'enroulement (1) et dans la zone de transition (52), les têtes d'enroulement (30) dudit au moins un fil d'enroulement ondulé (24a-24f) ou dudit groupe de fils d'enroulement ondulé (24a-30f) reçoivent la troisième forme de tête d'enroulement (3) et les têtes d'enroulement (30) d'au moins un autre fil d'enroulement ondulé (24a-24f) ou d'un autre groupe de fils d'enroulement ondulé (24a- 24f) reçoivent la cinquième forme d'enroulement ondulé (5).

11. Procédé de fabrication d'une natte de bobine selon la revendication 9,
**caractérisé en ce**
**qu'**aussi bien la première natte individuelle (44a) que la deuxième natte individuelle (44b) sont fabriquées par un procédé de fabrication d'une natte enroulée selon l'une des revendications 1 à 5 et en ce que la première et la deuxième nattes individuelles sont insérées l'une dans l'autre selon la revendication 6, alternative 6.2 et
11.1 que
• dans la première natte individuelle (44a),
dans la zone de début (46), les têtes d'enroulement (30) d'au moins un fil d'enroulement ondulé (24a-24f) ou de chaque fil d'enroulement ondulé d'un groupe de fils d'enroulement ondulés (24a-24f) reçoivent la sixième forme de tête d'enroulement (6), dans les zones standard (56), les têtes d'enroulement (30) reçoivent la deuxième forme de tête d'enroulement (1), dans la zone de transition (52), les têtes d'enroulement (30) d'au moins un fil d'enroulement ondulé (24a-24f) ou d'un groupe de fils d'enroulement ondulé (24a-24f) reçoivent une séquence d'au moins une troisième (3) et d'au moins deux sixièmes (6) formes de tête d'enroulement et les têtes d'enroulement (30) d'au moins un autre fil d'enroulement ondulé (24a-24f) ou d'un autre groupe de fils d'enroulement ondulé (24a- 24f) reçoivent une séquence d'au moins une première (1) et d'au moins d'au moins une quatrième forme d'enroulement ondulé (4) et, au niveau de la zone de fin (48), les têtes d'enroulement (30) dudit au moins un fil d'enroulement ondulé ou dudit au moins un groupe de fils d'enroulement ondulé (24a-24f) reçoivent une séquence d'au moins une troisième forme d'enroulement (3) et d'au moins une sixième forme d'enroulement (6) ; et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la sixième forme de tête d'enroulement (6) et les têtes d'enroulement (30) d'un autre fil d'enroulement ondulé (24a-24f) ou d'un autre groupe de fils d'enroulement ondulé (24a-24f) reçoivent la troisième forme de tête d'enroulement (3), dans les zones standard (56), les têtes d'enroulement (30) reçoivent la première forme de tête d'enroulement (1) et dans la zone de transition (52), les têtes d'enroulement (30) de l'au moins un fil d'enroulement ondulé (24a-24f) ou d'un groupe de fils d'enroulement ondulé (24a-30f) reçoivent une séquence d'au moins une deuxième (2) et d'au moins une sixième (6) forme de tête d'enroulement, et les têtes d'enroulement (30 d'au moins un autre fil d'enroulement ondulé (24a-24f) ou d'un autre groupe de fils d'enroulement ondulé (24a-24f) reçoivent une séquence d'au moins une sixième (6), d'au moins une quatrième (4) et d'au moins une troisième (3) forme de tête d'enroulement, et dans la zone de fin (48) les têtes d'enroulement (30) dudit un fil d'enroulement ondulé (24a-24f) ou dudit un groupe de fils d'enroulement ondulé reçoivent la deuxième forme de tête d'enroulement (2) et les têtes d'enroulement (30) de l'autre fil d'enroulement ondulé (24a-24f) ou d'autre groupe de fils d'enroulement ondulé (24a-24f) reçoivent la sixième forme de tête d'enroulement (6); ou
11.2 que
• dans la première natte individuelle (44a),
dans la zone de début (46), les têtes d'enroulement (30) d'au moins un fil d'enroulement ondulé (24a-24f) ou de chaque fil d'enroulement ondulé d'un groupe de fils d'enroulement ondulés (24a-24f) reçoivent la troisième forme de tête d'enroulement (3), dans les zones standard (56), les têtes d'enroulement (30) reçoivent la première forme de tête d'enroulement (1), dans la zone de transition (52), les têtes d'enroulement (30) dudit au moins un fil d'enroulement ondulé (24a-24f) ou dudit un groupe de fils d'enroulement ondulés (24a-24f) reçoivent une séquence d'au moins une sixième (6) et d'au moins deux troisièmes (3) formes de tête d'enroulement, et les têtes d'enroulement (30) d'au moins un autre fil d'enroulement ondulé (24a-24f) ou d'un autre groupe de fils d'enroulement ondulés (24a- 24f) reçoivent une séquence d'au moins une deuxième (2) et d'au moins une cinquième (5) forme d'enroulement ondulé et, au niveau de la zone de fin (48), les têtes d'enroulement (30) dudit au moins un fil d'enroulement ondulé ou dudit au moins un groupe de fils d'enroulement ondulé (24a-24f) reçoivent une séquence d'au moins une sixième (6) et d'au moins une troisième (3) forme de tête d'enroulement; et
• dans la deuxième natte individuelle (44b),
dans la zone de début (46), les têtes d'enroulement (30) d'au moins un fil d'enroulement ondulé (24a-24f) ou d'au moins un groupe de fils d'enroulement ondulé (24a-24f) reçoivent la troisième forme de tête d'enroulement (3) et les têtes d'enroulement (30) d'un autre fil d'enroulement ondulé (24a-24f) ou d'un autre groupe de fils d'enroulement ondulé (24a-24f) reçoivent la sixième forme de tête d'enroulement (6), dans les zones standard (56), les têtes d'enroulement (30) reçoivent la deuxième forme de tête d'enroulement (2) et dans la zone de transition (52), les têtes d'enroulement (30) dudit au moins un fil d'enroulement ondulé (24a-24f) ou dudit au moins un groupe de fils d'enroulement ondulé (24a-30f) reçoivent une séquence d'au moins une première (1) et au moins une troisième (3) forme de tête d'enroulement et les têtes d'enroulement (30) d'au moins un autre fil d'enroulement ondulé (24a-24f) ou d'un autre groupe de fils d'enroulement ondulé (24a-24f) reçoivent une séquence d'au moins une troisième (3) forme de tête d'enroulement, au moins une cinquième (5) et au moins une sixième (6) forme de tête d'enroulement et, dans la zone de fin (48), les têtes d'enroulement (30) de l'un des fils d'enroulement ondulé (24a-24f) ou de l'un des groupes de fils d'enroulement ondulé (24a-30f) reçoivent la première forme de tête d'enroulement (1) et les têtes d'enroulement (30) de l'autre fil d'enroulement ondulé (24a-24f) ou de l'autre groupe de fils d'enroulement ondulé (24a-24f) reçoivent la troisième forme de tête d'enroulement (3).

12. Fabriquer un composant (12) d'une machine électrique comprenant:
fournir un corps de composant, mettre en oeuvre un procédé selon l'une quelconque des revendications précédentes et enrouler natte (40, 42) ainsi obtenue pour obtenir l'un des enroulements de bobine du composant (12) de la machine électrique, et insérer la natte enroulée (40, 42) dans le corps de composant.

13. Dispositif pour la mise en oeuvre du procédé selon l'une quelconque des revendications précédentes, comprenant:
un dispositif d'approvisionnement (66) pour fournir des fils d'enroulement ondulé (24a-24f) ou des nattes individuelles (44a, 44b), le dispositif d'approvisionnement comprenant un dispositif de fabrication de fils d'enroulement ondulé
(68) pour plier les sections ondulées (26) à partir d'un fil et/ou un dispositif de formage de têtes d'enroulement (70) pour former les têtes d'enroulement (30),
un dispositif d'assemblage pour assembler respectivement les fils d'enroulement ondulé (24a-24f) et les nattes individuelles (44a, 44b) en les déplaçant l'une par rapport à l'autre dans une direction transversale s'étendant transversalement à leur direction longitudinale, et une dispositif de commande adapté pour commander le dispositif pour mettre en oeuvre les étapes du procédé de l'une quelconque des revendications 1 à 12.

14. Dispositif selon la revendication 13,
**caractérisé en ce que**
**en ce que** le dispositif de formage de tête ondulée (70) comprend plusieurs mâchoires de pliage (78a, 78b) avec des rayons de pliage pour former les décalages en hauteur (38a, 38b, 38c).

15. Produit de programme d'ordinateur ou programme d'ordinateur comprenant des instructions de commande lisibles par une machine qui, lorsqu'elles sont chargées dans un ordinateur du dispositif de commande du dispositif selon la revendication 13, amènent le dispositif à exécuter les étapes du procédé de l'une quelconque des revendications 1 à 12.
